(19) Europäisches Patentamt
European Patent Office
Office européen des brevets

(11) **EP 4 507 303 A1**

(12) **EUROPEAN PATENT APPLICATION**
published in accordance with Art. 153(4) EPC

(43) Date of publication:
**12.02.2025 Bulletin 2025/07**

(21) Application number: 23781454.6

(22) Date of filing: **03.04.2023**

(51) International Patent Classification (IPC):
*H04N 19/30* (2014.01)  *H04N 19/597* (2014.01)
*H04N 19/96* (2014.01)  *H04N 19/147* (2014.01)
*H04N 19/184* (2014.01)

(52) Cooperative Patent Classification (CPC):
**H04N 19/147; H04N 19/184; H04N 19/30;**
**H04N 19/597; H04N 19/96**

(86) International application number:
**PCT/KR2023/004480**

(87) International publication number:
**WO 2023/191605 (05.10.2023 Gazette 2023/40)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **01.04.2022 KR 20220040931**

(71) Applicant: **LG Electronics Inc.**
**Yeongdeungpo-gu**
**Seoul 07336 (KR)**

(72) Inventor: **OH, Hyunmook**
**Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(54) **POINT CLOUD DATA TRANSMISSION DEVICE, POINT CLOUD DATA TRANSMISSION METHOD, POINT CLOUD DATA RECEPTION DEVICE, AND POINT CLOUD DATA RECEPTION METHOD**

(57)     A point cloud data transmission method according to embodiments may comprise the steps of: encoding point cloud data as geometry data; encoding attribute data of the point cloud data on the basis of the geometry data; and transmitting the encoded geometry data, the encoded attribute data, and signaling data.

FIG. 28

EP 4 507 303 A1

**Description**

[Technical Field]

Embodiments relate to a method and device for processing point cloud content.

[Background Art1

Point cloud content is content represented by a point cloud, which is a set of points belonging to a coordinate system representing a three-dimensional space(or volume). The point cloud content may express media configured in three dimensions, and is used to provide various services such as virtual reality (VR), augmented reality (AR), mixed reality (MR), XR (Extended Reality), and self-driving services. However, tens of thousands to hundreds of thousands of point data are required to represent point cloud content. Therefore, there is a need for a method for efficiently processing a large amount of point data.

In other words, a high throughput is required to transmit and receive data of the point cloud. Accordingly, in the process of transmitting and receiving the point cloud data, in which encoding for compression and decoding for decompression are performed, the computational operation is complicated and time-consuming due to the large volume of the point cloud data.

[Disclosure]

[Technical Problem]

An object of the present disclosure devised to solve the above-described problems is to provide devices and methods for efficiently transmitting/receiving a point cloud.
Another object of the present disclosure is to provide devices and methods for addressing latency and encoding/decoding complexity.
Embodiments are not limited to the above-described objects, and the scope of the embodiments may cover other objects that can be inferred by those skilled in the art based on the entire contents of the present disclosure.

[Technical Solution]

To achieve these objects and other advantages and in accordance with the purpose of the disclosure, as embodied and broadly described herein, a method of transmitting point cloud data according to embodiments may include encoding geometry data of the point cloud data, encoding attribute data of the point cloud data based on the geometry data, and transmitting the encoded geometry data, the encoded attribute data, and signaling information.
According to embodiments, the encoding of the attribute data may include generating one or more levels of detail (LoDs) from a layer-based tree structure including the geometry data, searching for and selecting, based on at least one of the one or more LoDs, one or more nearest neighbors of a neighbor search target node, and compressing attribute information based on the selected one or more nearest neighbors of the neighbor search target node.
According to embodiments, in the searching for and selecting the nearest neighbors, the at least one of the one or more LODs may be a scalable transmitted LoD.
According to embodiments, the encoding of the attribute data may include up-sampling a geometry grid down-sampled based on the scalable transmitted LoD to a geometry grid of a full layer based on the signaling information, and searching for and selecting the nearest neighbors in the up-sampled geometry grid.
According to embodiments, the searching for and selecting the nearest neighbors in the up-sampled geometry grid may include searching for the nearest neighbors of the neighbor search target node based on a Morton code order or Euclidean distance.
According to embodiments, the signaling information may include information about a bounding box acquired based on a distribution of points in a full layer.
According to embodiments, the information about the bounding box may include position information and size information related to the bounding box.
According to embodiments, a device for transmitting point cloud data may include a geometry encoder configured to encode geometry data of the point cloud data, an attribute encoder configured to encode attribute data of the point cloud data based on the geometry data, and a transmitter configured to transmit the encoded geometry data, the encoded attribute data, and signaling information.
According to embodiments, the attribute encoder may include a level of detail (LOD) generator configured to generate at least one LoD from a layer-based tree structure including the geometry data, a neighbor searcher configured to search for and select, based on at least one of the one or more LoDs, one or more nearest neighbors of a neighbor search target node, and a compressor configured to compress attribute information based on the selected one or more nearest neighbors of the neighbor search target node.

According to embodiments, in searching for and selecting the one or more nearest neighbors, the at least one of the one or more LODs is a scalable transmitted LoD.

According to embodiments, the attribute encoder may further include a geometry grid adaptation part configured to up-sample a geometry grid down-sampled based on the scalable transmitted LoD to a geometry grid of a full layer based on the signaling information, wherein the neighbor searcher may search for and select the nearest neighbors in the up-sampled geometry grid.

According to embodiments, the neighbor searcher may search for the nearest neighbors of the neighbor search target node based on a Morton code order or Euclidean distance.

According to embodiments, the signaling information may include information about a bounding box acquired based on a distribution of points in a full layer.

According to embodiments, the information about the bounding box may include position information and size information related to the bounding box.

[Advantageous Effects]

Devices and methods according to embodiments may provide a quality point cloud service.

Devices and methods according to embodiments may achieve various video codec methods.

Devices and methods according to embodiments may provide universal point cloud content such as an autonomous driving service.

Devices and methods according to embodiments may perform space-adaptive partition of point cloud data for independent encoding and decoding of the point cloud data, thereby improving parallel processing and providing scalability.

Devices and methods according to embodiments may perform encoding and decoding by partitioning the point cloud data in units of tiles and/or slices, and signal necessary data therefor, thereby improving encoding and decoding performance of the point cloud.

A device and method according to embodiments may divide and transmit compressed data of point cloud data according to a predetermined criterion. In addition, when layered coding is used, compressed data may be divided and transmitted according to layers. Accordingly, the storage and transmission efficiency of the transmission device may increase.

Devices and methods according to embodiments may increase the efficiency of scalable attribute coding by removing the dependency of attribute coding on a coded geometry layer when scalable attribute coding is used.

Devices and methods according to embodiments apply the same LoD generation and NN search performed by an attribute encoder in a transmission device to an attribute decoder in a reception device when scalable transmission and/or scalable decoding is performed. In particular, by performing the same position correction and NN search through the attribute encoder of the transmission device and the attribute decoder of the reception device, the neighbor candidates considered by the attribute encoder of the transmission device and the neighbor candidates considered by the attribute decoder of the reception device are not different, and the order of the nodes does not change. Therefore, decoder prediction errors may not occur in operations such as prediction transform in which attribute prediction is performed from neighbor nodes.

[Description of Drawings]

The accompanying drawings, which are included to provide a further understanding of the disclosure and are incorporated in and constitute a part of this application, illustrate embodiment(s) of the disclosure and together with the description serve to explain the principle of the disclosure. In the drawings:

FIG. 1 shows an exemplary point cloud content providing system according to embodiments;
FIG. 2 is a block diagram illustrating a point cloud content providing operation according to embodiments;
FIG. 3 illustrates an exemplary point cloud encoder according to embodiments;
FIG. 4 shows an example of an octree and occupancy code according to embodiments;
FIG. 5 illustrates an example of point configuration in each LOD according to embodiments;
FIG. 6 illustrates an example of point configuration in each LOD according to embodiments;
FIG. 7 illustrates a point cloud decoder according to embodiments;
FIG. 8 illustrates a transmission device according to embodiments;
FIG. 9 illustrates a reception device according to embodiments;

FIG. 10 illustrates an exemplary structure operable in connection with point cloud data transmission/reception methods/devices according to embodiments;

FIGS. 11 and 12 are diagrams illustrating a process for encoding, transmitting, and decoding point cloud data according to embodiments;

FIGS. 13-(a) and 13-(b) are diagrams illustrating examples of devices and methods for transmitting and receiving point cloud data according to embodiments;

FIG. 14 is a diagram illustrating an example of layer-based point cloud data configuration according to embodiments;

FIG. 15-(a) illustrates a bitstream structure of geometry data according to embodiments, and FIG. 15-(b) illustrates a bitstream structure of attribute data according to embodiments;

FIG. 16 is a diagram illustrating an example configuration of a bitstream for dividing the bitstream into layers (or LoDs) for delivery according to embodiments;

FIG. 17 illustrates an exemplary bitstream sorting method when a geometry bitstream and an attribute bitstream are multiplexed into one bitstream according to embodiments;

FIG. 18 illustrates another exemplary bitstream sorting method when a geometry bitstream and an attribute bitstream are multiplexed into one bitstream according to embodiments;

FIGS. 19-(a) to 19-(c) are diagrams illustrating an example of symmetric geometry-attribute selection according to embodiments;

FIGS. 20-(a) to 20-(c) are diagrams illustrating an example of asymmetric geometry-attribute selection according to embodiments;

FIGS. 21-(a) to 21-(c) illustrate exemplary methods of configuring slices containing point cloud data according to embodiments;

FIGS. 22-(a) and 22-(b) illustrate geometry coding layer structures according to embodiments;

FIG. 23 is a diagram illustrating a layer group and subgroup structure according to embodiments;

FIGS. 24-(a) to 24-(c) illustrate representations of layer group-based point cloud data according to embodiments;

FIG. 25 illustrates a point cloud data transmission/reception device/method according to embodiments;

FIG. 26 is a diagram illustrating an example of NN search performed based on full layer geometry information according to embodiments;

FIG. 27 is a diagram illustrating an example of NN search performed in a down-sampled geometry grid according to embodiments;

FIG. 28 is a diagram illustrating an example of NN search performed in a position-corrected geometry grid according to embodiments;

FIGS. 29-(a) to 29-(c) are diagrams illustrating an example of NN search performed in a geometry grid according to embodiments;

FIG. 30 is a diagram illustrating another exemplary point cloud transmission device according to embodiments;

FIG. 31 is a detailed block diagram of an LoD generator of an attribute encoder according to embodiments;

FIG. 32 is a diagram illustrating another exemplary point cloud reception device according to embodiments;

FIG. 33 illustrates a bitstream structure of point cloud data for transmission/reception according to embodiments;

FIGS. 34-(a) and 34-(b) illustrate one embodiment of a syntax structure of a sequence parameter set (seq_parameter_set()) (SPS) according to embodiments;

FIGS. 35-(a) and 35-(b) illustrate one embodiment of a syntax structure of an attribute parameter set (attr_parameter set()) (APS) according to embodiments;

FIG. 36 is a diagram illustrating an example of compressing geometry and attributes of point cloud data for a service;

FIG. 37 is a diagram illustrating another example of compressing geometry and attributes of point cloud data for a service according to embodiments;

FIG. 38 is a diagram illustrating another example of compressing geometry and attributes of point cloud data for a service according to embodiments;

FIG. 39 is a flowchart of a method of transmitting point cloud data according to embodiments; and

FIG. 40 is a flowchart of a method of receiving point cloud data according to embodiments.

[Best Mode]

Reference will now be made in detail to the preferred embodiments of the present disclosure, examples of which are illustrated in the accompanying drawings. The detailed description, which will be given below with reference to the accompanying drawings, is intended to explain exemplary embodiments of the present disclosure, rather than to show the only embodiments that may be implemented according to the present disclosure. The following detailed description includes specific details in order to provide a thorough understanding of the present disclosure. However, it will be apparent to those skilled in the art that the present disclosure may be practiced without such specific details.

Although most terms used in the present disclosure have been selected from general ones widely used in the art, some terms have been arbitrarily selected by the applicant and their meanings are explained in detail in the following description as needed. Thus, the present disclosure should be understood based upon the intended meanings of the terms rather than their simple names or meanings.

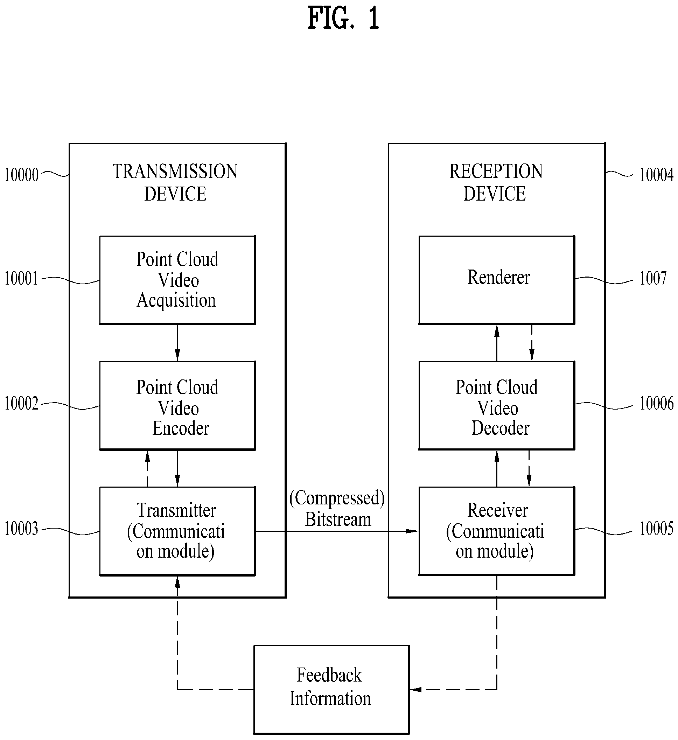

FIG. 1 shows an exemplary point cloud content providing system according to embodiments.

The point cloud content providing system illustrated in FIG. 1 may include a transmission device 10000 and a reception device 10004. The transmission device 10000 and the reception device 10004 are capable of wired or wireless communication to transmit and receive point cloud data.

The point cloud data transmission device 10000 according to the embodiments may secure and process point cloud video (or point cloud content) and transmit the same. According to embodiments, the transmission device 10000 may include a fixed station, a base transceiver system (BTS), a network, an artificial intelligence (AI) device and/or system, a robot, an AR/VR/XR device and/or server. According to embodiments, the transmission device 10000 may include a device, a robot, a vehicle, an AR/VR/XR device, a portable device, a home appliance, an Internet of Thing (IoT) device, and an AI device/server which are configured to perform communication with a base station and/or other wireless devices using a radio access technology (e.g., 5G New RAT (NR), Long Term Evolution (LTE)).

The transmission device 10000 according to the embodiments includes a point cloud video acquisition unit 10001, a point cloud video encoder 10002, and/or a transmitter (or communication module) 10003.

The point cloud video acquisition unit 10001 according to the embodiments acquires a point cloud video through a processing process such as capture, synthesis, or generation. The point cloud video is point cloud content represented by a point cloud, which is a set of points positioned in a 3D space, and may be referred to as point cloud video data, point cloud data, or the like. The point cloud video according to the embodiments may include one or more frames. One frame represents a still image/picture. Therefore, the point cloud video may include a point cloud image/frame/picture, and may be referred to as a point cloud image, frame, or picture.

The point cloud video encoder 10002 according to the embodiments encodes the acquired point cloud video data. The point cloud video encoder 10002 may encode the point cloud video data based on point cloud compression coding. The point cloud compression coding according to the embodiments may include geometry-based point cloud compression (G-PCC) coding and/or video-based point cloud compression (V-PCC) coding or next-generation coding. The point cloud compression coding according to the embodiments is not limited to the above-described embodiment. The point cloud video encoder 10002 may output a bitstream containing the encoded point cloud video data. The bitstream may contain not only the encoded point cloud video data, but also signaling information related to encoding of the point cloud video data.

The transmitter 10003 according to the embodiments transmits the bitstream containing the encoded point cloud video data. The bitstream according to the embodiments is encapsulated in a file or segment (e.g., a streaming segment), and is transmitted over various networks such as a broadcasting network and/or a broadband network. Although not shown in the figure, the transmission device 10000 may include an encapsulator (or an encapsulation module) configured to perform an encapsulation operation. According to embodiments, the encapsulator may be included in the transmitter 10003. According to embodiments, the file or segment may be transmitted to the reception device 10004 over a network, or stored in a digital storage medium (e.g., USB, SD, CD, DVD, Blu-ray, HDD, SSD, etc.). The transmitter 10003 according to the embodiments is capable of wired/wireless communication with the reception device 10004 (or the receiver 10005) over a network of 4G, 5G, 6G, etc. In addition, the transmitter may perform a necessary data processing operation according to the network system (e.g., a 4G, 5G or 6G communication network system). The transmission device 10000 may transmit the encapsulated data in an on-demand manner.

The reception device 10004 according to the embodiments includes a receiver 10005, a point cloud video decoder 10006, and/or a renderer 10007. According to embodiments, the reception device 10004 may include a device, a robot, a vehicle, an AR/VR/XR device, a portable device, a home appliance, an Internet of Things (IoT) device, and an AI device/server which are configured to perform communication with a base station and/or other wireless devices using a radio access technology (e.g., 5G New RAT (NR), Long Term Evolution (LTE)).

The receiver 10005 according to the embodiments receives the bitstream containing the point cloud video data or the file/segment in which the bitstream is encapsulated from the network or storage medium. The receiver 10005 may perform necessary data processing according to the network system (e.g., a communication network system of 4G, 5G, 6G, etc.). The receiver 10005 according to the embodiments may decapsulate the received file/segment and output a bitstream. According to embodiments, the receiver 10005 may include a decapsulator (or a decapsulation module) configured to perform a decapsulation operation. The decapsulator may be implemented as an element (or component) separate from the receiver 10005.

The point cloud video decoder 10006 decodes the bitstream containing the point cloud video data. The point cloud video decoder 10006 may decode the point cloud video data according to the method by which the point cloud video data is encoded (e.g., in a reverse process of the operation of the point cloud video encoder 10002). Accordingly, the point cloud video decoder 10006 may decode the point cloud video data by performing point cloud decompression coding, which is the reverse process to the point cloud compression. The point cloud decompression coding includes G-PCC coding.

The renderer 10007 renders the decoded point cloud video data. In one embodiment, the renderer 10007 may render the decoded point cloud video data according to a viewport or the like. The renderer 10007 may render not only the point cloud video data but also audio data to output point cloud content. According to embodiments, the renderer 10007 may include a display configured to display the point cloud content. According to embodiments, the display may be implemented as a separate device or component rather than being included in the renderer 10007.

The arrows indicated by dotted lines in the drawing represent a transmission path of feedback information acquired by the reception device 10004. The feedback information is information for reflecting interactivity with a user who consumes the point cloud content, and includes information about the user (e.g., head orientation information, viewport information, and the like). In particular, when the point cloud content is content for a service (e.g., self-driving service, etc.) that requires interaction with the user, the feedback information may be provided to the content transmitting side (e.g., the transmission device 10000) and/or the service provider. According to embodiments, the feedback information may be used in the reception device 10004 as well as the transmission device 10000, or may not be provided.

The head orientation information according to the embodiments may represent information about a position, orientation, angle, and motion of a user's head. The reception device 10004 according to the embodiments may calculate viewport information based on the head orientation information. The viewport information is information about a region of a point cloud video that the user is viewing (that is, a region that the user is currently viewing). That is, the viewport information is information about a region that the user is currently viewing in the point cloud video. In other words, the viewport or viewport region may represent a region that the user is viewing in the point cloud video. A viewpoint is a point that the user is viewing in the point cloud video, and may represent a center point of the viewport region. That is, the viewport is a region centered on a viewpoint, and the size and shape of the region may be determined by a field of view (FOV). Accordingly, the reception device 10004 may extract the viewport information based on a vertical or horizontal FOV supported by the device as well as the head orientation information. In addition, the reception device 10004 may perform gaze analysis or the like based on the head orientation information and/or the viewport information to determine the way the user consumes a point cloud video, a region at which the user gazes in the point cloud video, and the gaze time. According to embodiments, the reception device 10004 may transmit feedback information including the result of the gaze analysis to the transmission device 10000. According to embodiments, a device such as a VR/XR/AR/MR display may extract a viewport region based on the position/orientation of a user's head and a vertical or horizontal FOV supported by the device. According to embodiments, the head orientation information and the viewport information may be referred to as feedback information, signaling information, or metadata.

The feedback information according to the embodiments may be acquired in the rendering and/or display process. The feedback information may be secured by one or more sensors included in the reception device 10004. According to embodiments, the feedback information may be secured by the renderer 10007 or a separate external element (or device, component, or the like). The dotted lines in FIG. 1 represent a process of transmitting the feedback information secured by the renderer 10007. The feedback information may not only be transmitted to the transmitting side, but also be consumed at the receiving side. That is, the point cloud content providing system may process (encode/-decode/render) point cloud data based on the feedback information. For example, the point cloud video decoder 10006 and the renderer 10007 may preferentially decode and render only the point cloud video for a region currently viewed by the user, based on the feedback information, namely, the head orientation information and/or the viewport information.

Furthermore, the reception device 10004 may transmit the feedback information to the transmission device 10000. The transmission device 10000 (or the point cloud video encoder 10002) may perform an encoding operation based on the feedback information. Accordingly, the point cloud content providing system may efficiently process necessary data (e.g., point cloud data corresponding to the user's head position) based on the feedback information rather than processing (encoding/decoding) the entire point cloud data, and provide point cloud content to the user.

According to embodiments, the transmission device 10000 may be called an encoder, a transmission device, a transmitter, transmission system or the like, and the reception device 10004 may be called a decoder, a receiving device, a receiver, receiving system or the like.

The point cloud data processed in the point cloud content providing system of FIG. 1 according to embodiments (through a series of processes of acquisition/encoding/transmission/decoding/rendering) may be referred to as point cloud content data or point cloud video data. According to embodiments, the point cloud content data may be used as a concept covering metadata or signaling information related to the point cloud data.

The elements of the point cloud content providing system illustrated in FIG. 1 may be implemented by hardware, software, a processor, and/or a combination thereof.

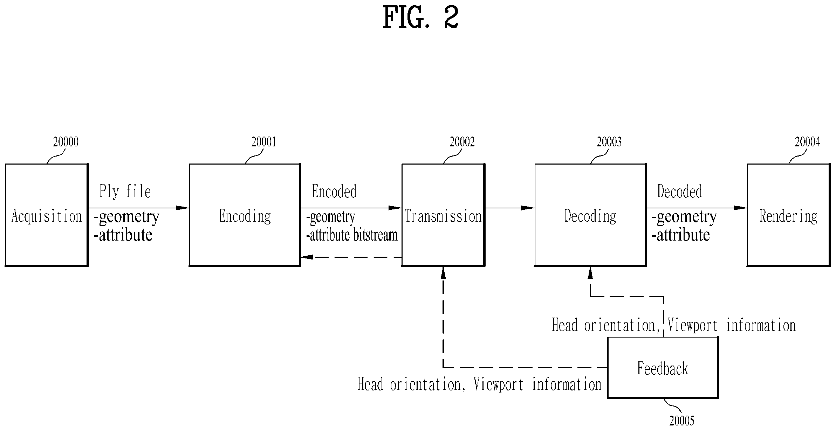

FIG. 2 is a block diagram illustrating a point cloud content providing operation according to embodiments.

The block diagram of FIG. 2 shows the operation of the point cloud content providing system described in FIG. 1. As described above, the point cloud content providing system may process point cloud data based on point cloud compression coding (e.g., G-PCC).

The point cloud content providing system according to the embodiments (e.g., the point cloud transmission device 10000 or the point cloud video acquisition unit 10001) may acquire a point cloud video (20000). The point cloud video is represented by a point cloud belonging to a coordinate system for expressing a 3D space. The point cloud video according to the embodiments may include a Ply (Polygon File format or the Stanford Triangle format) file. When the point cloud video has one or more frames, the acquired point cloud video may include one or more Ply files. The Ply files contain point cloud data, such as point geometry and/or attributes. The geometry includes positions of points. The position of each point may be represented by parameters (e.g., values of the X, Y, and Z axes) representing a three-dimensional coordinate system (e.g., a coordinate system composed of X, Y and Z axes). The attributes include attributes of points (e.g., information about texture, color (in YCbCr or RGB), reflectance r, transparency, etc. of each point). A point has one or more attributes. For example, a point may have an attribute that is a color, or two attributes that are color and reflectance. According to embodiments, the geometry may be called positions, geometry information, geometry data, position information, position data, or the like, and the attribute may be called attributes, attribute information, attribute data, or the like. The point cloud content providing system (e.g., the point cloud transmission device 10000 or the point cloud video acquisition unit 10001) may secure point cloud data from information (e.g., depth information, color information, etc.) related to the acquisition process of the point cloud video.

The point cloud content providing system (e.g., the transmission device 10000 or the point cloud video encoder 10002) according to the embodiments may encode the point cloud data (20001). The point cloud content providing system may encode the point cloud data based on point cloud compression coding. As described above, the point cloud data may include the geometry information and attribute information about a point. Accordingly, the point cloud content providing system may perform geometry encoding of encoding the geometry and output a geometry bitstream. The point cloud content providing system may perform attribute encoding of encoding attributes and output an attribute bitstream. According to embodiments, the point cloud content providing system may perform the attribute encoding based on the geometry encoding. The geometry bitstream and the attribute bitstream according to the embodiments may be multiplexed and output as one bitstream. The bitstream according to the embodiments may further contain signaling information related to the geometry encoding and attribute encoding.

The point cloud content providing system (e.g., the transmission device 10000 or the transmitter 10003) according to the embodiments may transmit the encoded point cloud data (20002). As illustrated in FIG. 1, the encoded point cloud data may be represented by a geometry bitstream and an attribute bitstream. In addition, the encoded point cloud data may be transmitted in the form of a bitstream together with signaling information related to encoding of the point cloud data (e.g., signaling information related to the geometry encoding and the attribute encoding). The point cloud content providing system may encapsulate a bitstream that carries the encoded point cloud data and transmit the same in the form of a file or segment.

The point cloud content providing system (e.g., the reception device 10004 or the receiver 10005) according to the embodiments may receive the bitstream containing the encoded point cloud data. In addition, the point cloud content providing system (e.g., the reception device 10004 or the receiver 10005) may demultiplex the bitstream.

The point cloud content providing system (e.g., the reception device 10004 or the point cloud video decoder 10005) may decode the encoded point cloud data (e.g., the geometry bitstream, the attribute bitstream) transmitted in the bitstream. The point cloud content providing system (e.g., the reception device 10004 or the point cloud video decoder 10005) may decode the point cloud video data based on the signaling information related to encoding of the point cloud video data contained in the bitstream. The point cloud content providing system (e.g., the reception device 10004 or the point cloud video decoder 10005) may decode the geometry bitstream to reconstruct the positions (geometry) of points. The point cloud content providing system may reconstruct the attributes of the points by decoding the attribute bitstream based on the reconstructed geometry. The point cloud content providing system (e.g., the reception device 10004 or the point cloud video decoder 10005) may reconstruct the point cloud video based on the positions according to the reconstructed geometry and the decoded attributes.

The point cloud content providing system according to the embodiments (e.g., the reception device 10004 or the renderer 10007) may render the decoded point cloud data (20004). The point cloud content providing system (e.g., the reception device 10004 or the renderer 10007) may render the geometry and attributes decoded through the decoding process, using various rendering methods. Points in the point cloud content may be rendered to a vertex having a certain thickness, a cube having a specific minimum size centered on the corresponding vertex position, or a circle centered on the corresponding vertex position. All or part of the rendered point cloud content is provided to the user through a display (e.g., a VR/AR display, a general display, etc.).

The point cloud content providing system (e.g., the reception device 10004) according to the embodiments may secure feedback information (20005). The point cloud content providing system may encode and/or decode point cloud data based on the feedback information. The feedback information and the operation of the point cloud content providing system according to the embodiments are the same as the feedback information and the operation described with reference to FIG. 1, and thus a detailed description thereof is omitted.

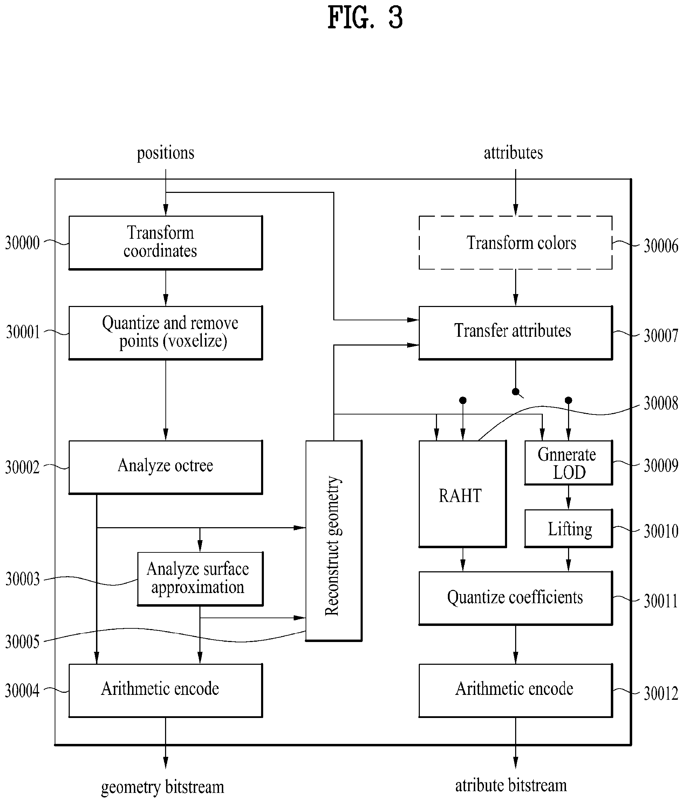

FIG. 3 illustrates an exemplary point cloud encoder according to embodiments.

FIG. 3 shows an example of the point cloud video encoder 10002 of FIG. 1. The point cloud encoder reconstructs and encodes point cloud data (e.g., positions and/or attributes of the points) to adjust the quality of the point cloud content (to, for example, lossless, lossy, or near-lossless) according to the network condition or applications. When the overall size of the point cloud content is large (e.g., point cloud content of 60 Gbps is given for 30 fps), the point cloud content providing system may fail to stream the content in real time. Accordingly, the point cloud content providing system may reconstruct the point cloud content based on the maximum target bitrate to provide the same in accordance with the network environment or the like.

As described with reference to FIGS. 1 and 2, the point cloud encoder may perform geometry encoding and attribute encoding. The geometry encoding is performed before the attribute encoding.

The point cloud video encoder according to the embodiments includes a coordinate transformer (Transform coordinates) 30000, a quantizer (Quantize and remove points (voxelize)) 30001, an octree analyzer (Analyze octree) 30002, a surface approximation analyzer (Analyze surface approximation) 30003, an arithmetic encoder (Arithmetic encode) 30004, a geometry reconstructor (Reconstruct geometry) 30005, a color transformer (Transform colors) 30006, an attribute transformer (Transfer attributes) 30007, a RAHT transformer 30008, an LOD generator (Generated LOD) 30009, a lifting transformer (Lifting) 30010, a coefficient quantizer (Quantize coefficients) 30011, and/or an arithmetic encoder (Arithmetic encode) 30012. In the point cloud encoder of FIG. 3, the coordinate transformer 30000, the quantizer 30001, the octree analyzer 30002, the surface approximation analyzer 30003, the arithmetic encoder 30004, and the geometry reconstructor 30005 may be grouped together and referred to as a geometry encoder. The color transformer 30006, the attribute transformer 30007, the RAHT transformer 30008, the LOD generator 30009, the lifting transformer 30010, the coefficient quantizer 30011, and/or the arithmetic encoder 30012 may be grouped together and referred to as an attribute encoder.

The coordinate transformer 30000, the quantizer 30001, the octree analyzer 30002, the surface approximation analyzer 30003, the arithmetic encoder 30004, and the geometry reconstructor 30005 may perform geometry encoding. The geometry encoding according to the embodiments may include octree geometry coding, predictive tree geometry coding, direct coding, trisoup geometry encoding, and entropy encoding. The direct coding and trisoup geometry encoding are applied selectively or in combination. The geometry encoding is not limited to the above-described example.

As shown in the figure, the coordinate transformer 30000 according to the embodiments receives positions and transforms the same into coordinates. For example, the positions may be transformed into position information in a three-dimensional space (e.g., a three-dimensional space represented by an XYZ coordinate system). The position information in the three-dimensional space according to the embodiments may be referred to as geometry information.

The quantizer 30001 according to the embodiments quantizes the geometry. For example, the quantizer 30001 may quantize the points based on a minimum position value of all points (e.g., a minimum value on each of the X, Y, and Z axes). The quantizer 30001 performs a quantization operation of multiplying the difference between the minimum position value and the position value of each point by a preset quantization scale value and then finding the nearest integer value by rounding the value obtained through the multiplication. Thus, one or more points may have the same quantized position (or position value). The quantizer 30001 according to the embodiments performs voxelization based on the quantized positions to reconstruct quantized points. As in the case of a pixel, which is the minimum unit containing 2D image/video information, points of point cloud content (or 3D point cloud video) according to the embodiments may be included in one or more voxels. The term voxel, which is a compound of volume and pixel, refers to a 3D cubic space generated when a 3D space is divided into units (unit=1.0) based on the axes representing the 3D space (e.g., X-axis, Y-axis, and Z-axis). The quantizer 30001 may match groups of points in the 3D space with voxels. According to embodiments, one voxel may include only one point. According to embodiments, one voxel may include one or more points. In order to express one voxel as one point, the position of the center of a voxel may be set based on the positions of one or more points included in the voxel. In this case, attributes of all positions included in one voxel may be combined and assigned to the voxel.

The octree analyzer 30002 according to the embodiments performs octree geometry coding (or octree coding) to present voxels in an octree structure. The octree structure represents points matched with voxels, based on the octal tree structure.

The surface approximation analyzer 30003 according to the embodiments may analyze and approximate the octree. The octree analysis and approximation according to the embodiments is a process of analyzing a region containing a plurality of points to efficiently provide octree and voxelization.

The arithmetic encoder 30004 according to the embodiments performs entropy encoding on the octree and/or the approximated octree. For example, the encoding scheme includes arithmetic encoding. As a result of the encoding, a geometry bitstream is generated.

The color transformer 30006, the attribute transformer 30007, the RAHT transformer 30008, the LOD generator 30009, the lifting transformer 30010, the coefficient quantizer 30011, and/or the arithmetic encoder 30012 perform attribute encoding. As described above, one point may have one or more attributes. The attribute encoding according to the embodiments is equally applied to the attributes that one point has. However, when an attribute (e.g., color) includes one or more elements, attribute encoding is independently applied to each element. The attribute encoding according to the embodiments includes color transform coding, attribute transform coding, region adaptive hierarchical transform (RAHT) coding, interpolation-based hierarchical nearest-neighbor prediction (prediction transform) coding, and interpolation-based hierarchical nearest-neighbor prediction with an update/lifting step (lifting transform) coding. Depending on the point cloud content, the RAHT coding, the prediction transform coding and the lifting transform coding described above may be selectively used, or a combination of one or more of the coding schemes may be used. The attribute encoding according to the embodiments is not limited to the above-described example.

The color transformer 30006 according to the embodiments performs color transform coding of transforming color values (or textures) included in the attributes. For example, the color transformer 30006 may transform the format of color information (for example, from RGB to YCbCr). The operation of the color transformer 30006 according to embodiments may be optionally applied according to the color values included in the attributes.

The geometry reconstructor 30005 according to the embodiments reconstructs (decompresses) the octree and/or the approximated octree. The geometry reconstructor 30005 reconstructs the octree/voxels based on the result of analyzing the distribution of points. The reconstructed octree/voxels may be referred to as reconstructed geometry (restored geometry).

The attribute transformer 30007 according to the embodiments performs attribute transformation to transform the attributes based on the reconstructed geometry and/or the positions on which geometry encoding is not performed. As described above, since the attributes are dependent on the geometry, the attribute transformer 30007 may transform the attributes based on the reconstructed geometry information. For example, based on the position value of a point included in a voxel, the attribute transformer 30007 may transform the attribute of the point at the position. As described above, when the position of the center of a voxel is set based on the positions of one or more points included in the voxel, the attribute transformer 30007 transforms the attributes of the one or more points. When the trisoup geometry encoding is performed, the attribute transformer 30007 may transform the attributes based on the trisoup geometry encoding.

The attribute transformer 30007 may perform the attribute transformation by calculating the average of attributes or attribute values of neighboring points (e.g., color or reflectance of each point) within a specific position/radius from the position (or position value) of the center of each voxel. The attribute transformer 30007 may apply a weight according to the distance from the center to each point in calculating the average. Accordingly, each voxel has a position and a calculated attribute (or attribute value).

The attribute transformer 30007 may search for neighboring points existing within a specific position/radius from the position of the center of each voxel based on the K-D tree or the Morton code. The K-D tree is a binary search tree and supports a data structure capable of managing points based on the positions such that nearest neighbor search (NNS) can be performed quickly. The Morton code is generated by presenting coordinates (e.g., (x, y, z)) representing 3D positions of all points as bit values and mixing the bits. For example, when the coordinates representing the position of a point are (5, 9, 1), the bit values for the coordinates are (0101, 1001, 0001). Mixing the bit values according to the bit index in order of z, y, and x yields 010001000111. This value is expressed as a decimal number of 1095. That is, the Morton code value of the point having coordinates (5, 9, 1) is 1095. The attribute transformer 30007 may order the points based on the Morton code values and perform NNS through a depth-first traversal process. After the attribute transformation operation, the K-D tree or the Morton code is used when the NNS is needed in another transformation process for attribute coding.

As shown in the figure, the transformed attributes are input to the RAHT transformer 40008 and/or the LOD generator 30009.

The RAHT transformer 30008 according to the embodiments performs RAHT coding for predicting attribute information based on the reconstructed geometry information. For example, the RAHT transformer 30008 may predict attribute information of a node at a higher level in the octree based on the attribute information associated with a node at a lower level in the octree.

The LOD generator 30009 according to the embodiments generates a level of detail (LOD) to perform prediction transform coding. The LOD according to the embodiments is a degree of detail of point cloud content. As the LOD value decrease, it indicates that the detail of the point cloud content is degraded. As the LOD value increases, it indicates that the detail of the point cloud content is enhanced. Points may be classified by the LOD.

The lifting transformer 30010 according to the embodiments performs lifting transform coding of transforming the attributes a point cloud based on weights. As described above, lifting transform coding may be optionally applied.

The coefficient quantizer 30011 according to the embodiments quantizes the attribute-coded attributes based on coefficients.

The arithmetic encoder 30012 according to the embodiments encodes the quantized attributes based on arithmetic coding.

Although not shown in the figure, the elements of the point cloud encoder of FIG. 3 may be implemented by hardware including one or more processors or integrated circuits configured to communicate with one or more memories included in the point cloud providing device, software, firmware, or a combination thereof. The one or more processors may perform at least one of the operations and/or functions of the elements of the point cloud encoder of FIG. 3 described above. Additionally, the one or more processors may operate or execute a set of software programs and/or instructions for performing the operations and/or functions of the elements of the point cloud encoder of FIG. 3. The one or more memories according to the embodiments may include a high speed random access memory, or include a non-volatile memory (e.g., one or more magnetic disk storage devices, flash memory devices, or other non-volatile solid-state memory devices).

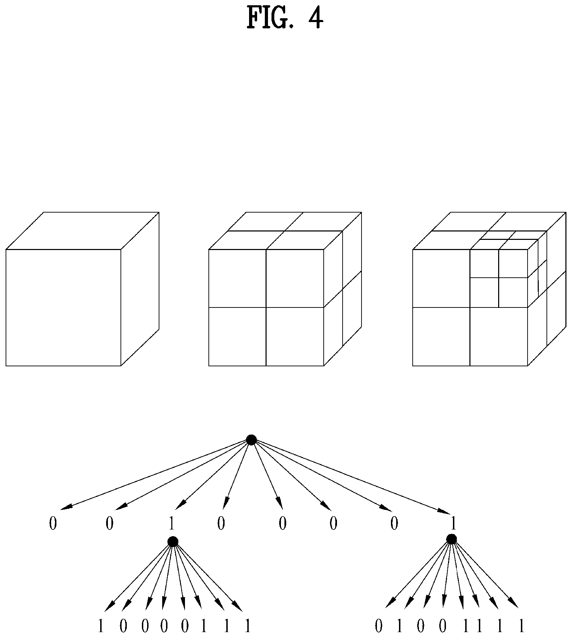

FIG. 4 shows an example of an octree and occupancy code according to embodiments.

As described with reference to FIGS. 1 to 3, the point cloud content providing system (point cloud video encoder 10002) or the point cloud encoder (e.g., the octree analyzer 30002) performs octree geometry coding (or octree coding) based on an octree structure to efficiently manage the region and/or position of the voxel.

The upper part of FIG. 4 shows an octree structure. The 3D space of the point cloud content according to the embodiments is represented by axes (e.g., X-axis, Y-axis, and Z-axis) of the coordinate system. The octree structure is created by recursive subdividing of a cubical axis-aligned bounding box defined by two poles (0, 0, 0) and $(2^d, 2^d, 2^d)$. Here, 2d may be set to a value constituting the smallest bounding box surrounding all points of the point cloud content (or point cloud video). Here, d denotes the depth of the octree. The value of d is determined in the following equation. In the following equation, $(x^{int}_n, y^{int}_n, z^{int}_n)$ denotes the positions (or position values) of quantized points.

$$\mathrm{d} = Ceil\left(Log2\left(Max\left(x_n^{int}, y_n^{int}, z_n^{int}, n = 1, \dots, N\right) + 1\right)\right)$$

As shown in the middle of the upper part of FIG. 4, the entire 3D space may be divided into eight spaces according to partition. Each divided space is represented by a cube with six faces. As shown in the upper right of FIG. 4, each of the eight spaces is divided again based on the axes of the coordinate system (e.g., X-axis, Y-axis, and Z-axis). Accordingly, each space is divided into eight smaller spaces. The divided smaller space is also represented by a cube with six faces. This partitioning scheme is applied until the leaf node of the octree becomes a voxel.

The lower part of FIG. 4 shows an octree occupancy code. The occupancy code of the octree is generated to indicate whether each of the eight divided spaces generated by dividing one space contains at least one point. Accordingly, a single occupancy code is represented by eight child nodes. Each child node represents the occupancy of a divided space, and the child node has a value in 1 bit. Accordingly, the occupancy code is represented as an 8-bit code. That is, when at least one point is contained in the space corresponding to a child node, the node is assigned a value of 1. When no point is contained in the space corresponding to the child node (the space is empty), the node is assigned a value of 0. Since the occupancy code shown in FIG. 4 is 00100001, it indicates that the spaces corresponding to the third child node and the eighth child node among the eight child nodes each contain at least one point. As shown in the figure, each of the third child node and the eighth child node has eight child nodes, and the child nodes are represented by an 8-bit occupancy code. The figure shows that the occupancy code of the third child node is 10000111, and the occupancy code of the eighth child node is 01001111. The point cloud encoder (e.g., the arithmetic encoder 30004) according to the embodiments may perform entropy encoding on the occupancy codes. In order to increase the compression efficiency, the point cloud encoder may perform intra/inter-coding on the occupancy codes. The reception device (e.g., the reception device 10004 or the point cloud video decoder 10006) according to the embodiments reconstructs the octree based on the occupancy codes.

The point cloud encoder (e.g., the point cloud encoder of FIG. 4 or the octree analyzer 30002) according to the embodiments may perform voxelization and octree coding to store the positions of points. However, points are not always evenly distributed in the 3D space, and accordingly there may be a specific region in which fewer points are present. Accordingly, it is inefficient to perform voxelization for the entire 3D space. For example, when a specific region contains few points, voxelization does not need to be performed in the specific region.

Accordingly, for the above-described specific region (or a node other than the leaf node of the octree), the point cloud encoder according to the embodiments may skip voxelization and perform direct coding to directly code the positions of points included in the specific region. The coordinates of a direct coding point according to the embodiments are referred to as direct coding mode (DCM). The point cloud encoder according to the embodiments may also perform trisoup geometry encoding, which is to reconstruct the positions of the points in the specific region (or node) based on voxels, based on a surface model. The trisoup geometry encoding is geometry encoding that represents an object as a series of triangular meshes. Accordingly, the point cloud decoder may generate a point cloud from the mesh surface. The direct coding and trisoup geometry encoding according to the embodiments may be selectively performed. In addition, the direct coding and trisoup geometry encoding according to the embodiments may be performed in combination with octree geometry coding (or octree coding).

To perform direct coding, the option to use the direct mode for applying direct coding should be activated. A node to which direct coding is to be applied is not a leaf node, and points less than a threshold should be present within a specific node. In addition, the total number of points to which direct coding is to be applied should not exceed a preset threshold. When the conditions above are satisfied, the point cloud encoder (or the arithmetic encoder 30004) according to the embodiments may perform entropy coding on the positions (or position values) of the points.

The point cloud encoder (e.g., the surface approximation analyzer 30003) according to the embodiments may determine a specific level of the octree (a level less than the depth d of the octree), and the surface model may be used staring with that level to perform trisoup geometry encoding to reconstruct the positions of points in the region of the node based on voxels (Trisoup mode). The point cloud encoder according to the embodiments may specify a level at which trisoup geometry encoding is to be applied. For example, when the specific level is equal to the depth of the octree, the point cloud encoder does not operate in the trisoup mode. In other words, the point cloud encoder according to the embodiments may operate in the trisoup mode only when the specified level is less than the value of depth of the octree. The 3D cube region of the nodes at the specified level according to the embodiments is called a block. One block may include one or more voxels. The block or voxel may correspond to a brick. Geometry is represented as a surface within each block. The surface according to embodiments may intersect with each edge of a block at most once.

One block has 12 edges, and accordingly there are at least 12 intersections in one block. Each intersection is called a vertex (or apex). A vertex present along an edge is detected when there is at least one occupied voxel adjacent to the edge among all blocks sharing the edge. The occupied voxel according to the embodiments refers to a voxel containing a point. The position of the vertex detected along the edge is the average position along the edge of all voxels adjacent to the edge among all blocks sharing the edge.

Once the vertex is detected, the point cloud encoder according to the embodiments may perform entropy encoding on the starting point (x, y, z) of the edge, the direction vector ($\Delta$x, $\Delta$y, $\Delta$z) of the edge, and the vertex position value (relative position value within the edge). When the trisoup geometry encoding is applied, the point cloud encoder according to the embodiments (e.g., the geometry reconstructor 30005) may generate restored geometry (reconstructed geometry) by performing the triangle reconstruction, up-sampling, and voxelization processes.

The vertices positioned at the edge of the block determine a surface that passes through the block. The surface according to the embodiments is a non-planar polygon. In the triangle reconstruction process, a surface represented by a triangle is reconstructed based on the starting point of the edge, the direction vector of the edge, and the position values of the vertices. The triangle reconstruction process is performed by: i) calculating the centroid value of each vertex, ii) subtracting the center value from each vertex value, and iii) estimating the sum of the squares of the values obtained by the subtraction.

$$\text{①} \begin{bmatrix} \mu_x \\ \mu_y \\ \mu_z \end{bmatrix} = \frac{1}{n}\sum_{i=1}^{n}\begin{bmatrix} x_i \\ y_i \\ z_i \end{bmatrix} \quad \text{②} \begin{bmatrix} \bar{x}_i \\ \bar{y}_i \\ \bar{z}_i \end{bmatrix} = \begin{bmatrix} x_i \\ y_i \\ z_i \end{bmatrix} - \begin{bmatrix} \mu_x \\ \mu_y \\ \mu_z \end{bmatrix} \quad \text{③} \begin{bmatrix} \sigma_x^2 \\ \sigma_y^2 \\ \sigma_z^2 \end{bmatrix} = \sum_{i=1}^{n}\begin{bmatrix} \bar{x}_i^2 \\ \bar{y}_i^2 \\ \bar{z}_i^2 \end{bmatrix}$$

The minimum value of the sum is estimated, and the projection process is performed according to the axis with the minimum value. For 'example, when the element x is the minimum, each vertex is projected on the x-axis with respect to the center of the block, and projected on the (y, z) plane. When the values obtained through projection on the (y, z) plane are (ai, bi), the value of $\theta$ is estimated through atan2(bi, ai), and the vertices are ordered based on the value of $\theta$. The table 1 below shows a combination of vertices for creating a triangle according to the number of the vertices. The vertices are ordered from 1 to n. The table below shows that for four vertices, two triangles may be constructed according to combinations of vertices. The first triangle may consist of vertices 1, 2, and 3 among the ordered vertices, and the second triangle may consist of vertices 3, 4, and 1 among the ordered vertices.

[Table] Triangles formed from vertices ordered 1,...,n

[Table 1]

| *n* | Triangles |
|---|---|
| **3** | (1,2,3) |
| **4** | (1,2,3), (3,4,1) |
| **5** | (1,2,3), (3,4,5), (5,1,3) |
| **6** | (1,2,3) ,(3,4,5), (5,6,1), (1,3,5) |
| **7** | (1,2,3), (3,4,5), (5,6,7), (7,1,3), (3,5,7) |
| **8** | (1,2,3), (3,4,5), (5,6,7), (7,8,1), (1,3,5), (5,7,1) |
| **9** | (1,2,3), (3,4,5), (5,6,7), (7,8,9), (9,1,3), (3,5,7), (7,9,3) |
| **10** | (1,2,3), (3,4,5), (5,6,7), (7,8,9), (9,10,1), (1,3,5), (5,7,9), (9,1,5) |
| **11** | (1,2,3), (3,4,5), (5,6,7), (7,8,9), (9,10,11), (11,1,3), (3,5,7), (7,9,11), (11,3,7) |
| **12** | (1,2,3), (3,4,5), (5,6,7), (7,8,9), (9,10,11), (11,12,1), (1,3,5), (5,7,9), (9,11,1), (1,5,9) |

The upsampling process is performed to add points in the middle along the edge of the triangle and perform voxelization. The added points are generated based on the upsampling factor and the width of the block. The added points are called refined vertices. The point cloud encoder according to the embodiments may voxelize the refined vertices. In addition, the point cloud encoder may perform attribute encoding based on the voxelized positions (or position values).

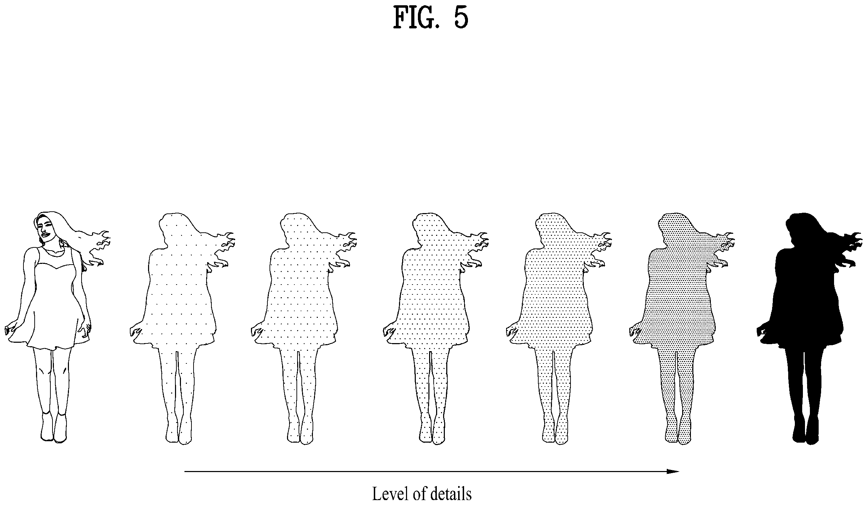

FIG. 5 illustrates an example of point configuration in each LOD according to embodiments.

As described with reference to FIGS. 1 to 4, encoded geometry is reconstructed (decompressed) before attribute encoding is performed. When direct coding is applied, the geometry reconstruction operation may include changing the placement of direct coded points (e.g., placing the direct coded points in front of the point cloud data). When trisoup geometry encoding is applied, the geometry reconstruction process is performed through triangle reconstruction, up-sampling, and voxelization. Since the attribute depends on the geometry, attribute encoding is performed based on the reconstructed geometry.

The point cloud encoder (e.g., the LOD generator 30009) may classify (or reorganize) points by LOD. The figure shows the point cloud content corresponding to LODs. The leftmost picture in the figure represents original point cloud content. The second picture from the left of the figure represents distribution of the points in the lowest LOD, and the rightmost picture in the figure represents distribution of the points in the highest LOD. That is, the points in the lowest LOD are sparsely distributed, and the points in the highest LOD are densely distributed. That is, as the LOD rises in the direction pointed by the arrow indicated at the bottom of the figure, the space (or distance) between points is narrowed.

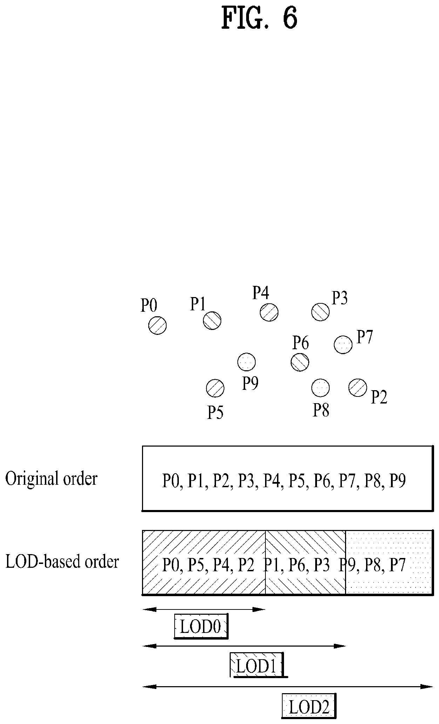

FIG. 6 illustrates an example of point configuration for each LOD according to embodiments.

As described with reference to FIGS. 1 to 5, the point cloud content providing system, or the point cloud encoder (e.g., the point cloud video encoder 10002, the point cloud encoder of FIG. 3, or the LOD generator 30009) may generates an LOD. The LOD is generated by reorganizing the points into a set of refinement levels according to a set LOD distance value (or a set of Euclidean distances). The LOD generation process is performed not only by the point cloud encoder, but also by the point cloud decoder.

The upper part of FIG. 6 shows examples (P0 to P9) of points of the point cloud content distributed in a 3D space. In FIG. 6, the original order represents the order of points P0 to P9 before LOD generation. In FIG. 6, the LOD based order represents the order of points according to the LOD generation. Points are reorganized by LOD. Also, a high LOD contains the points belonging to lower LODs. As shown in FIG. 6, LOD0 contains P0, P5, P4 and P2. LOD1 contains the points of LOD0, P1, P6 and P3. LOD2 contains the points of LOD0, the points of LOD1, P9, P8 and P7.

As described with reference to FIG. 3, the point cloud encoder according to the embodiments may perform prediction transform coding, lifting transform coding, and RAHT transform coding selectively or in combination.

The point cloud encoder according to the embodiments may generate a predictor for points to perform prediction transform coding for setting a predicted attribute (or predicted attribute value) of each point. That is, N predictors may be generated for N points. The predictor according to the embodiments may calculate a weight (=1/distance) based on the LOD value of each point, indexing information about neighboring points present within a set distance for each LOD, and a distance to the neighboring points.

The predicted attribute (or attribute value) according to the embodiments is set to the average of values obtained by multiplying the attributes (or attribute values) (e.g., color, reflectance, etc.) of neighbor points set in the predictor of each point by a weight (or weight value) calculated based on the distance to each neighbor point. The point cloud video encoder according to the embodiments (e.g., the coefficient quantizer 40011) may quantize and inversely quantize the residual of each point (which may be called a residual attribute, residual attribute value, attribute prediction residual value, prediction error attribute value, or the like) obtained by subtracting a predicted attribute (or attribute value) of each point from the attribute (i.e., original attribute value) of each point. The quantization process of the transmission device performed for a residual attribute value is configured as shown in table 2. The inverse quantization process performed for a residual attribute value in a reception device is configured as shown in Table 3.

[Table 2]

| int PCCQuantization(int value, int quantStep) { |
| --- |
| if( value >=0) { |
| return floor(value / quantStep + 1.0 / 3.0); |
| } else { |
| return -floor(-value / quantStep + 1.0 / 3.0); |
| } |
| } |

[Table 3

| int PCCInverseQuantization(int value, int quantStep) { |
| --- |
| if( quantStep ==0) { |
| return value; |
| } else { |
| return value * quantStep; |
| } |
| } |

When the predictor of each point has neighbor points, the point cloud encoder (e.g., the arithmetic encoder 30012) according to the embodiments may perform entropy coding on the quantized and inversely quantized residual values as described above. When the predictor of each point has no neighbor point, the point cloud encoder according to the embodiments (e.g., the arithmetic encoder 30012) may perform entropy coding on the attributes of the corresponding point without performing the above-described operation.

The point cloud encoder according to the embodiments (e.g., the lifting transformer 30010) may generate a predictor of each point, set the calculated LOD and register neighbor points in the predictor, and set weights according to the distances to neighbor points to perform lifting transform coding. The lifting transform coding according to the embodiments is similar to the above-described prediction transform coding, but differs therefrom in that weights are cumulatively applied to attribute values. The process of cumulatively applying weights to the attribute values according to embodiments is configured as follows.

1) Create an array Quantization Weight (QW) for storing the weight value of each point. The initial value of all elements of QW is 1.0. Multiply the QW values of the predictor indexes of the neighbor nodes registered in the predictor by the weight of the predictor of the current point, and add the values obtained by the multiplication.

2) Lift prediction process: Subtract the value obtained by multiplying the attribute value of the point by the weight from the existing attribute value to calculate a predicted attribute value.

3) Create temporary arrays called updateweight and update and initialize the temporary arrays to zero.

4) Cumulatively add the weights calculated by multiplying the weights calculated for all predictors by a weight stored in the QW corresponding to a predictor index to the updateweight array as indexes of neighbor nodes. Cumulatively add, to the update array, a value obtained by multiplying the attribute value of the index of a neighbor node by the calculated weight.

5) Lift update process: Divide the attribute values of the update array for all predictors by the weight value of the updateweight array of the predictor index, and add the existing attribute value to the values obtained by the division.

6) Calculate predicted attributes by multiplying the attribute values updated through the lift update process by the weight updated through the lift prediction process (stored in the QW) for all predictors. The point cloud encoder (e.g., coefficient quantizer 30011) according to the embodiments quantizes the predicted attribute values. In addition, the point cloud encoder (e.g., the arithmetic encoder 30012) performs entropy coding on the quantized attribute values.

The point cloud encoder (for example, the RAHT transformer 30008) according to the embodiments may perform RAHT transform coding in which attributes of nodes of a higher level are predicted using the attributes associated with nodes of a lower level in the octree. RAHT transform coding is an example of attribute intra coding through an octree backward scan. The point cloud encoder according to the embodiments scans the entire region from the voxel and repeats the merging process of merging the voxels into a larger block at each step until the root node is reached. The merging process according to the embodiments is performed only on the occupied nodes. The merging process is not performed on the empty node. The merging process is performed on an upper node immediately above the empty node.

The equation below represents a RAHT transformation matrix. In the equation, $g_{l\ x,y,z}$ denotes the average attribute value of voxels at level l. $g_{l\ x,y,z}$ may be calculated based on $g_{l+1\ 2x,y,z}$ and $g_{l+1\ 2x+1,y,z}$. The weights for $g_{l\ 2x,y,z}$ and $g_{l\ 2x+1,y,z}$ are w1 = $w_{l\ 2x,y,z}$ and w2 = $w_{l\ 2x+1,y,z}$.

$$\begin{bmatrix} g_{l-1\ x,y,z} \\ h_{l-1\ x,y,z} \end{bmatrix} = T_{w1\ w2} \begin{bmatrix} g_{l\ 2x,y,z} \\ g_{l\ 2x+1,y,z} \end{bmatrix}, \quad T_{w1\ w2} = \frac{1}{\sqrt{w1+w2}} \begin{bmatrix} \sqrt{w1} & \sqrt{w2} \\ -\sqrt{w2} & \sqrt{w1} \end{bmatrix}$$

Here, $g_{l-1\ x,y,z}$ is a low-pass value and is used in the merging process at the next higher level. $h_{l-1\ x,y,z}$ denotes high-pass coefficients. The high.0000000000-pass coefficients at each step are quantized and subjected to entropy coding (e.g., encoding by the arithmetic encoder 40012). The weights are calculated as $w_{l-1\,x,y,z} = w_{l\,2x,y,z} + w_{l\,2x+1,y,z}$. The root node is created through the $g_{1\,0,0,0}$ and $g_{1\,0,0,1}$ as follows.

$$\begin{bmatrix} \text{gDC} \\ h_{0_{0,0,0}} \end{bmatrix} = T_{w1000\ w1001} \begin{bmatrix} g_{1\,0,0,0z} \\ g_{1_{0,0,1}} \end{bmatrix}$$

The value of gDC is also quantized and subjected to entropy coding like the high-pass coefficients.

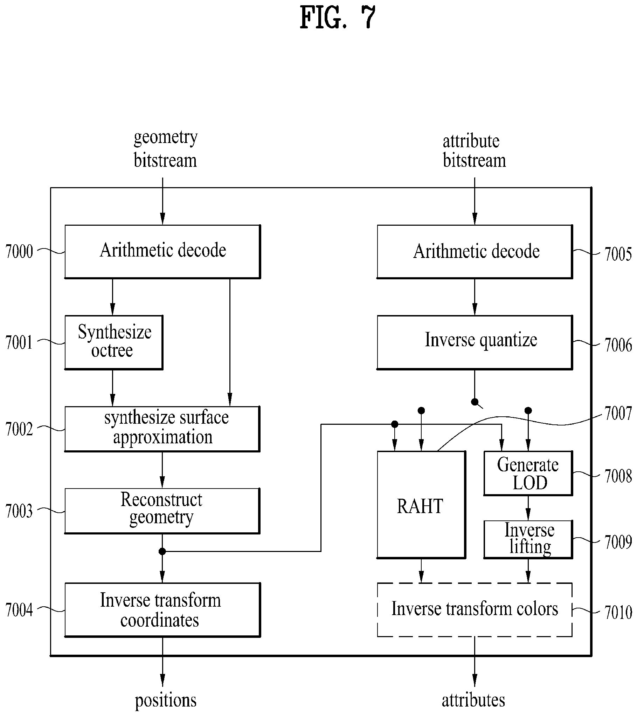

FIG. 7 illustrates a point cloud decoder according to embodiments.

The point cloud decoder illustrated in FIG. 7 is an example of the point cloud decoder and may perform a decoding operation, which is a reverse process to the encoding operation of the point cloud encoder illustrated in FIGS. 1 to 6.

As described with reference to FIGS. 1 and 6, the point cloud decoder may perform geometry decoding and attribute decoding. The geometry decoding is performed before the attribute decoding.

The point cloud decoder according to the embodiments includes an arithmetic decoder (Arithmetic decode) 7000, an octree synthesizer (Synthesize octree) 7001, a surface approximation synthesizer (Synthesize surface approximation) 7002, and a geometry reconstructor (Reconstruct geometry) 7003, a coordinate inverse transformer (Inverse transform coordinates) 7004, an arithmetic decoder (Arithmetic decode) 7005, an inverse quantizer (Inverse quantize) 7006, a RAHT transformer 7007, an LOD generator (Generate LOD) 7008, an inverse lifter (inverse lifting) 7009, and/or a color inverse transformer (Inverse transform colors) 7010.

The arithmetic decoder 7000, the octree synthesizer 7001, the surface approximation synthesizer 7002, and the geometry reconstructor 7003, and the coordinate inverse transformer 7004 may perform geometry decoding. The geometry decoding according to the embodiments may include direct decoding and trisoup geometry decoding. The direct coding and trisoup geometry decoding are selectively applied. The geometry decoding is not limited to the above-described example, and is performed as a reverse process to the geometry encoding described with reference to FIGS. 1 to 6.

The arithmetic decoder 7000 according to the embodiments decodes the received geometry bitstream based on the arithmetic coding. The operation of the arithmetic decoder 7000 corresponds to the reverse process to the arithmetic encoder 30004.

The octree synthesizer 7001 according to the embodiments may generate an octree by acquiring an occupancy code from the decoded geometry bitstream (or information on the geometry secured as a result of decoding). The occupancy code is configured as described in detail with reference to FIGS. 1 to 6.

When the trisoup geometry encoding is applied, the surface approximation synthesizer 7002 according to the embodiments may synthesize a surface based on the decoded geometry and/or the generated octree.

The geometry reconstructor 7003 according to the embodiments may regenerate geometry based on the surface and/or the decoded geometry. As described with reference to FIGS. 1 to 9, direct coding and trisoup geometry encoding are selectively applied. Accordingly, the geometry reconstructor 7003 directly imports and adds position information about the points to which direct coding is applied. When the trisoup geometry encoding is applied, the geometry reconstructor 7003 may reconstruct the geometry by performing the reconstruction operations of the geometry reconstructor 30005, for example, triangle reconstruction, up-sampling, and voxelization. Details are the same as those described with reference to FIG. 6, and thus description thereof is omitted. The reconstructed geometry may include a point cloud picture or frame that does not contain attributes.

The coordinate inverse transformer 7004 according to the embodiments may acquire positions of the points by transforming the coordinates based on the reconstructed geometry.

The arithmetic decoder 7005, the inverse quantizer 7006, the RAHT transformer 7007, the LOD generator 7008, the inverse lifter 7009, and/or the color inverse transformer 7010 may perform the attribute decoding. The attribute decoding according to the embodiments includes region adaptive hierarchical transform (RAHT) decoding, interpolation-based hierarchical nearest-neighbor prediction (prediction transform) decoding, and interpolation-based hierarchical nearest-neighbor prediction with an update/lifting step (lifting transform) decoding. The three decoding schemes described above may be used selectively, or a combination of one or more decoding schemes may be used. The attribute decoding according to the embodiments is not limited to the above-described example.

The arithmetic decoder 7005 according to the embodiments decodes the attribute bitstream by arithmetic coding.

The inverse quantizer 7006 according to the embodiments inversely quantizes the information about the decoded attribute bitstream or attributes secured as a result of the decoding, and outputs the inversely quantized attributes (or attribute values). The inverse quantization may be selectively applied based on the attribute encoding of the point cloud encoder.

According to embodiments, the RAHT transformer 7007, the LOD generator 7008, and/or the inverse lifter 7009 may process the reconstructed geometry and the inversely quantized attributes. As described above, the RAHT transformer 7007, the LOD generator 7008, and/or the inverse lifter 7009 may selectively perform a decoding operation corresponding to the encoding of the point cloud encoder.

The color inverse transformer 7010 according to the embodiments performs inverse transform coding to inversely transform a color value (or texture) included in the decoded attributes. The operation of the color inverse transformer 7010 may be selectively performed based on the operation of the color transformer 30006 of the point cloud encoder.

Although not shown in the figure, the elements of the point cloud decoder of FIG. 7 may be implemented by hardware including one or more processors or integrated circuits configured to communicate with one or more memories included in the point cloud providing device, software, firmware, or a combination thereof. The one or more processors may perform at least one or more of the operations and/or functions of the elements of the point cloud decoder of FIG. 7 described above. Additionally, the one or more processors may operate or execute a set of software programs and/or instructions for performing the operations and/or functions of the elements of the point cloud decoder of FIG. 7.

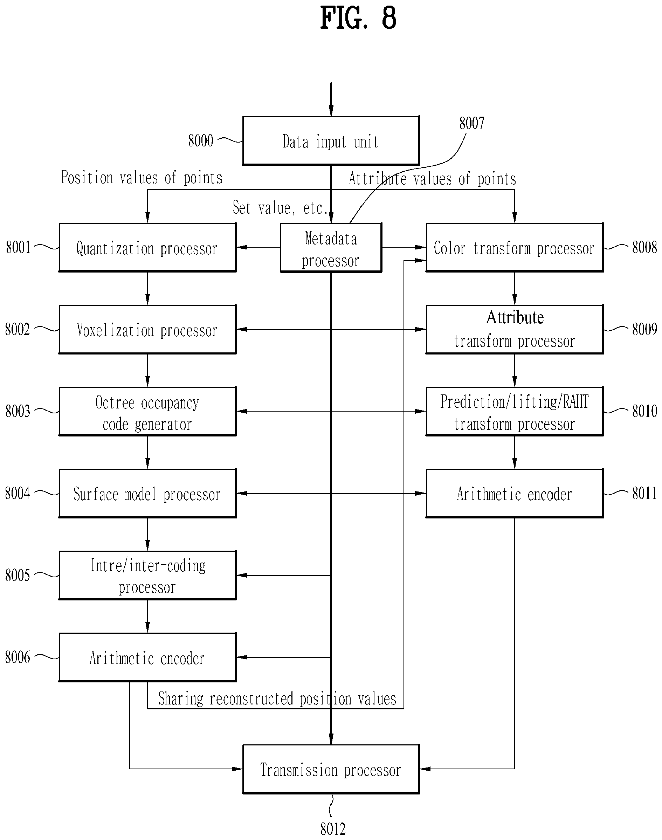

FIG. 8 illustrates a transmission device according to embodiments.

The transmission device shown in FIG. 8 is an example of the transmission device 10000 of FIG. 1 (or the point cloud encoder of FIG. 3). The transmission device illustrated in FIG. 8 may perform one or more of the operations and methods the same as or similar to those of the point cloud encoder described with reference to FIGS. 1 to 6. The transmission device according to the embodiments may include a data input unit 8000, a quantization processor 8001, a voxelization processor 8002, an octree occupancy code generator 8003, a surface model processor 8004, an intra/inter-coding processor 8005, an arithmetic coder 8006, a metadata processor 8007, a color transform processor 8008, an attribute transform processor 8009, a prediction/lifting/RAHT transform processor 8010, an arithmetic coder 8011 and/or a transmission processor 8012.

The data input unit 8000 according to the embodiments receives or acquires point cloud data. The data input unit 8000 may perform an operation and/or acquisition method the same as or similar to the operation and/or acquisition method of the point cloud video acquisition unit 10001 (or the acquisition process 20000 described with reference to FIG. 2).

The data input unit 8000, the quantization processor 8001, the voxelization processor 8002, the octree occupancy code generator 8003, the surface model processor 8004, the intra/inter-coding processor 8005, and the arithmetic coder 8006 perform geometry encoding. The geometry encoding according to the embodiments is the same as or similar to the geometry encoding described with reference to FIGS. 1 to 9, and thus a detailed description thereof is omitted.

The quantization processor 8001 according to the embodiments quantizes geometry (e.g., position values of points). The operation and/or quantization of the quantization processor 8001 is the same as or similar to the operation and/or quantization of the quantizer 30001 described with reference to FIG. 3. Details are the same as those described with reference to FIGS. 1 to 9.

The voxelization processor 8002 according to the embodiments voxelizes the quantized position values of the points. The voxelization processor 8002 may perform an operation and/or process the same or similar to the operation and/or the voxelization process of the quantizer 30001 described with reference to FIG. 3. Details are the same as those described with reference to FIGS. 1 to 6.

The octree occupancy code generator 8003 according to the embodiments performs octree coding on the voxelized positions of the points based on an octree structure. The octree occupancy code generator 8003 may generate an occupancy code. The octree occupancy code generator 8003 may perform an operation and/or method the same as or similar to the operation and/or method of the point cloud encoder (or the octree analyzer 30002) described with reference to FIGS. 3 and 4. Details are the same as those described with reference to FIGS. 1 to 6.

The surface model processor 8004 according to the embodiments may perform trisoup geometry encoding based on a surface model to reconstruct the positions of points in a specific region (or node) on a voxel basis. The surface model processor 8004 may perform an operation and/or method the same as or similar to the operation and/or method of the point cloud encoder (e.g., the surface approximation analyzer 30003) described with reference to FIG. 3. Details are the same as those described with reference to FIGS. 1 to 6.

The intra/inter-coding processor 8005 according to the embodiments may perform intra/inter-coding on point cloud data. The intra/inter-coding processor 8005 may perform coding the same as or similar to the intra/inter-coding. According to embodiments, the intra/inter-coding processor 8005 may be included in the arithmetic coder 8006.

The arithmetic coder 8006 according to the embodiments performs entropy encoding on an octree of the point cloud data and/or an approximated octree. For example, the encoding scheme includes arithmetic encoding. The arithmetic coder 8006 performs an operation and/or method the same as or similar to the operation and/or method of the arithmetic encoder 30004.

The metadata processor 8007 according to the embodiments processes metadata about the point cloud data, for example, a set value, and provides the same to a necessary processing process such as geometry encoding and/or attribute encoding. Also, the metadata processor 8007 according to the embodiments may generate and/or process signaling information related to the geometry encoding and/or the attribute encoding. The signaling information according to the embodiments may be encoded separately from the geometry encoding and/or the attribute encoding. The signaling information according to the embodiments may be interleaved.

The color transform processor 8008, the attribute transform processor 8009, the prediction/lifting/RAHT transform processor 8010, and the arithmetic coder 8011 perform the attribute encoding. The attribute encoding according to the embodiments is the same as or similar to the attribute encoding described with reference to FIGS. 1 to 6, and thus a detailed description thereof is omitted.

The color transform processor 8008 according to the embodiments performs color transform coding to transform color values included in attributes. The color transform processor 8008 may perform color transform coding based on the reconstructed geometry. The reconstructed geometry is the same as described with reference to FIGS. 1 to 9. Also, it performs an operation and/or method the same as or similar to the operation and/or method of the color transformer 30006 described with reference to FIG. 3 is performed. A detailed description thereof is omitted.

The attribute transform processor 8009 according to the embodiments performs attribute transformation to transform the attributes based on the reconstructed geometry and/or the positions on which geometry encoding is not performed. The attribute transform processor 8009 performs an operation and/or method the same as or similar to the operation and/or method of the attribute transformer 30007 described with reference to FIG. 3. A detailed description thereof is omitted. The prediction/lifting/RAHT transform processor 8010 according to the embodiments may code the transformed attributes by any one or a combination of RAHT coding, prediction transform coding, and lifting transform coding. The prediction/lifting/RAHT transform processor 8010 performs at least one of the operations the same as or similar to the operations of the RAHT transformer 30008, the LOD generator 30009, and the lifting transformer 30010 described with reference to FIG. 3. In addition, the prediction transform coding, the lifting transform coding, and the RAHT transform coding are the same as those described with reference to FIGS. 1 to 9, and thus a detailed description thereof is omitted.

The arithmetic coder 8011 according to the embodiments may encode the coded attributes based on the arithmetic coding. The arithmetic coder 8011 performs an operation and/or method the same as or similar to the operation and/or method of the arithmetic encoder 300012.

The transmission processor 8012 according to the embodiments may transmit each bitstream containing encoded geometry and/or encoded attributes and metadata information, or transmit one bitstream configured with the encoded geometry and/or the encoded attributes and the metadata information. When the encoded geometry and/or the encoded attributes and the metadata information according to the embodiments are configured into one bitstream, the bitstream may include one or more sub-bitstreams. The bitstream according to the embodiments may contain signaling information including a sequence parameter set (SPS) for signaling of a sequence level, a geometry parameter set (GPS) for signaling of geometry information coding, an attribute parameter set (APS) for signaling of attribute information coding, and a tile parameter set (TPS) for signaling of a tile level, and slice data. The slice data may include information about one or more slices. One slice according to embodiments may include one geometry bitstream Geom00 and one or more attribute bitstreams Attr00 and Attr10.

A slice refers to a series of syntax elements representing the entirety or part of a coded point cloud frame.

The TPS according to the embodiments may include information about each tile (e.g., coordinate information and height/size information about a bounding box) for one or more tiles. The geometry bitstream may contain a header and a payload. The header of the geometry bitstream according to the embodiments may contain a parameter set identifier (geom_parameter_set_id), a tile identifier (geom_tile_id) and a slice identifier (geom_slice_id) included in the GPS, and information about the data contained in the payload. As described above, the metadata processor 8007 according to the embodiments may generate and/or process the signaling information and transmit the same to the transmission processor 8012. According to embodiments, the elements to perform geometry encoding and the elements to perform attribute encoding may share data/information with each other as indicated by dotted lines. The transmission processor 8012 according to the embodiments may perform an operation and/or transmission method the same as or similar to the operation and/or transmission method of the transmitter 10003. Details are the same as those described with reference to FIGS. 1 and 2, and thus a description thereof is omitted.

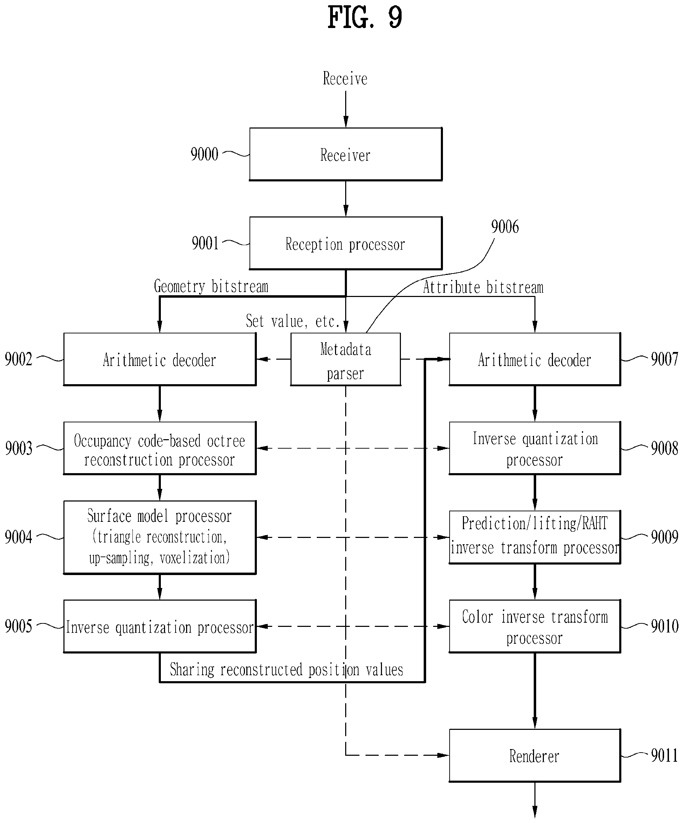

FIG. 9 illustrates a reception device according to embodiments.

The reception device illustrated in FIG. 9 is an example of the reception device 10004 of FIG. 1. The reception device illustrated in FIG. 9 may perform one or more of the operations and methods the same as or similar to those of the point cloud decoder described with reference to FIGS. 1 to 8.

The reception device according to the embodiment may include a receiver 9000, a reception processor 9001, an arithmetic decoder 9002, an occupancy code-based octree reconstruction processor 9003, a surface model processor (triangle reconstruction, up-sampling, voxelization) 9004, an inverse quantization processor 9005, a metadata parser 9006, an arithmetic decoder 9007, an inverse quantization processor 9008, a prediction/lifting/RAHT inverse transform processor 9009, a color inverse transform processor 9010, and/or a renderer 9011. Each element for decoding according to the embodiments may perform a reverse process to the operation of a corresponding element for encoding according to the embodiments.

The receiver 9000 according to the embodiments receives point cloud data. The receiver 9000 may perform an operation and/or reception method the same as or similar to the operation and/or reception method of the receiver 10005 of FIG. 1. The detailed description thereof is omitted.

The reception processor 9001 according to the embodiments may acquire a geometry bitstream and/or an attribute bitstream from the received data. The reception processor 9001 may be included in the receiver 9000.

The arithmetic decoder 9002, the occupancy code-based octree reconstruction processor 9003, the surface model processor 9004, and the inverse quantization processor 905 may perform geometry decoding. The geometry decoding according to embodiments is the same as or similar to the geometry decoding described with reference to FIGS. 1 to 8, and thus a detailed description thereof is omitted.

The arithmetic decoder 9002 according to the embodiments may decode the geometry bitstream based on arithmetic coding. The arithmetic decoder 9002 performs an operation and/or coding the same as or similar to the operation and/or coding of the arithmetic decoder 7000.

The occupancy code-based octree reconstruction processor 9003 according to the embodiments may reconstruct an octree by acquiring an occupancy code from the decoded geometry bitstream (or information about the geometry secured as a result of decoding). The occupancy code-based octree reconstruction processor 9003 performs an operation and/or method the same as or similar to the operation and/or octree generation method of the octree synthesizer 7001. When the trisoup geometry encoding is applied, the surface model processor 9004 according to the embodiments may perform trisoup geometry decoding and related geometry reconstruction (e.g., triangle reconstruction, up-sampling, voxelization) based on the surface model method. The surface model processor 9004 performs an operation the same as or similar to that of the surface approximation synthesizer 7002 and/or the geometry reconstructor 7003.

The inverse quantization processor 9005 according to the embodiments may inversely quantize the decoded geometry.

The metadata parser 9006 according to the embodiments may parse metadata contained in the received point cloud data, for example, a set value. The metadata parser 9006 may pass the metadata to geometry decoding and/or attribute decoding. The metadata is the same as that described with reference to FIG. 8, and thus a detailed description thereof is omitted.

The arithmetic decoder 9007, the inverse quantization processor 9008, the prediction/lifting/RAHT inverse transform processor 9009 and the color inverse transform processor 9010 perform attribute decoding. The attribute decoding is the same as or similar to the attribute decoding described with reference to at least one of FIGS. 1 to 8, and thus a detailed description thereof is omitted.

The arithmetic decoder 9007 according to the embodiments may decode the attribute bitstream by arithmetic coding. The arithmetic decoder 9007 may decode the attribute bitstream based on the reconstructed geometry. The arithmetic decoder 9007 performs an operation and/or coding the same as or similar to the operation and/or coding of the arithmetic decoder 7005.

The inverse quantization processor 9008 according to the embodiments may inversely quantize the decoded attribute bitstream. The inverse quantization processor 9008 performs an operation and/or method the same as or similar to the operation and/or inverse quantization method of the inverse quantizer 7006.

The prediction/lifting/RAHT inverse transform processor 9009 according to the embodiments may process the reconstructed geometry and the inversely quantized attributes. The prediction/lifting/RAHT inverse transform processor 9009 performs one or more of operations and/or decoding the same as or similar to the operations and/or decoding of the RAHT transformer 7007, the LOD generator 7008, and/or the inverse lifter 7009 of FIG. 7. The color inverse transform processor 9010 according to the embodiments performs inverse transform coding to inversely transform color values (or textures) included in the decoded attributes. The color inverse transform processor 9010 performs an operation and/or inverse transform coding the same as or similar to the operation and/or inverse transform coding of the color inverse transformer 7010 of FIG. 7. The renderer 9011 according to the embodiments may render the point cloud data.

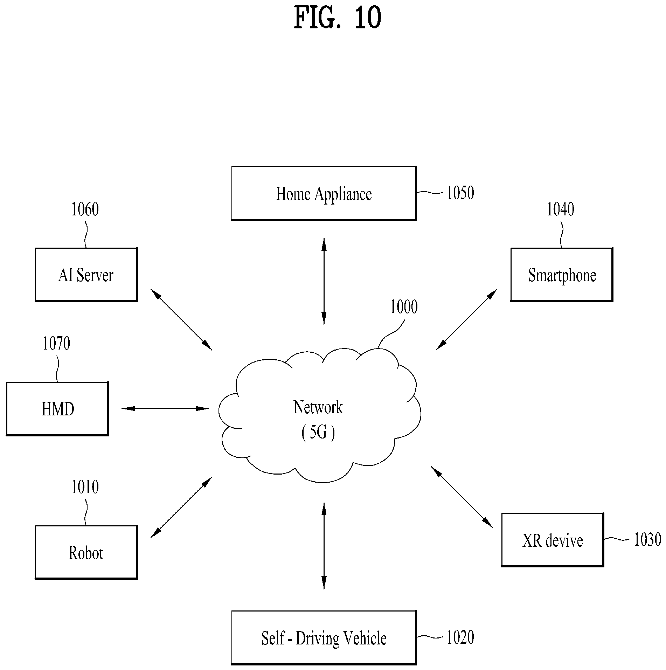

FIG. 10 illustrates an exemplary structure operable in connection with point cloud data transmission/reception methods/devices according to embodiments.

The structure of FIG. 10 represents a configuration in which at least one of a server 1060, a robot 1010, a self-driving vehicle 1020, an XR device 1030, a smartphone 1040, a home appliance 1050, and/or a head-mount display (HMD) 1070 is connected to the cloud network 1000. The robot 1010, the self-driving vehicle 1020, the XR device 1030, the smartphone 1040, or the home appliance 1050 is called a device. Further, the XR device 1030 may correspond to a point cloud data (PCC) device according to embodiments or may be operatively connected to the PCC device.

The cloud network 1000 may represent a network that constitutes part of the cloud computing infrastructure or is present in the cloud computing infrastructure. Here, the cloud network 1000 may be configured using a 3G network, 4G or Long Term Evolution (LTE) network, or a 5G network.

The server 1060 may be connected to at least one of the robot 1010, the self-driving vehicle 1020, the XR device 1030, the smartphone 1040, the home appliance 1050, and/or the HMD 1070 over the cloud network 1000 and may assist in at least a part of the processing of the connected devices 1010 to 1070.

The HMD 1070 represents one of the implementation types of the XR device and/or the PCC device according to the embodiments. The HMD type device according to the embodiments includes a communication unit, a control unit, a memory, an I/O unit, a sensor unit, and a power supply unit.

Hereinafter, various embodiments of the devices 1010 to 1050 to which the above-described technology is applied will be described. The devices 1010 to 1050 illustrated in FIG. 10 may be operatively connected/coupled to a point cloud data transmission device and reception device according to the above-described embodiments.

<PCC+XR>

The XR/PCC device 1030 may employ PCC technology and/or XR (AR+VR) technology, and may be implemented as an HMD, a head-up display (HUD) provided in a vehicle, a television, a mobile phone, a smartphone, a computer, a wearable device, a home appliance, a digital signage, a vehicle, a stationary robot, or a mobile robot.

The XR/PCC device 1030 may analyze 3D point cloud data or image data acquired through various sensors or from an external device and generate position data and attribute data about 3D points. Thereby, the XR/PCC device 1030 may acquire information about the surrounding space or a real object, and render and output an XR object. For example, the XR/PCC device 1030 may match an XR object including auxiliary information about a recognized object with the recognized object and output the matched XR object.

<PCC+XR+Mobile phone>

The XR/PCC device 1030 may be implemented as a mobile phone 1040 by applying PCC technology.

The mobile phone 1040 may decode and display point cloud content based on the PCC technology.

<PCC+Self-driving+XR>

The self-driving vehicle 1020 may be implemented as a mobile robot, a vehicle, an unmanned aerial vehicle, or the like by applying the PCC technology and the XR technology.

The self-driving vehicle 1020 to which the XR/PCC technology is applied may represent a self-driving vehicle provided with means for providing an XR image, or a self-driving vehicle that is a target of control/interaction in the XR image. In particular, the self-driving vehicle 1020 which is a target of control/interaction in the XR image may be distinguished from the XR device 1030 and may be operatively connected thereto.

The self-driving vehicle 1020 having means for providing an XR/PCC image may acquire sensor information from sensors including a camera, and output the generated XR/PCC image based on the acquired sensor information. For example, the self-driving vehicle 1020 may have an HUD and output an XR/PCC image thereto, thereby providing an occupant with an XR/PCC object corresponding to a real object or an object present on the screen.

When the XR/PCC object is output to the HUD, at least a part of the XR/PCC object may be output to overlap the real object to which the occupant's eyes are directed. On the other hand, when the XR/PCC object is output on a display provided inside the self-driving vehicle, at least a part of the XR/PCC object may be output to overlap an object on the screen. For example, the self-driving vehicle 1220 may output XR/PCC objects corresponding to objects such as a road, another vehicle, a traffic light, a traffic sign, a two-wheeled vehicle, a pedestrian, and a building.

The virtual reality (VR) technology, the augmented reality (AR) technology, the mixed reality (MR) technology and/or the point cloud compression (PCC) technology according to the embodiments are applicable to various devices.

In other words, the VR technology is a display technology that provides only CG images of real-world objects, backgrounds, and the like. On the other hand, the AR technology refers to a technology that shows a virtually created CG image on the image of a real object. The MR technology is similar to the AR technology described above in that virtual objects to be shown are mixed and combined with the real world. However, the MR technology differs from the AR technology in that the AR technology makes a clear distinction between a real object and a virtual object created as a CG image and uses virtual objects as complementary objects for real objects, whereas the MR technology treats virtual objects as objects having equivalent characteristics as real objects. More specifically, an example of MR technology applications is a hologram service.

Recently, the VR, AR, and MR technologies are sometimes referred to as extended reality (XR) technology rather than being clearly distinguished from each other. Accordingly, embodiments of the present disclosure are applicable to any of the VR, AR, MR, and XR technologies. The encoding/decoding based on PCC, V-PCC, and G-PCC techniques is applicable to such technologies.

The PCC method/device according to the embodiments may be applied to a vehicle that provides a self-driving service.

A vehicle that provides the self-driving service is connected to a PCC device for wired/wireless communication.

When the point cloud data (PCC) transmission/reception device according to the embodiments is connected to a vehicle for wired/wireless communication, the device may receive/process content data related to an AR/VR/PCC service, which may be provided together with the self-driving service, and transmit the same to the vehicle. In the case where the PCC transmission/reception device is mounted on a vehicle, the PCC transmission/reception device may receive/process content data related to the AR/VR/PCC service according to a user input signal input through a user interface device and provide the same to the user. The vehicle or the user interface device according to the embodiments may receive a user input signal. The user input signal according to the embodiments may include a signal indicating the self-driving service.

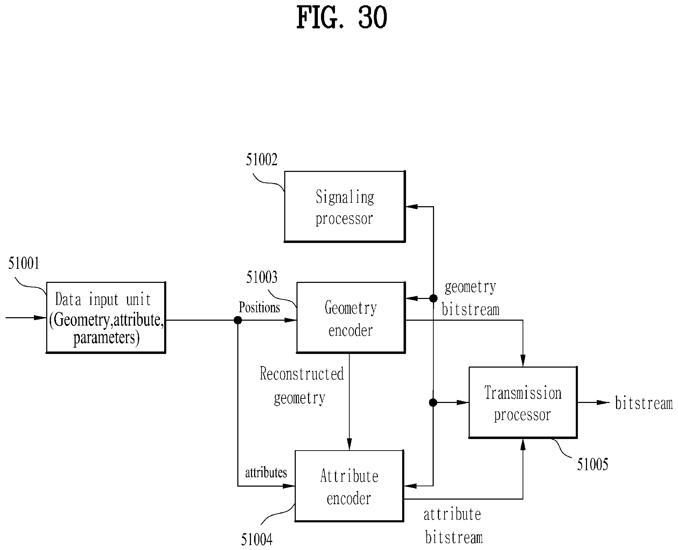

The point cloud data transmission method/device according to the embodiments is construed as a term referring to the transmission device 10000, point cloud video encoder 10002, and transmitter 10003 of FIG. 1, the acquisition 20000-encoding 20001-transmission 20002 of FIG. 2, the point cloud video encoder of FIG. 3, the transmission device of FIG. 8, the device of FIG. 10, the transmission device of FIG. 30, and the like.

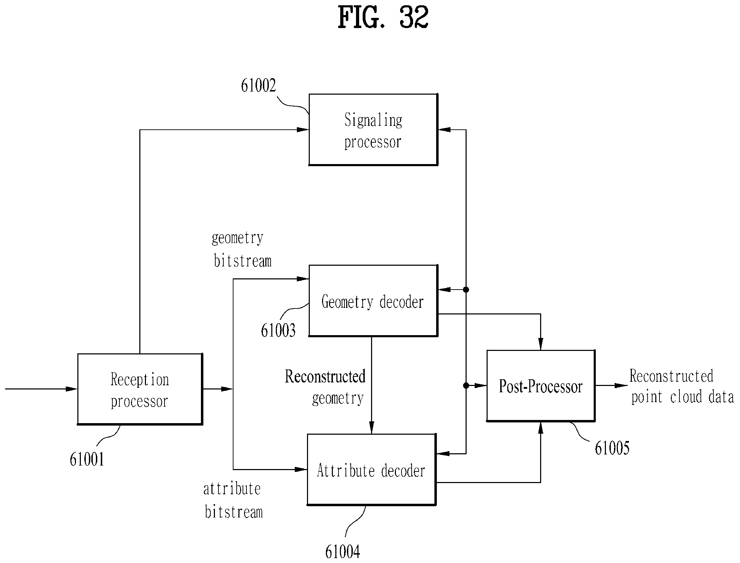

The point cloud data reception method/device according to the embodiments is construed as a term referring to the reception device 10004, receiver 10005, and point cloud video decoder 10006 of FIG. 1, the transmission 20002-decoding 20003-rendering 20004 of FIG. 2, the point cloud video decoder of FIG. 7, the reception device of FIG. 9, the device of FIG. 10, the reception device of FIG. 32, and the like.

The point cloud data transmission reception method/device according to the embodiments may be simply referred to as a method/device according to the embodiments.

According to embodiments, geometry data, geometry information, position information, and the like constituting the point cloud data are construed as having the same meaning. Attribute data, attribute information, and the like constituting point cloud data are construed as having the same meaning.

The method/device according to the embodiments may process point cloud data in consideration of scalable transmission.

Regarding the method/device according to the embodiments, disclosed herein is a method for efficiently supporting selective decoding of a part of data according to receiver performance or transmission speed in transmitting-g/receiving point cloud data. In particular, the present disclosure proposes techniques for increasing the efficiency of scalable coding, wherein the encoder at the transmitting end may selectively deliver information required by a decoder at the receiving side for compressed data, and the decoder may decode the same, wherein the coding unit may be configured as independent slices in the sense of tree levels, LODs, layer group units, and the like.

In particular, the present disclosure proposes a method for increasing the efficiency of scalable coding in point cloud data compression. Here, scalable coding is a technique for gradually changing the resolution of the data according to the request/processing speed/performance/transmission bandwidth of the receiver, which may allow the compressed data to be efficiently delivered at the transmitter side and to be decoded at the receiving side. To this end, split packing may be applied together with the technique of the present disclosure to effectively deliver point cloud data configured based on layers, and may be used as a compression method for efficient storage and transmission of large-volume point cloud data having a wide distribution and a high density of points. Referring to the point cloud data transmission/reception device (which may be referred to simply as an encoder/decoder) according to the embodiments shown in FIGS. 3 and 7, point cloud data is composed of a set of points. Each of the points includes geometry information (or geometry or geometry data) and attribute information (or an attribute or attribute data). The geometry information is three-dimensional position information (xyz) about each point. That is, the position of each point is represented by parameters in a coordinate system representing a three-dimensional space (e.g., parameters (x, y, z) of three axes representing the space, such as the X-axis, Y-axis, and Z-axis). The attribute information represents the color (RGB, YUV, etc.), reflectance, normal vectors, transparency, and the like of the points. In point cloud compression (PCC), octree-based compression is performed to efficiently compress non-uniform distribution in a three-dimensional space, and attribute information is compressed based on the octree-based compression. The point cloud video encoder and the point cloud video decoder shown in S. 3 and 7 may process the operation(s) according to embodiments through respective components.

According to embodiments, the transmission device compresses the geometry information (e.g., position) and attribute information (e.g., color/brightness/reflectance, etc.) about the point cloud data and transmits the compressed information to the reception device. The point cloud data may be configured according to an octree structure that has layers according to the degree of detail or levels of detail (LoDs). Then, scalable point cloud data coding and representation may be performed based the configuration. In this case, only a part of the point cloud data may be decoded or represented according to the performance of the reception device or the transfer rate. However, there is currently no method to remove unnecessary data in advance.

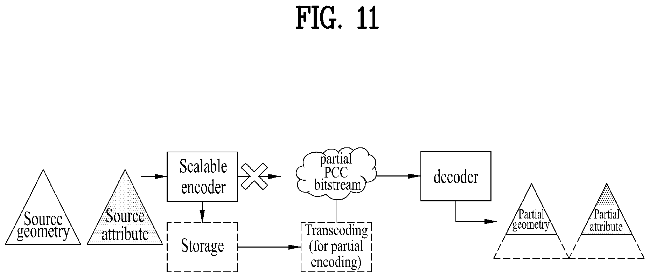

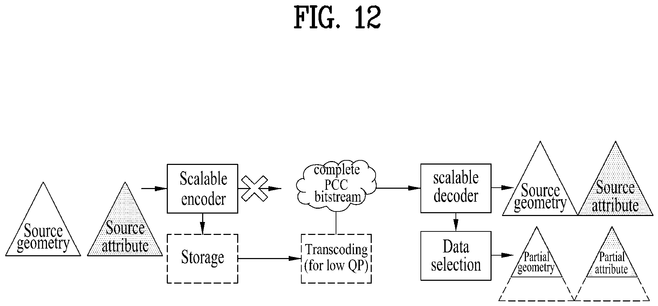

In other words, in the case where only a part of the scalable point cloud compression bitstream needs to be transmitted (e.g., only a part of the layers are decoded in scalable decoding), the necessary part cannot be selected and sent. Accordingly, the transmission device should re-encode the necessary part after decoding as shown in FIG. 11, or the reception device should selectively apply the necessary data after decoding when the entire data is delivered to the reception device as shown in FIG. 12.

However, in the case of FIG. 11, a delay may occur due to the time for decoding and re-encoding. In the case of FIG. 12, bandwidth efficiency may be degraded due to transmission of unnecessary data to the reception device. Further, when a fixed bandwidth is used, data quality may need to be lowered to transmit data.

Accordingly, the methods/devices according to the embodiments may provide slices such that the point cloud may be divided into regions for processing.

In particular, in the case of octree-based position compression, entropy-based compression and direct compression may be used together. In this regard, proposed herein is a slice configuration for efficiently utilizing scalability.

Also, regarding the methods/devices according to the embodiments, a slice segmentation structure of point cloud data may be defined, and a scalable layer and slice structure for scalable transmission may be signaled.

The methods/devices according to embodiments may divide and process a bitstream in specific units for efficient bitstream delivery and decoding.

The methods/devices according to the embodiments may enable selective transmission and decoding of layered point cloud data in a bitstream unit.

The unit according to the embodiments may be referred to as an LOD, a layer, a slice, or the like. The LOD is the same term as LOD in attribute data coding, but may mean a data unit for a layered structure of a bitstream in another sense. The LOD may be a concept corresponding to one depth or a bundle of two or more depths based on the layer structure of point cloud data, for example, depths (levels) of an octree or multiple trees. Similarly, a layer is provided to generate a unit of a sub-bitstream. It is a concept that corresponds to one depth or a bundle of two or more depths, and may correspond to one LOD or two or more LODs. Also, a slice is a unit for configuring a unit of a sub-bitstream, and may correspond to one depth, a part of one depth, or two or more depths. Also, a slice may correspond to one LOD, a part of one LOD, or two or more LODs. According to embodiments, the LOD, the layer, and the slice may correspond to each other or one of the LOD, the layer, and the slice may be included in another one. Also, a unit according to embodiments may include an LOD, a layer, a slice, a layer group, or a subgroup, and may be referred to interchangeably with each other. According to embodiments, in an octree structure, a layer, a depth, a level, and a depth level may have the same meaning.

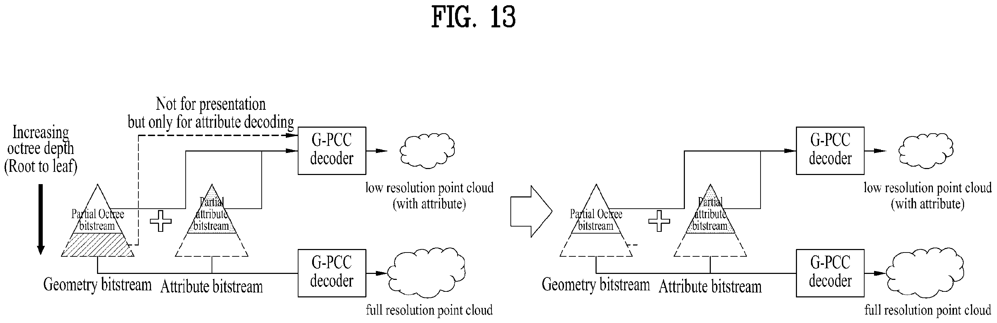

In particular, in the case of scalable attribute coding, the need for full layer geometry during decoding, as shown in FIG. 13-(a), raises an issue of unnecessary delivery of geometry detail information even when some levels of detail are not used by the receiver. This may result in unnecessarily high transmission bandwidth requirements, or delay or complexity caused by the need to process the geometry details at the receiver. However, by configuring and transmitting/receiving independent slices according to the meaning of the coding unit, such as tree-level, LOD or layer group, as in the present disclosure, the full layer geometry is not required during the decoding process, as shown in FIG. 13-(a)), for scalable attribute coding. In other words, only the geometry of the corresponding layer rather than the full layer is needed for scalable attribute coding.

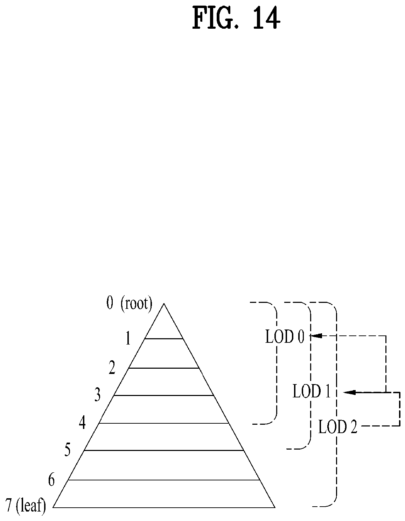

FIG. 14 is a diagram illustrating an example of a layer-based point cloud data configuration according to embodiments. FIG. 14 illustrating an example of an octree structure in which the depth level of a root node is set to 0 and the depth level of a leaf node is set to 7.

The methods/devices according to the embodiments may configure layer-based point cloud data as shown in FIG. 14 to encode and decode the point cloud data.

Layering of point cloud data according to embodiments may have a layer structure in terms of SNR, spatial resolution, color, temporal frequency, bit depth, or the like depending on the application field, and may configure layers in a direction in which data density increases based on the octree structure or LOD structure.

That is, when the LOD is generated based on the octree structure, the LOD may be defined to increase in a direction in which the detail increases, that is, in a direction in which the octree depth level increases. In the present disclosure, a layer may have the same meaning as a level, a depth, and a depth level.

Referring to FIG. 14, for example, in an octree structure having 7 depth levels except the root node level (or root level), LOD 0 is configured to include levels from the root node level to the octree depth level 4, and LOD 1 is configured to include levels from the root node level to octree depth level 5, and LOD 2 is configured to include levels from root node level to octree depth level 7.

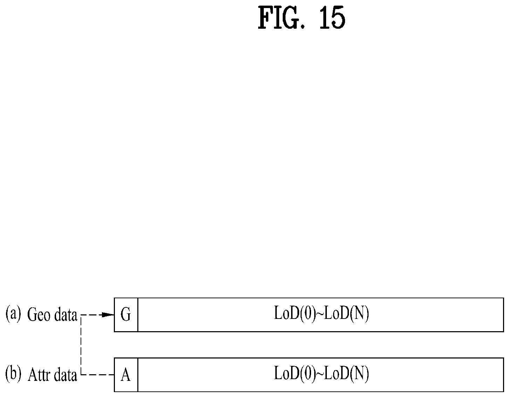

FIG. 15-(a) illustrates a bitstream structure of geometry data according to embodiments, and FIG. 15-(b) illustrates a bitstream structure of attribute data according to embodiments.

A method/device according to embodiments may generate LODs based on the layering of the octree structure as shown in FIG. 14 and configure a geometry bitstream and an attribute bitstream as shown in FIG. 15-(a) and 15-(b).

The transmission device according to the embodiments may divide a bitstream acquired through point cloud compression into a geometry bitstream and an attribute bitstream according to data types to transmit the bitstream.

In this case, each bitstream may be composed of slices and transmitted. According to embodiments, each of the geometry bitstream (e.g. FIG. 15-(a)) and the attribute bitstream (e.g. FIG. 15-(b)) may be configured as one slice and delivered regardless of the layer information or LoD information. In this case, to use only some of the layers or LoDs, an operation of decoding the bitstream, an operation of selecting only a part to be used and removing unnecessary parts, and an operation of re-encoding based on only necessary information should be performed.

The present disclosure proposes a method of dividing a bitstream into layers (or LoDs) to avoid such unnecessary intermediate operations.

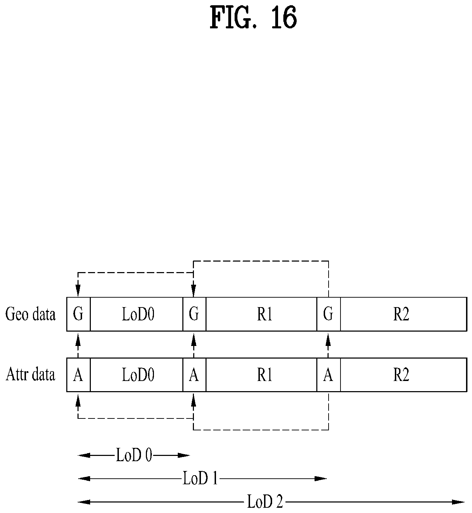

FIG. 16 is a diagram illustrating an example of a bitstream configuration for delivering a bitstream divided into layers (or LoDs) according to embodiments.

For example, in the case of LoD-based PCC technology, a lower LoD is included in a higher LoD. That is, the higher LoD includes all points of the lower LoD. In addition, when information on points included in the current LoD but not included in the previous LoD, namely, new points added to each LoD is defined as R (rest or retained), the transmission device may divide the initial LoD information and the information R newly included in each LoD into independent units (e.g. slices) and transmit the same, as shown in FIG. 16.

In other words, a set of new points added to configure each LoD compared to the previous LoD may be defined as information R. FIG. 16 illustrates an example in which LoD1 includes LoD0 and information R1, and LoD2 includes LoD1 and information R2.

According to an embodiment, points sampled for one or more octree depth levels may be determined as data belonging to information R. That is, a set of points sampled for one or more octree depth levels (that is, points matched to an occupied node) may be defined as information R. According to another embodiment, points sampled for one octree depth level may be divided into a plurality of pieces of information R according to a predetermined criterion. In this case, various criteria for dividing one octree depth level into a plurality of pieces of information R may be considered as follows. For example, when one octree depth level is divided into M pieces of information R, the M pieces of information R may be configured such that the data in information R may have consecutive Morton codes, or may be grouped such that the data in information R have the same remainder obtained by dividing the Morton code order index by M. Alternatively, M pieces of information R may be configured by grouping data at the same position when grouped as sibling nodes. According to another embodiment, if necessary, some of the sampled points at a plurality of octree depth levels may be determined as information R.

In the example of FIG. 16, a geometry bitstream and an attribute bitstream are each divided into three slices according to embodiments. Each slice includes a header and a payload (also called a data unit) containing actual data (e.g., geometry data, attribute data). The header may contain information about a corresponding slice. In addition, the header may further contain reference information related to a previous slice, a previous LoD, or a previous layer for LoD configuration.

For example, referring to FIG. 16, the geometry bitstream is divided into a slice carrying geometry data belonging to LoD0, a slice carrying geometry data belonging to information R1, and a slice carrying geometry data belonging to information R2. The attribute bitstream is divided into a slice carrying attribute data belonging to LoD0, a slice carrying attribute data belonging to information R1, and a slice carrying attribute data belonging to information R2.

The reception method/device according to the embodiments may receive a bitstream divided into LODs or layers, and may efficiently decode only data to be used without a complicated intermediate process.

In this regard, various embodiments may be applied to transmit the bitstream.

For example, the geometry bitstream and the attribute bitstream may be delivered respectively. Alternatively, the geometry bitstream and the attribute bitstream may be multiplexed into one bitstream to be delivered.

When each bitstream contains LoD0 and one or more pieces of information R, the order of delivery of LoD0 and the one or more pieces of information R may vary.

In the example of FIG. 16, the geometry bitstream and the attribute bitstream are delivered, respectively. In this case, LoD0 including the geometry bitstream and two pieces of information R (R1, R2) are delivered sequentially, and LoD0 including the attribute bitstream and two pieces of information R (R1, R2) are delivered sequentially.

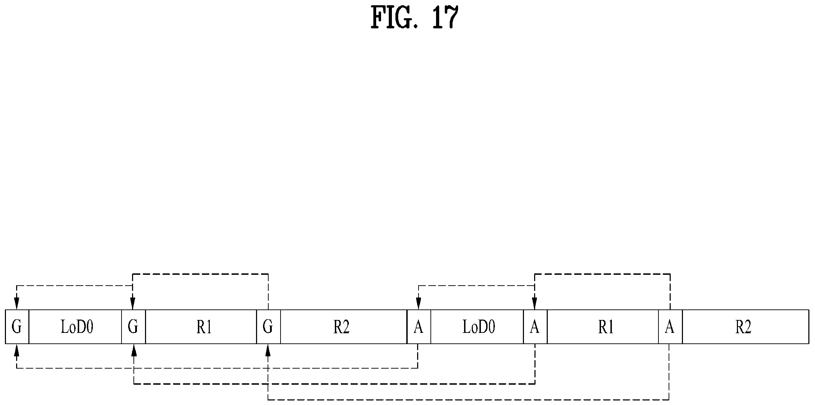

FIG. 17 illustrates an exemplary bitstream sorting used when a geometry bitstream and an attribute bitstream are multiplexed into one bitstream according to embodiments.

The transmission method/device according to the embodiments may serially transmit geometry data and attribute data as shown in FIG. 17 in transmitting a bitstream. In this operation, depending on the type of data, the entire geometry data (or geometry information) may be transmitted first, and then attribute data (or referred to as attribute information) may be transmitted. In this case, the geometry data may be quickly reconstructed based on the transmitted bitstream information.

Referring to FIG. 17, for example, the layers (LODs) containing the geometry data may be positioned first in the bitstream, and the layers (LODs) containing the attribute data may be positioned after the geometry layers. Since the attribute data is dependent on the geometry data, the layers (LODs) containing the geometry data may be positioned before the layers (LODs) containing the attribute data. FIG. 17 illustrates an example in which LoD0 containing geometry data and two pieces of information R (R1, R2) are sequentially delivered, and then LoD0 containing attribute data and two pieces of information R (R1, R2) are sequentially delivered. In this regard, the positions may be changed according to embodiments. In addition, reference may be made between the geometry headers, and may also be made between the attribute headers and the geometry headers.

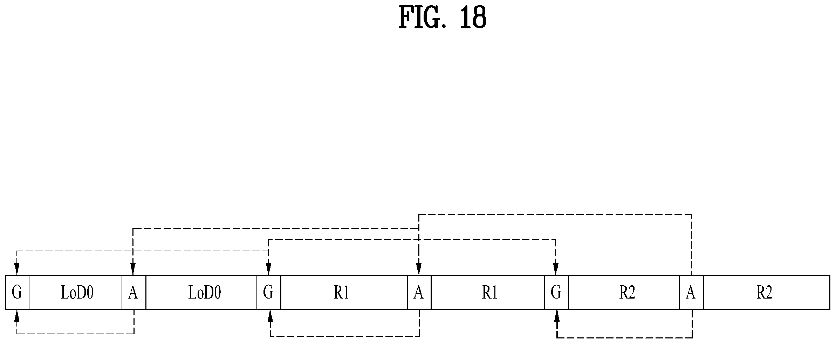

FIG. 18 illustrates another exemplary bitstream sorting method when a geometry bitstream and an attribute bitstream are multiplexed into one bitstream according to embodiments.

In transmitting a bitstream, the transmission method/device according to the embodiments may serially transmit geometry data and attribute data as shown in FIG. 18. In this case, bitstreams constituting the same layer containing geometry data and attribute data may be bundled and transmitted. In this case, when a compression technique for parallel decoding of geometry and attributes is used, the decoding execution time may be shortened. In this regard, information that needs to be processed first (low LoD and geometry should precede attributes) may be disposed first.

FIG. 18 illustrates an example of transmitting LoD0 containing geometry data, LoD0 containing attribute data, information R1 containing geometry data, information R1 containing attribute data, information R2 containing geometry data, and information R2 containing attribute data in this order. In this case, the positions may be changed according to embodiments. In addition, reference may be made between the geometry headers and may also be made between the attribute headers and the geometry headers.

The transmission/reception method/device according to the embodiments may efficiently select a layer (or LoD) desired in the application field at a bitstream level in transmitting and receiving a bitstream. In the bitstream sorting method according to the embodiments, when grouping and transmitting geometry information as shown in FIG. 17, there may be an empty part in the middle after selecting the bitstream level. In this case, the bitstream may need to be re-disposed.

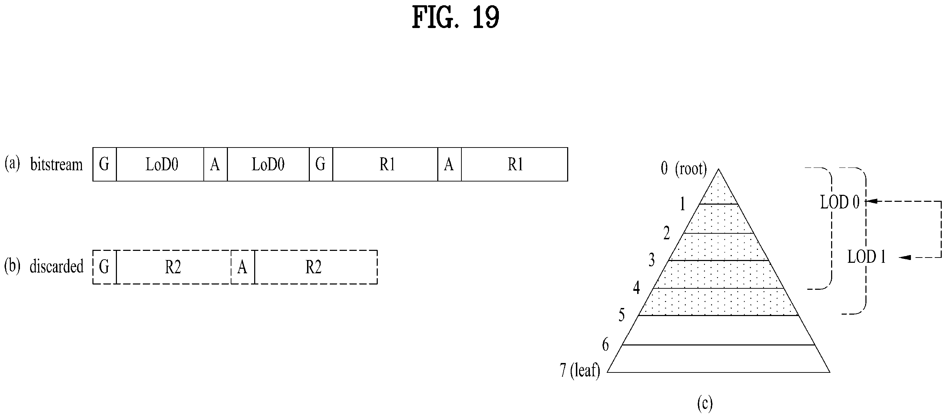

By bundling and transmitting the geometry data and attribute data according to layers as shown in FIG. 18, necessary information may be selectively delivered and/or unnecessary information may be selectively removed according to an application field, as shown in FIGS. 19-(a) to 19-(c) or FIGS. 20-(a) to 20-(c).

FIGS. 19-(a) to 19-(c) are diagrams illustrating an example of symmetric geometry-attribute selection according to embodiments.

For example, referring to FIGS. 19-(a) to 19-(c), when a part of the bitstream needs to be selected according to embodiments, the transmission device selects and transmits data only up to LoD1 (i.e., LoD0+R1), and information R2 corresponding to the upper layer (i.e., the new part of LoD2) is removed from the bitstream and not transmitted. In the case of symmetric geometry-attribute selection, geometry data and attribute data of the same layer are simultaneously selected and transmitted, or simultaneously selected and removed.

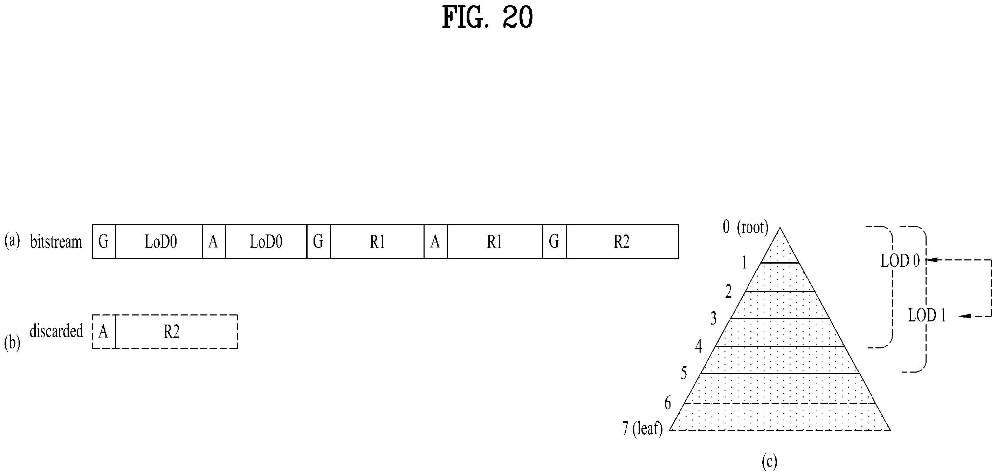

FIGS. 20-(a) to 20-(c) are diagrams illustrating an example of asymmetric geometry-attribute selection according to embodiments. In the case of asymmetric geometry-attribute selection, only one of the geometry data and the attribute data of the same layer is selected and transmitted or removed.

For example, referring to FIGS. 20-(a) to 20-(c), when a part of the bitstream needs to be selected according to embodiments, the transmission device selects and transmits LoD1 (LoD0 +R1) containing geometry data and attribute data, LoD1 (LoD0 +R1) containing attribute data, and R2 containing geometry data, and removes R2 containing attribute data from the bitstream so as not to be transmitted. In other words, for the attribute data, data other than the data of the upper layer (R2) is selected and transmitted. For the geometry data, data of all layers (from level 0 (root level) to level 7 (leaf level) in the octree structure) is transmitted.

When a part of a bitstream needs to be selected according to embodiments, a part of the bitstream may be selected using the symmetric geometry-attribute selection method of FIGS. 19-(a) to 19-(c), the asymmetric geometry-attribute selection method of FIGS. 20-(a) to 20-(c), or the combination of the symmetric geometry-attribute selection method and the asymmetric geometry-attribute selection method.

The segmentation of a bitstream, selection of a part of the bitstream, and the like described above are intended to support scalability of point cloud data.

Referring to FIG. 14, when point cloud data is represented in an octree structure and divided into LODs (or layers), scalable encoding/decoding (scalability) may be supported.

The scalability function according to the embodiments may include slice-level scalability and/or octree-level scalability.

LoD according to the embodiments may be used as a unit indicating a set of one or more octree layers. Also, the LoD may mean a bundle of octree layers to be configured on a slice-by-slice basis.

The LOD according to the embodiments may be used in a broad sense, such as a unit for dividing data in detail, beyond the meaning of the LOD in attribute encoding/decoding.

That is, spatial scalability by an actual octree layer (or scalable attribute layer) may be provided for each octree layer. However, when scalability is configured in the slice level before bitstream parsing, the selection may be performed in the LoD level.

For example, referring to FIG. 14, in an octree structure, the levels from the root level to level 4 correspond to LoD0, and the levels from the root level to level 5 correspond to LoD1. Also, the levels from the root level to level 8 (i.e., leaf level) correspond to LoD2.

In other words, in the example of FIG. 14, when scalability is used in the slice level, the provided scalable operation corresponds to three steps of LoD0, LoD1, and LoD2, and a scalable operation that may be provided in the decoding operation by the octree structure corresponds to 8 steps from the root level to the leaf level.

According to embodiments, when LoD0 to LoD2 are composed of respective slices, the transcoder (see FIG. 11) of the receiver or transmitter may select only LoD0, select only LoD1, or select LoD2 for scalable processing. In FIG. 14, LoD1 includes LoD0, and LOD2 includes LoD1 and LoD2.

For example, when only LoD0 is selected, the maximum octree level is 4, and one scalable layer may be selected from among octree layers 0 to 4 in the decoding operation. In this case, the reception device may consider a node size obtainable through the maximum octree level (or depth) as a leaf node, and may transmit the node size through signaling information.

For example, when LoD1 is selected, layer 5 may be added. Thus, the maximum octree level may be 5, and one scalable layer may be selected from among octree layers 0 to 5 in the decoding operation. In this case, the reception device may consider a node size obtainable through the maximum octree level (or depth) as a leaf node, and may transmit the node size through signaling information. According to embodiments, octree depths, octree layers, and octree levels may be units into which data is divided in detail.

For example, when LoD2 is selected, layers 6 and 7 may be added. Thus, the maximum octree level may be 7, and one scalable layer may be selected from among octree layers 0 to 7 in the decoding operation. In this case, the reception device may consider a node size obtainable through the maximum octree level (or depth) as a leaf node, and may transmit the node size through signaling information.

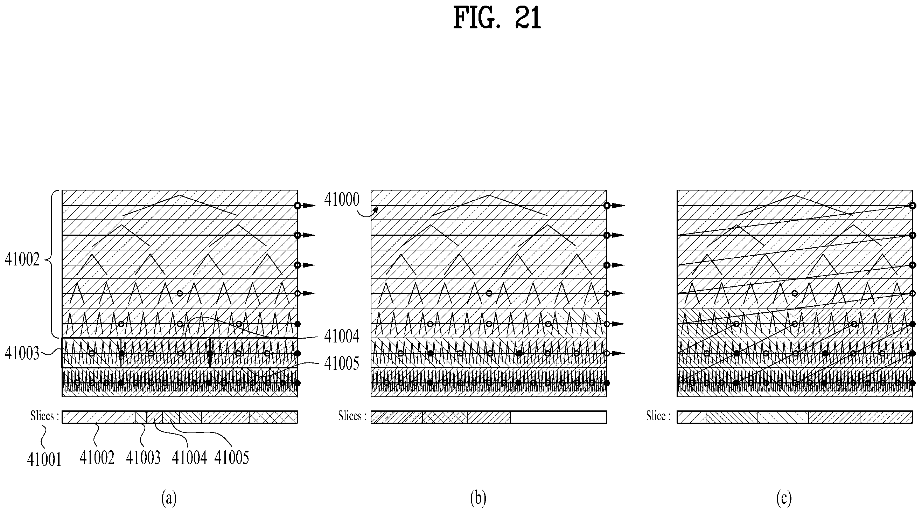

FIGS. 21-(a) to 21-(c) illustrate exemplary methods of configuring slices including point cloud data according to embodiments.

The transmission method/device/encoder according to the embodiments may configure a G-PCC bitstream by segmenting the bitstream in a slice structure. A data unit for detailed data representation may be a slice.

For example, one or more octree layers (or depths) may be matched to one slice.

The transmission method/device according to the embodiments, for example, the encoder, may configure a bitstream based on slices 41001 by scanning nodes (points) included in an octree in the direction of a scan order 41000. A slice may include nodes of one or more levels in the octree structure, may include only nodes of a specific level, or may include only some nodes of a specific level. Alternatively, it may include only some nodes of one or more levels.

FIG. 21-(a) illustrates an exemplary octree structure composed of 7 slices. In this example, a slice 41002 may include nodes of level 0 to level 4, and a slice 41003 may include some nodes of level 5. A slice 41004 may include some other nodes of level 5, and a slice 41005 may include some other nodes of level 5. That is, in FIG. 21-(a), level 5 is divided into three slices. Similarly, in FIG. 21-(a), level 6 (i.e., the leaf level) is also divided into three slices. In other words, a slice may be composed of some nodes of a specific level.

FIG. 21-(b) illustrates an exemplary octree structure composed of four slices. In this example, one slice includes the nodes of level 0 to level 3 and some nodes of level 4, and another slice includes the other nodes of level 4 and some nodes of level 5. In addition, another slice includes the other nodes of level 5 and some nodes of level 6, and the other slice includes the other nodes of level 6.

FIG. 21-(c) illustrates an exemplary octree structure composed of five slices. One slice is composed of the nodes of level 0 to level 3, and four slices are composed of the nodes of level 4 to level 6. That is, a slice includes some nodes of level 4, some nodes of level 5, and some nodes of level 6. In other words, in levels 4 to 6, a slice may include some data of level 4 and data of level 5 or level 6 corresponding to a child node of the data.

In other words, as shown in FIG. 21-(b) and 21-(c), when multiple octree layers are matched to a slice, only some nodes of each of the layers may be included in the slice. When multiple slices constitute a geometry/attribute frame in this way, information necessary for the reception device to configure layers may be transmitted to the reception device through signaling information. For example, the signaling information may include information about the layers included in each slice and information about the nodes included in each layer.

The encoder and the device corresponding to the encoder according to the embodiments may encode the point cloud data, and generate and transmit a bitstream containing the encoded data and signaling information (or parameter information) related to the point cloud data.

Further, in generating a bitstream, the bitstream may be generated based on the bitstream structure (e.g., see FIGS. 15 to 21, etc.) according to the embodiments. Accordingly, the reception device, the decoder, a corresponding device, or the like according to the embodiments may receive and parse the bitstream configured to be suitable for selective decoding of some data, thereby decoding and efficiently providing only a part of the point cloud data (see FIG. 13-(b)).

Next, scalable transmission of point cloud data will be described.

The point cloud data transmission method/device according to the embodiments may scalably transmit a bitstream containing point cloud data, and the point cloud data reception method/device according to the embodiments may scalably receive the bitstream and decode the same.

When the bitstream having the structure illustrated in FIGS. 11 to 21 is used for scalable transmission, signaling information for selecting a slice required by the reception device may be transmitted to the reception device. The scalable transmission may not mean transmitting or decoding the entire bitstream, but may mean transmitting or decoding only a part of the bitstream. Accordingly, low-resolution point cloud data may be provided.

When the scalable transmission is applied to an octree-based geometry bitstream according to embodiments, point cloud data should be allowed to be configured based on only information about layers up to a specific octree layer for the bitstream of each octree layer (FIG. 14) from the root node to the leaf node.

To this end, a target octree layer should not have a dependency on lower octree layer information. This may be a constraint applied to geometry coding/attribute coding in common.

In addition, in scalable transmission, a scalable structure used for the transmission/reception device to select a scalable layer needs to be transmitted to the reception device. Considering the octree structure according to the embodiments, all octree layers may support scalable transmission, or scalable transmission may be allowed only for a specific octree layer and lower layers. For example, when some of the octree layers are included, signaling information may be delivered to the reception device to indicate a scalable layer in which the slice is included. Thus, the reception device may determine whether the slice is necessary/unnecessary in the bitstream stage. In the example of FIG. 21-(a), level 0 (i.e., root level) to level 4 41002 may constitute one scalable layer without supporting scalable transmission, and the lower octree layers may be matched to scalable layers in a one-to-one correspondence manner. In general, scalability may be supported for a part corresponding to the leaf node. As shown in FIG. 21-(c), when multiple octree layers are included in a slice, it may be defined that one scalable layer shall be configured for the layers.

In this case, scalable transmission and scalable decoding may be used separately depending on the purpose. According to embodiments, the scalable transmission may be used in order for the transmitting/reception device to select information up to a specific layer without involving the decoder. According to embodiments, scalable decoding may be used to select a specific layer during coding. That is, the scalable transmission may support selection of necessary information in a compressed state without involving the decoder (i.e., in the bitstream stage), such that the transmission or reception device may determine a specific layer. On the other hand, in the case of scalable decoding, encoding/decoding may be supported for information only up to a necessary part in the encoding/decoding process. Therefore, scalable decoding may be used in an operation such as scalable representation.

In this case, the layer configuration for scalable transmission may be different from the layer configuration for scalable decoding. For example, the lower three octree layers including the leaf node may constitute one layer in terms of scalable transmission. On the other hand, in terms of scalable decoding, when all layer information is included, scalable decoding may be enabled for each of the leaf node layer, leaf node layer-1 and leaf node layer-2.

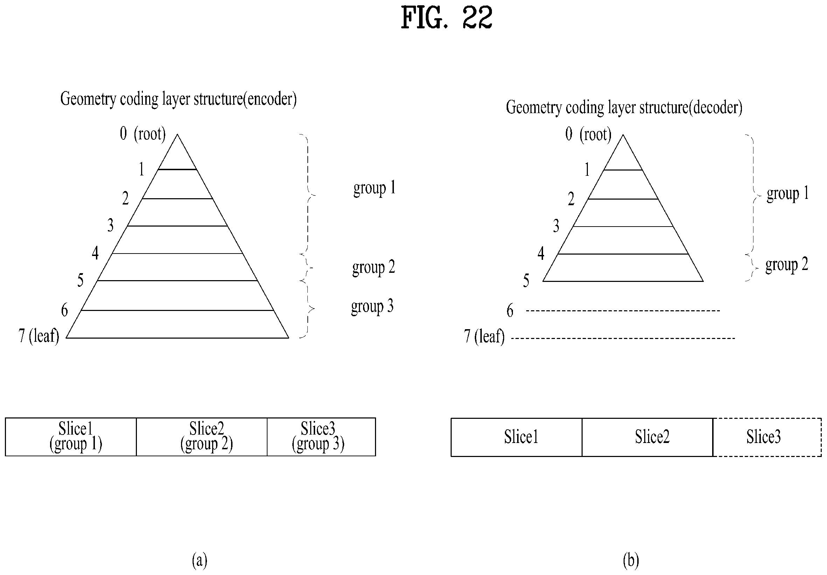

FIGS. 22-(a) and 22-(b) illustrate geometry coding layer structures according to embodiments. In particular, FIGS. 22-(a) illustrates an example of three slices generated by the layer group structure at an encoder at the transmitter side, and FIG. 22-(b) illustrates an example of a partially decoded output using two slices at a decoder at the receiving side.

When fine granularity slicing is enabled, a G-PCC bitstream may be sliced into multiple sub-bitstreams. Here, fine granularity slicing may be referred to as layer group based slicing. To effectively use the layering structure of G-PCC, each slice may include coded data from a partial coding layer or a partial region. Using the segmentation or partitioning of slices paired with the coding layer structure, use cases of scalable transmission or spatial random access may be supported in an efficient manner.

Layer group based slice segmentation

In fine granularity slicing, each slice segment may contain data coded from a layer group defined as follows.

A layer group may be defined as a group of contiguous tree layers, wherein the start and end depths of the group of tree layers may be arbitrary numbers in the tree depth, and the start depth may be less than the end depth. The order of the data coded in a slice segment may be the same as the order of the data coded in a single slice.

For example, considering a geometry coding layer structure with eight coding layers as shown in FIGS. 22-(a), there are three layer groups, each of which is matched to a different slice. More specifically, layer group 1 for coding layers 0 to 4 is matched to slice 1, layer group 2 for coding layer 5 4 is matched to slice 2, and layer group 3 for coding layers 6 and 7 4 is matched to slice 3. When the first two slices (i.e., slices 1 and 2) are transmitted or selected, the decoded output will be partial layers 0 to 5, as shown in FIG. 22-(b). By using slices in the layer group structure, partial decoding of coding layers may be supported without accessing the entire bitstream.

The bitstream and point cloud data according to the embodiments may be generated based on coding layer-based slice segmentation. By slicing the bitstream at the end of the coding layer in the encoding process, the method/device according to the embodiments may select a related slice, thereby supporting scalable transmission or partial decoding.

FIGS. 22-(a) shows a geometry coding layer structure with 8 layers in which each slice corresponds to a layer group. Layer group 1 includes coding layers 0 to 4. Layer group 2 includes coding layer 5. Layer group 3 is a group for coding layers 6 and 7. When a geometry (or attribute) has a tree structure having eight levels (depths), a bitstream may be hierarchically configured by grouping data corresponding to one or more levels (depths). Each group may be included in one slice.

FIG. 22-(b) shows the decoded output when selecting two slices from among three slices. When the decoder selects group 1 and group 2, partial layers of levels (depths) 0 to 5 of the tree are selected. That is, partial decoding of coding layers may be supported by using the slices of the layer group structure, even without accessing the entire bitstream.

For the partial decoding process according to the embodiments, the encoder may generate three slices based on the layer group structure. The decoder according to the embodiments may select two slices from among the three slices and perform partial decoding.

A bitstream according to embodiments may include layer group-based slices. Each slice may include a header containing signaling information related to point cloud data (i.e., geometry data and/or attribute data) included in the slice. The reception method/device according to the embodiments may select slices and decode point cloud data contained in the payload of the slices based on the header included in the selected slices.

A method/device according to embodiments may further divide the layer group into several subgroups in consideration of use cases of spatial random access in addition to the layer group structure. The subgroups are mutually exclusive, and a set of subgroups may be the same as a layer group. Since the points of each subgroup form a boundary in the spatial domain, a subgroup may be represented by subgroup bounding box information. Based on spatial information, the layer group and subgroup structure may support access to a region of interest (ROI) by selecting slices that cover the ROI. By efficiently comparing the ROI with the bounding box information about each slice, spatial random access within a frame or tile may be supported.

A method/device according to embodiments may configure slices for delivering point cloud data, as shown in FIGS. 22-(a).

According to embodiments, the entire coded bitstream may be included in a single slice. For multiple slices, each slice may contain a sub-bitstream. The order of the slices may be the same as the order of the sub-bitstreams. Also, each slice may be matched to a layer group in a tree structure.

Further, slices may not affect previous slices, just as higher layers of the geometry tree do not affect lower layers.

The segmented slices according to the embodiments are efficient in terms of error robustness, effective transmission, support of region of interest, and the like.

1) Error resilience

Compared to a single slice structure, segmented slices may be more robust to errors. In other words, when a slice contains the entire bitstream of a frame, data loss may affect the entire frame data. On the other hand, when the bitstream is segmented into multiple slices, at least one slice that is not affected by a loss even when at least one slice is lost may be decoded.

2) Scalable transmission

In the present disclosure, multiple decoders having different capabilities may be supported.

When coded point cloud data (i.e., a point cloud compression (PCC) bitstream) is contained in a single slice, the LOD of the coded point cloud data may be determined prior to encoding. Accordingly, multiple pre-encoded bitstreams having different resolutions of the point cloud data may be independently transmitted, which may be inefficient in terms of large bandwidth or storage space.

When the coded point cloud data (i.e., the PCC bitstream) is contained in segmented slices, the single bitstream may support decoders of different levels. From the decoder perspective, the reception device may select target layers and may deliver the partially selected bitstream to the decoder. Similarly, by using a single bitstream without partitioning the entire bitstream, a partial bitstream may be efficiently generated by the transmission device.

3) Region based spatial scalability

In terms of the G-PCC requirement according to embodiments, region based spatial scalability may be defined as follows: a compressed bitstream is composed of one or more layers, and thus a specific ROI may have a higher density with additional layers, and layers may be predicted from lower layers.

To support this requirement, it is necessary to support region-wise different detailed representation of regions. For example, in VR/AR applications, in a VR/AR application, far objects may be represented with lower precision, and nearer objects may be represented with higher precision. Further, the decoder may increase the resolution of the interested area at the request. This operation may be implemented using the geometry octree and the scalable structure of G-PCC such as the scalable attribute coding scheme.

According to embodiments, decoders should access the entire bitstream based on the current slice structure containing the entire geometry or attributes, which may cause inefficiency in terms of bandwidth, memory, and decoder. On the other hand, when the bitstream is segmented into multiple slices, and each slice contains sub-bitstreams according to scalable layers, the decoder according to the embodiments may efficiently select slices before parsing the bitstream, as needed.

A method/device according to embodiments may generate a layer group using a tree structure (or layer structure) of the point cloud data.

Referring to FIGS. 22-(a) as an example, there are eight layers in a geometry coding layer structure (e.g., an octree structure), and three slices may be used to contain one or more layers. A group represents a group of layers. When scalable attribute coding is used, the tree structure is identical to the geometry tree structure. The same octree-slice mapping may be used to create attribute slice segments.

A layer group according to the embodiments represents a bundle of layer structure units generated in G-PCC coding, such as an octree layer or an LoD layer.

A sub-group may be represented as a set of neighboring nodes within a layer group. For example, it may be configured as a set of nodes neighboring each other by Morton code order, a set of neighboring nodes based on distance, or a set of neighboring nodes based on coding order. Nodes in a parent-child relationship may also be present within a subgroup.

When subgroups are defined, a boundary occurs in the middle of the layer, and a parameter such as entropy_continuation_enabled_flag may be signaled to indicate whether entropy continuation is maintained at the boundary. Continuation may also be maintained by referencing the previous slice through ref_slice_id.

The tree structure according to the embodiments may be an octree structure, and the attribute layer structure or attribute coding tree according to the embodiments may include a level of detail (LOD) structure. In other words, the tree structure for the point cloud data may include layers corresponding to depths or levels, and the layers may be grouped.

A method/device according to the embodiments (e.g., the octree analyzer 30002 or LOD generator 30009 of FIG. 3, the octree synthesizer 7002 or LOD generator 7008 of FIG. 7) may generate an octree structure of geometry or an LOD tree structure of attributes. Further, the point cloud data may be grouped based on layers of the tree structure.

Referring to FIGS. 22-(a), multiple layers are grouped into first to third groups. A group may be further divided to form subgroups.

According to embodiments, a slice may contain coded data from a layer group. Here, the layer group is defined as a group of consecutive tree layers. The start and end depths of the tree layers may be specific numbers in the tree depth, wherein the number for the start is less than that for the end.

While FIGS. 22-(a) illustrates the geometry coding layer structure as an example of a tree structure, a coding layer structure for attributes may also be created in a similar manner.

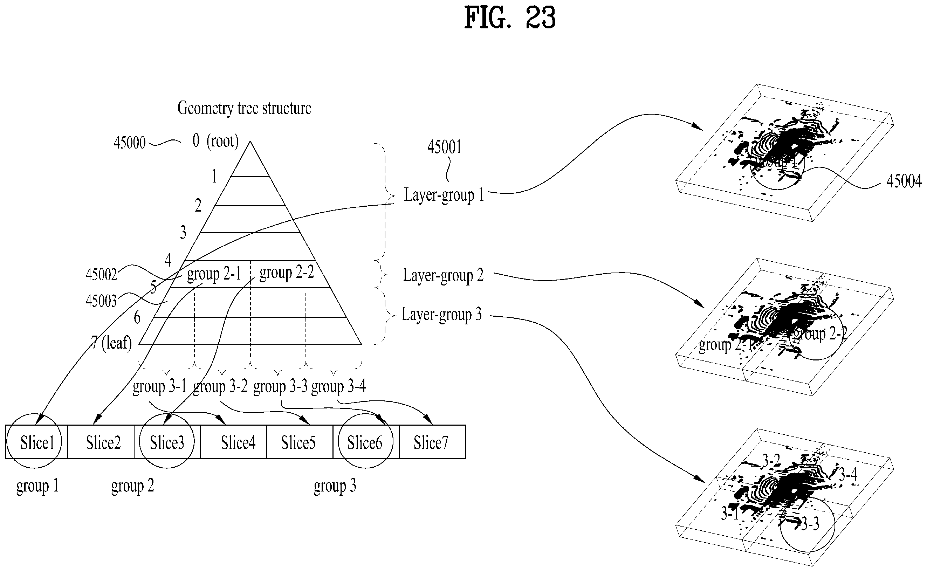

FIG. 23 is a diagram illustrating a layer group and subgroup structure according to embodiments.

Referring to FIG. 23, point cloud data and bitstreams may be distinguished and represented by bounding boxes.

In FIG. 23, a subgroup structure and bounding boxes corresponding to the subgroups are shown. Layer group 2 is divided into two subgroups (group2-1 and group2-2), which are included in different slices, and layer group 3 is divided into four subgroups (group3-1, group3-2, group3-3, and group3-4), which are contained in different slices. Given the slices of the layer groups and subgroups along with the bounding box information, spatial access may be performed by 1) comparing the bounding box of each slice with the ROI, 2) selecting a slice where the subgroup bounding box overlaps with the ROI, and 3) decoding the selected slice.

When an ROI is considered in region 3-3, slices 1, 3, and 6 are selected as subgroup bounding boxes of layer group 1 and subgroups 2-2 and 3-3 that cover the ROI. It is assumed for effective spatial access that there is no dependency between subgroups from the same layer group. In live streaming or low-latency use cases, time efficiency may be increased by performing selection and decoding when each slice segment is received.

In encoding geometry and/or attributes, a method/device according to embodiments may present data as a tree 2200 composed of layers (which may be referred to as depths, levels, or the like). Point cloud data corresponding to layers (depths/levels) may be grouped into layer groups (or groups) 45000. Layer group 2 may be further divided (segmented) into two subgroups 45002, and layer group 3 may be further divided (segmented) into four subgroups 45003. Each subgroup may be configured as a slice to generate a bitstream.

The reception device according to the embodiments may receive a bitstream, select a specific slice from the bitstream, and decode a bounding box corresponding to a subgroup included in the selected slice. For example, when slice 1 is selected, a bounding box 45004 corresponding to layer group 1 may be decoded. Layer group 1 may be data corresponding to the largest region. When additionally displaying an detailed region for layer group 1, a method/device according to the embodiments may select slice 3 and/or slice 6, and hierarchically and partially access the bounding box (point cloud data) of subgroup 2-2 and/or subgroup 3-3 for the detailed region included in the region of layer group 1.

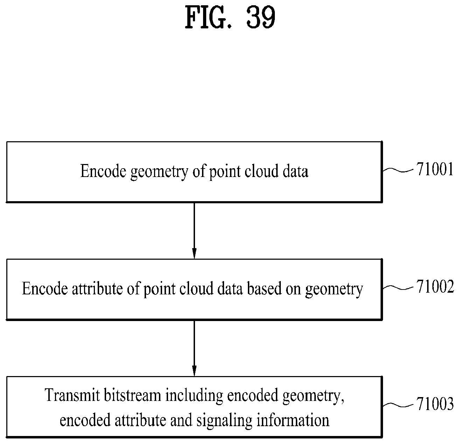

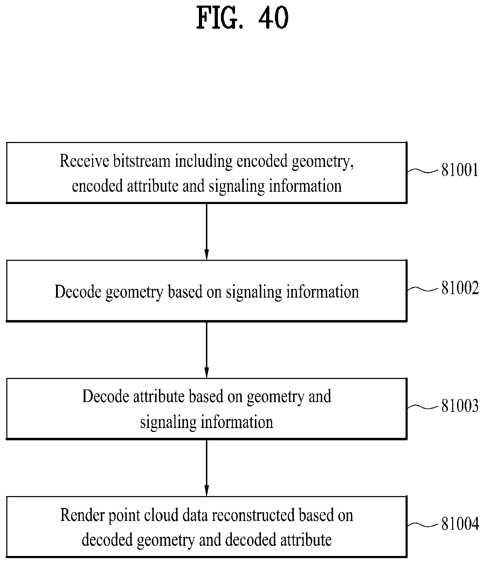

The encoding and decoding of point cloud data using the layer groups and subgroups of FIG. 23 may be performed by the transmission/reception devices of FIG. 1, the encoding and decoding of FIG. 2, the transmission device/method of FIG. 3, the reception device/method of FIG. 7, the transmission/reception device/method of FIGS. 8 and 9, the devices of FIG. 10, the transmission/reception devices of FIGS. 30 and 32, and the transmission/reception methods of FIGS. 39 and 40.

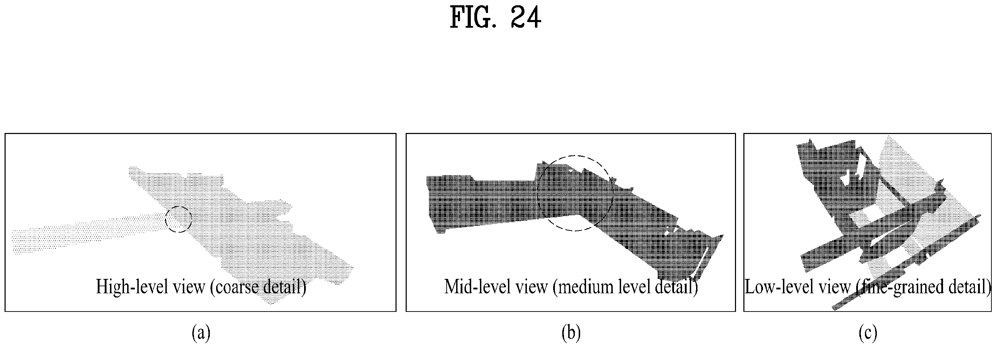

FIGS. 24-(a) to 24-(c) illustrate representations of layer group-based point cloud data according to embodiments.

Devices/methods according to embodiments may provide efficient access to large-scale point cloud data or dense point cloud data through layer group slicing based on scalability and spatial access capabilities. Point cloud data may take a significant amount of time to render or display content due to the high number of points and the large size of the data. Therefore, as an alternative approach, the level of detail may be adjusted based on the viewer's interest. For example, when the viewer is far away from a scene or object, structural or global region information is more important than local detailed information. On the other hand, when the viewer moves closer to a specific region or object, detailed information about the ROI is needed. Using an adaptive approach, the renderer according to embodiments may efficiently provide data of sufficient quality to the viewer. FIGS. 24-(a) to 24-(c) illustrate an example of increasing detail for three levels of viewing distance that changes based on ROI.

The high-level view in FIG. 24-(a) shows a coarse detail, the mid-level view in FIG. 24-(b) shows a medium-level detail, and the low-level view in FIG. 24-(c) shows a fine-grained detail.

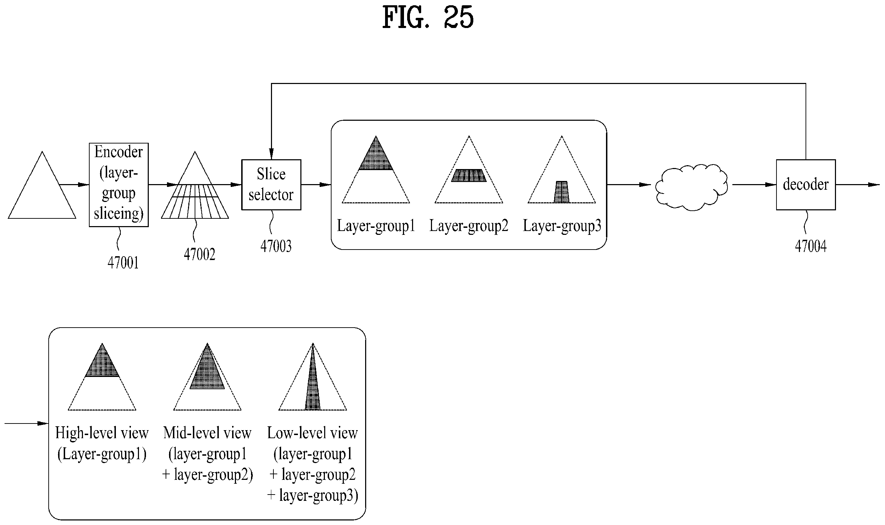

FIG. 25 illustrates a point cloud data transmission/reception device/method according to embodiments.

Multi-resolution ROI may be supported when layer group slicing is used to generate a G-PCC bitstream.

Referring to FIG. 25, multi-resolution ROIs may be supported by the scalability and spatial accessibility of hierarchical slicing. In FIG. 25, the encoder 47001 at the transmitting side may generate bitstream slices of spatial subgroups of each layer group or bitstream slices of octree layer groups. Upon request, slices matching the ROI of each resolution are selected and transmitted to the receiving side. The size of the entire bitstream is reduced compared to the tile-based approach, as it does not include details beyond the requested ROI. At the receiving side, the decoder 47004 may combine the slices to produce three outputs, for example, 1) a high-level view output from a layer group; 2) a mid-level view output from selected subgroups of layer group 1 and layer group 2; and 3) a low-level view output of good quality details from selected subgroups of layer groups 2 and 3 and layer group 1. The outputs may be generated progressively, and therefore the receiver may provide a viewing experience such as zooming that progressively increases the resolution from the high-level view to the low-level view.

The encoder 47001 may correspond to a geometry encoder and/or an attribute encoder as a point cloud encoder according to embodiments. The encoder may slice the point cloud data based on layer groups (or groups). A layer may be referred to as a depth of a tree, a level of LOD, or the like. As shown in part 47002, the depth of the octree of the geometry and/or the level of the attribute layer may be divided into layer groups (or subgroups).

The slice selector 47003, in connection with the encoder 47001, may select a segmented slice (or sub-slices) and selectively and partially transmit data such as layer group 1 to layer group 3.

The decoder 47004 may decode the selectively and partially transmitted point cloud data. For example, it may decode layer group 1 (which has a high depth/layer/level or an index of 0, or is close to the root) for the high-level view. Also, decoding may be performed by increasing the index of the depth/level over layer group 1 alone based on layer group 1 and layer group 2 for the mid-level view. Further, decoding may be performed based on layer group 1 to layer group 3 for the low-level view.

Referring to FIG. 25, the encoder 47001 according to the embodiments may receive point cloud data as input and slice the same into layer groups. That is, the point cloud data may be hierarchically structured and divided into layer groups. The hierarchical structure may refer to an octree structure or a level of detail (LoD). Part 47002 represents the point cloud data divided into layer groups. The slice selector 47003 may select layer groups (or corresponding slices), and the selected slices are transmitted to the decoder 47004 at the receiving side. The decoder 47004 may reconstruct only layer group 1, reconstruct layer groups 1 and 2, or reconstruct all received layer groups by combining the received slices as desired by the user. The layer groups are hierarchical and have different levels of detail. Reconstructing only layer group 1 may result in a broader range of reconstruction and coarse detail. Reconstructing all layer groups 1 to 3 may result in a narrower range of reconstruction and fine detail.

Scalable coding and decoding of geometry data has been described above.

According to embodiments, scalable coding and decoding may also be applied to attribute data.

The present disclosure describes a layer-based attribute compression method for improving the transmission efficiency of scalable attribute compression.

That is, according to the present disclosure, LoD generation and nearest neighbor (NN) search may be performed based on scalable positions.

In particular, the present disclosure proposes a method for increasing the efficiency of scalable attribute coding by removing the dependency of attribute coding on a coded geometry layer when scalable attribute coding is used. The method proposed herein may be related to LoD generation and/or NN search during scalable attribute coding or decoding. More generally, it may be used in scalability-based applications where only some of the coding layers are decoded.

To further enhance the effects of the present disclosure, it may be used together with a slicing technique (e.g., layer group slicing) that divides and delivers the geometry/attribute bitstream.

In one embodiment, LoD generation and NN search in the transmission device of the present disclosure is performed by the LoD generator 30009 of FIG. 3 or the prediction/lifting/RAHT transform processor 8009 of FIG. 8. This is intended to provide understanding for those skilled in the art, and the LoD generation and NN search may be performed by respective blocks or modules. Further, in one embodiment, the LoD generation and NN search may be performed by the LoD generator 7008 of FIG. 7 or the prediction/lifting/RAHT inverse transform processor 9009 of FIG. 9 in the reception device of the present disclosure. This is intended to provide understanding for those skilled in the art, and the LoD generation and NN search may be performed by respective blocks or modules

By configuring and transmitting/receiving independent slices according to the meaning of the coding unit, such as tree-level, LOD or layer group, as in the present disclosure, scalable attribute coding eliminates the need for full layer geometry during decoding. In other words, only the geometry of the corresponding layer rather than the full layer is needed for scalable attribute coding.

For simplicity, it is assumed in the present disclosure that the geometry encoder generates a tree structure and that the attribute encoder generates LoDs based on the tree structure, as shown in FIG. 14. That is, FIG. 14 illustrates an octree structure in which the depth level of the root node is set to 0 and the depth level of the leaf node is set to 7.

In the octree structure of FIG. 14, LoD 0 includes levels from the root node level to octree depth level 4, LoD 1 includes levels from the root node level up to octree depth level 5, and LoD 2 includes levels from the root node level to octree depth level 7.

In other words, the attribute encoder generates one or more LoDs based on the octree structure. In this case, $LOD_0$ is a set composed of points having the longest distances therebetween. As the index increases by I, the distance between points belonging to $LOD_I$ decreases. In the present disclosure, a group of different LODs may be referred to as an $LOD_I$ set.

Once the $LOD_I$ set is generated, the attribute encoder may find X (>0) nearest neighbor (NN) points in a group having the same or lower LOD (i.e., a group in which the distance between nodes is large) based on the $LOD_I$ set and register the same as a neighbor point set in the predictor. X is the maximum number of points that may be configured as neighbors, which is 3 as an example in the present disclosure.

Referring to FIG. 6 as an example, $LOD_0$ and $LOD_1$ are searched for the neighbors of P3 belonging to $LOD_1$. For example, when the maximum number X of points that may be configured as neighbors is 3, the three NN nodes around P3 may be P2, P4, and P6. These three nodes are registered as a set of neighbor points in the predictor of P3.

As described above, every point in the point cloud data may have a predictor. An attribute encoder according to embodiments may compress and transmit attribute information based on the neighbor points registered in the predictors.

As described above, for attribute compression, the attribute encoder of the transmission device generates LODs based on the points of the reconstructed geometry and searches for the nearest neighbor points for a point to be encoded based on the generated LODs. Similarly, the attribute decoder of the reception device also generates LODs and searches for the nearest neighbor points for a point to be decoded based on the generated LODs.

Assuming that layer group-based slicing is performed on the octree structure of FIG. 14 as shown in FIGS. 22-(a), LoD0 may include layer group 1, LoD1 may include layer groups 1 and 2, and LoD2 may include layer groups 1 to 3. In other words, the attribute encoder may generate LoD0 based on layer group 1, generate LoD1 based on layer groups 1 and 2, and generate LoD2 based on layer groups 1 to 3.

According to embodiments, the terms layer, depth, level, and depth level may be used interchangeably in the octree structure.

For example, when only layer groups 1 and 2 are transmitted from the transmitting side, the layers transmitted in the octree structure as shown FIGS. 22-(a) are layers 0 to 5 (i.e., five layers), and the skipped layers are layers 6 and 7 (i.e., two layers). In other words, when attribute scalability is used on a slice-by-slice basis, the scalable levels provided will be three levels, LoD0, LoD1, and LoD2, and the scalable levels that may be provided by the octree structure in the decoding operation will be eight levels, from the root level (or depth or layer) to the leaf level (or depth or layer).

According to embodiments, when LoD0 to LoD2 are configured as separate slices for attributes, the transmission and/or reception device may select only LoD0, only LoD1, or only LoD2 for attribute scalable processing. For example, when there are three LoDs, LoD0 may be used to represent a low-resolution detail, LoD1 may be used to represent a medium-resolution detail, and LoD2 may be used to represent a high-resolution detail.

In this case, LoD generation and neighbor point selection are performed based on the positions of points in the point cloud data provided by the geometry encoder.

In other words, LoD generation and neighbor point selection are performed based on the full layer geometry information.

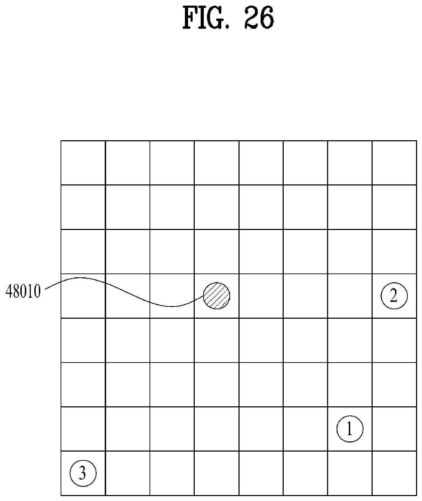

FIGS. 26 to 29 illustrate point cloud data in 2D space for simplicity, which may be expanded to 3D space by adding a z-axis.

FIG. 26 is a diagram illustrating an example of NN search performed based on full layer geometry information according to embodiments. That is, FIG. 26 illustrates an example of NN search performed based on full layer geometry information in 2D space with point cloud data presented in the 2D space, and. In the geometry grid in FIG. 26, the lattices represent the positions of the points (also called geometry positions), and the circle in a lattice represents an occupied node.

In FIG. 26, assuming that node 48010 is the target node of neighbor search, ①, ②, and ③ may be the NNs of node 48010 found by distance-based neighbor search. Here, ①, ②, and ③ may be a sequence of NN nodes. In this case, depending on the NN search method, neighboring nodes may be selected based on Morton code order, or neighboring nodes may be found based on Euclidian distance.

When LODs are configured as separate slices as described above, the attribute encoder of the transmission device and/or the attribute decoder of the reception device may select some of the LODs. For example, when LoD0 to LoD2 are configured as separate slices, as shown in FIG. 14, the attribute encoder of the transmission device and/or the attribute decoder of the reception device may select only LoD0, only LoD1, or only LoD2 for scalable processing. Even in this case, the NN search in FIG. 26 is performed based on the full layer (or full depth) geometry information.

For example, suppose that the decoder processes only a part of the geometry (i.e., it does not decode some high-resolution details). In other words, it may be assumed that the decoder selects and decodes LoD1 (i.e., the medium-resolution detail) or that it performs decoding, skipping one lower layer of the octree structure.

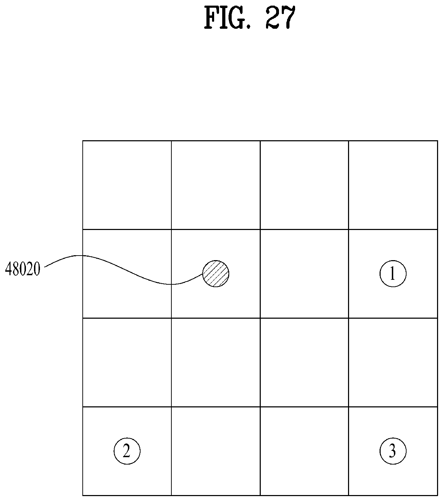

In this case, the neighbor search target node 48020 may be determined to be positioned in a down-sampled geometry grid, as shown in FIG. 27, and the NN nodes (or points) may be obtained based on Euclidean distances. In other words, in FIG. 27, the lattices represent the positions (or geometry positions) of the points, and the circle in the grid represents an occupied node.

FIG. 27 is a diagram illustrating an example of NN search performed in a geometry grid that is down-sampled by the difference between a full-depth LoD or layer group and an LoD or layer group to which a node that is currently to be subjected to NN search belongs.

In other words, the attribute encoder of the transmission device performs the NN search in the geometry grid shown in FIG. 26, while the attribute decoder of the reception device performs the NN search in the down-sampled geometry grid shown in FIG. 27.

This is because the attribute decoder of the reception device does not use the high-resolution detail of geometry positions, which results in geometry repositioning and changes in relative distance between nodes.

For example, it may be seen that the position of the neighbor search target node 48010 in FIG. 26 is lower than that of the neighbor search target node 48020 in FIG. 27. It may also be seen that the order and positions of the NN points are also changed.

That is, the nearest neighbor node in FIG. 26 may be determined to be the farthest neighbor node in FIG. 27. In this case, the neighbor candidate considered by the attribute encoder of the transmission device may be different from the neighbor candidate considered by the attribute decoder of the reception device. The order of the NN nodes may change even when the neighbor candidates are the same. In this case, decoder prediction errors may occur in predicting transforms that perform attribute prediction from one or more neighbor nodes. In other words, this may be caused by differences in the geometry grid of the transmission device and the geometry grid of the reception device because the attribute decoder of the reception device configures the LoD and performs NN search using the layers except the skipped layer.

In one embodiment, to address this issue, the attribute encoder of the transmission device performs an NN search (i.e., an NN distance) taking into account the skip layer (also referred to as a missing layer), and the attribute decoder of the reception device also performs an NN search (i.e., an NN distance) taking into account the skip layer (also referred to as a missing layer) in the same manner as the NN search performed by the attribute encoder of the transmission device.

In other words, in the case of scalable transmission, the attribute encoder of the transmission device creates a down-sampled geometry grid (i.e., tree depth) by performing down-sampling with the layers except the skipped layer, and correct the positions of the occupied nodes including the neighbor search target node by performing up-sampling based on the skip layer-related information. In other words, up-sampling is performed with a full depth geometry grid based on the skip layer-related information to correct the positions of the nodes. Then, an NN search is performed based on the corrected positions to obtain the distances between the nodes.

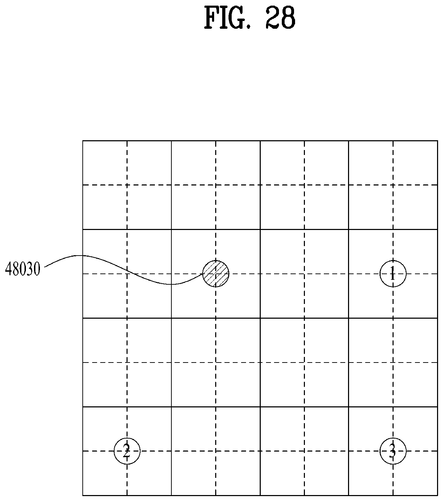

FIG. 28 is a diagram illustrating an example of NN search performed in a geometry grid position-corrected with the full-depth according to embodiments. That is, FIG. 28 illustrates an example in which the positions of the nodes are corrected (as indicated by dotted lines) through up-sampling in a down-sampled geometry grid (i.e., sold lines) on the assumption that one lower layer is missing, and distances between nodes are obtained based on the corrected positions.

In FIG. 28, 48030 may be a neighbor search target node in the position-corrected geometry grid, and ①, ②, and ③ may be a sequence of NN points of the neighbor search target node in the position-corrected geometry grid.

More specifically, down-sampling is performed based on the LoD or layer group in the tree structure (e.g., octree structure) to which the node for which NN search is to be performed belongs. Then, up-sampling may be performed based on signaling information (e.g., root_bbox origin/root_bbox_size/max_geometry_level_log2 information). The signaling information (e.g., root_bbox origin/root_bbox_size/max_geometry_level_log2 information) may be included in a sequence parameter set and/or an attribute parameter set to be transmitted/received. This is merely an example, and the information may be included in a tile inventory (or tile parameter set) and/or an attribute slice header to be transmitted/received. For simplicity, the signaling information (e.g., root_bbox_origin/root_bbox_size/max_geometry_level_log2 information) is referred to as skip layer-related information. The LoD generation and NN search described above may be applied equally to the attribute encoder of the transmission device and the attribute decoder of the reception device. In other words, the resolution detail of the NN search performed by the attribute encoder of the transmission device is the same as the resolution detail of the NN search performed by the attribute decoder of the reception device.

In other words, when scalable transmission and/or scalable decoding is performed, by applying the same LoD generation and NN search performed by the attribute encoder of the transmission device to the attribute decoder of the reception device, the neighbor candidates considered by the attribute encoder of the transmission device and the neighbor candidates considered by the attribute decoder of the reception device are not different, and the order of the nodes is not different. Therefore, decoder prediction errors do not occur in prediction transformations that perform attribute prediction from neighbor nodes.

In the present disclosure, the skip layer-related information (root_bbox origin/root_bbox size and/or max_geometry_level_log2 information) indicates the origin (origin position) of the bounding box and the size of the bounding box in the case of full geometry.

In other words, the skip layer-related information is necessary for the encoder or decoder to create the down-sampled geometry grid (i.e., tree depth) in the form of a full geometry grid when performing the NN search. In other words, it is the information needed to create the dotted grid in FIG. 28. In other words, in the present disclosure, the encoder and decoder create a down-sampled geometry grid by performing down-sampling with the layers except the skipped layer, and correct the positions of the occupied nodes including the neighbor search target node by performing up-sampling based on the skip layer-related information. Then, an NN search is performed based on the corrected positions to obtain the NN of the neighbor search target node.

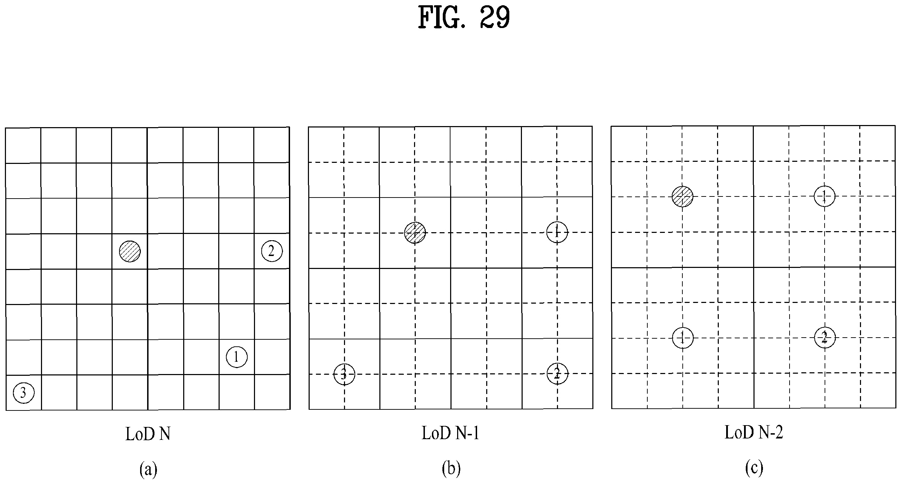

FIGS. 29-(a) to 29-(c) are diagrams illustrating an example of NN search performed in a geometry grid according to embodiments. The LOD is a level of detail in the point cloud content. Decrease in LOD value indicates a lower detail of the point cloud content, while increase in LOD value indicates a higher detail of the point cloud content. Accordingly, FIG. 29-(a) has the highest detail (e.g., high-resolution detail) and FIG. 29-(c) has the lowest detail (e.g., low-resolution detail).

When FIG. 29-(a) is a diagram showing an example NN search result in a geometry grid sub-sampled based on LoD N (i.e., full-layer geometry), FIG. 29-(b) is a diagram showing an example NN search result obtained after position correction is performed in consideration of Lod N (i.e., full-layer geometry) in a geometry grid down-sampled based on LoD N-1, and FIG. 29-(c) is a diagram showing an example NN search result obtained after position correction is performed in consideration of LoD N in a geometry grid down-sampled based on LoD N-2.

In other words, when the distance between nodes is obtained using the method described above, the same node position may be corrected to a position in a full-depth (or layer) sub-sampled geometry grid as shown in FIG. 29-(a) according to LoDs.

Below is code that shows an example of implementation of NN search using the proposed method.

The code below may be broken down into two main steps (STEP 1/2).

STEP 1: The code below is an example of layer group slicing, which assumes that the skip layer is applied on a layer group basis. In this case, presence up to the maximum LoD (max lod) within the layer group is guaranteed, and thus the geometry resolution up to the tree level corresponding to the max lod may be used to use available detail information to a maximum degree. When layer group slicing is not used and the slices are divided and delivered according to each LoD, the slicing may be disabled for detail below the geometry tree level that matches the LoD containing the node for which the NN search is performed (48020 in the example above) (i.e., >> shiftLayerGroup in the code below).

STEP 2: This may involve up-sampling the down-sampled geometry grid back to the original geometry grid (i.e., the geometry grid (or position) corresponding to the full layer (or full depth)), which may serve to provide a common ground for comparing NN distances calculated at different LoDs in the same geometry grid (i.e., << (shiftLayerGroup + treeLvlGap) in the code below).

In other words, the code below includes up-sampling the down-sampled geometry grid back to the original geometry grid (i.e., the geometry grid (or position) corresponding to the full layer (or full depth)) by the difference between the LoD or layer group at full depth and the LoD or layer group to which the node for which the NN search is currently to be performed belongs.

According to embodiments, the code below may use a method of correcting the positions to the left, front, or bottom in the down-sampled geometry grid. Depending on the application, a method of correcting the position to the centroid (FIG. 28 and/or FIG. 29) may also be used.

According to embodiments, in the code below, treeLvlGap is a parameter for geometry grid up-sampling, and shiftLayerGroup is a parameter for geometry grid down-sampling. Also, rootNodeSizeLog2.max() indicates the maximum tree level transmitted by the encoder, and rootNodeSizeLog2_coded.max() indicates the maximum tree level decoded by the decoder. In addition, maxNumLayers_curLayerGroup indicates the maximum number of layers for the current layer group, and maxNumLayers indicates the maximum number of layers coded.

In other words, the parameter treeLvlGap for geometry grid up-sampling may be obtained by subtracting rootNodeSizeLog2_coded.max() from rootNodeSizeLog2.max(). For example, when rootNodeSizeLog2.max() is 8 and rootNodeSizeLog2_coded.max() is 6, treeLvlGap may be 2. That is, the number of skip layers may be 2.

The code below shows an example implementation of a function for search for NNs according to embodiments.

```
inline void
computeNearestNeighbors(
const AttributeParameterSet& aps,
const AttributeBrickHeader& abh,
const std::vector<MortonCodeWithIndex>& packedVoxel,
const std::vector<uint32_t>& retained,
int32_t startIndex,
int32_t endIndex,
int32_t lodIndex,
std::vector<uint32_t>& indexes,
std::vector<PCCPredictor>& predictors,
std::vector<uint32_t>& pointIndexToPredictorIndex,
int32_t& predIndex,
MortonIndexMap3d& atlas
, const LayerGroupSlicingParams& layerGroupParams
, const int curLayerGroup)
{
constexpr auto searchRangeNear = 2;
constexpr auto bucketSizeLog2 = 5;
constexpr auto bucketSize = 1 << bucketSizeLog2;
constexpr auto bucketSizeMinus1 = bucketSize - 1;
constexpr auto levelCount = 3;

const int32_t shiftBits = aps.scalable_lifting_enabled_flag
? 1 + lodIndex
: 1 + aps.dist2 + abh.attr_dist2_delta + lodIndex;
```

```
const int32_t shiftBits3 = 3 * shiftBits;
const int32_t log2CubeSize = atlas.cubeSizeLog2();
const int32_t atlasBits = 3 * log2CubeSize;
// NB: when the atlas boundary is greater than 2^63, all points belong
//     to a single atlas.   The clipping is necessary to avoid undefined
//     behaviour of shifts greater than or equal to the word size.
const int32_t atlasBoundaryBit = std::min(63, shiftBits3 + atlasBits);

const int32_t retainedSize = retained.size();
const int32_t indexesSize = endIndex - startIndex;
const auto rangeInterLod = aps.inter_lod_search_range;
const auto rangeIntraLod = aps.intra_lod_search_range;
static const uint8_t kNeighOffset[27] = {
7,  // { 0,  0,  0} 0
3,  // {-1,  0,  0} 1
5,  // { 0, -1,  0} 2
6,  // { 0,  0, -1} 3
35, // { 1,  0,  0} 4
21, // { 0,  1,  0} 5
14, // { 0,  0,  1} 6
28, // { 0,  1,  1} 7
42, // { 1,  0,  1} 8
49, // { 1,  1,  0} 9
12, // { 0, -1,  1} 10
10, // {-1,  0,  1} 11
17, // {-1,  1,  0} 12
20, // { 0,  1, -1} 13
34, // { 1,  0, -1} 14
33, // { 1, -1,  0} 15
4,  // { 0, -1, -1} 16
2,  // {-1,  0, -1} 17
1,  // {-1, -1,  0} 18
56, // { 1,  1,  1} 19
24, // {-1,  1,  1} 20
40, // { 1, -1,  1} 21
48, // { 1,  1, -1} 22
32, // { 1, -1, -1} 23
16, // {-1,  1, -1} 24
```

```
8,   // {-1, -1,  1} 25
0// {-1, -1, -1} 26
};
int treeLvlGap = 0; // Initialize geometry grid up-sampling parameter to 0
int  shiftLayerGroup  =  0;  //  Initialize  geometry  grid  down-sampling
parameter to 0
if (layerGroupParams.layerGroupEnabledFlag) {
treeLvlGap       =       layerGroupParams.rootNodeSizeLog2.max()       -
layerGroupParams.rootNodeSizeLog2_coded.max();
// rootNodeSizeLog2.max(): Encoder maximum tree level
// rootNodeSizeLog2_coded.max():Decoder maximum tree level


int maxNumLayers_curLayerGroup = 0; // // Maximum number of layers
for the current layer-group
int maxNumLayers = 0; // Maximum number of coded layers
for (int i = 0; i <= layerGroupParams.numLayerGroupsMinus1; i++) {
maxNumLayers += layerGroupParams.numLayersPerLayerGroup[i];
if(i <= curLayerGroup)
maxNumLayers_curLayerGroup                                          +=
layerGroupParams.numLayersPerLayerGroup[i];
}


shiftLayerGroup = maxNumLayers - maxNumLayers_curLayerGroup;
}


// The point positions biased by lodNieghBias
// todo(df): preserve this
std::vector<point_t> biasedPos;
biasedPos.reserve(packedVoxel.size());
for (const auto& src : packedVoxel) {
auto point = clacIntermediatePosition(
aps.scalable_lifting_enabled_flag, lodIndex, src.position);
biasedPos.push_back(times((point      >>      shiftLayerGroup)      <<
(shiftLayerGroup + treeLvlGap), aps.lodNeighBias));
}


atlas.reserve(retainedSize);
std::vector<int32_t> neighborIndexes;
```

```
neighborIndexes.reserve(64);

BoxHierarchy<bucketSizeLog2, levelCount> hBBoxes;
hBBoxes.resize(retainedSize);
for (int32_t i = 0, b = 0; i < retainedSize; ++b) {
hBBoxes.insert(biasedPos[retained[i]], i);
++i;
for (int32_t k = 1; k < bucketSize && i < retainedSize; ++k, ++i) {
hBBoxes.insert(biasedPos[retained[i]], i);
}
}
hBBoxes.update();

BoxHierarchy<bucketSizeLog2, levelCount> hIntraBBoxes;
if (lodIndex >= aps.intra_lod_prediction_skip_layers) {
hIntraBBoxes.resize(indexesSize);
for (int32_t i = startIndex, b = 0; i < endIndex; ++b) {
hIntraBBoxes.insert(biasedPos[indexes[i]], i - startIndex);
++i;
for (int32_t k = 1; k < bucketSize && i < endIndex; ++k, ++i) {
hIntraBBoxes.insert(biasedPos[indexes[i]], i - startIndex);
}
}
hIntraBBoxes.update();
}

const auto bucketSize0Log2 = hBBoxes.bucketSizeLog2(0);
const auto bucketSize1Log2 = hBBoxes.bucketSizeLog2(1);
const auto bucketSize2Log2 = hBBoxes.bucketSizeLog2(2);

int64_t curAtlasId = -1;
int64_t lastMortonCodeShift3 = -1;
int64_t cubeIndex = 0;
for (int32_t i = startIndex, j = 0; i < endIndex; ++i) {
int32_t localIndexes[3] = { -1, -1, -1 };
int64_t minDistances[3] = { std::numeric_limits<int64_t>::max(),
std::numeric_limits<int64_t>::max(),
std::numeric_limits<int64_t>::max() };
```

```
const int32_t index = indexes[i];
const auto& pv = packedVoxel[index];
const int64_t mortonCode = pv.mortonCode;
const int64_t pointAtlasId = mortonCode >> atlasBoundaryBit;
const int64_t mortonCodeShiftBits3 = mortonCode >> shiftBits3;
const int32_t pointIndex = pv.index;
const auto bpoint = biasedPos[index];
indexes[i] = pointIndex;
auto& predictor = predictors[--predIndex];
pointIndexToPredictorIndex[pointIndex] = predIndex;

if (retainedSize) {
while (j < retainedSize − 1
&& mortonCode >= packedVoxel[retained[j]].mortonCode) {
++j;
}
// If the position of the current point is outside the atlas, update
if (curAtlasId != pointAtlasId) {
atlas.clearUpdates();
curAtlasId = pointAtlasId;
while (
cubeIndex < retainedSize
&& (packedVoxel[retained[cubeIndex]].mortonCode >> atlasBoundaryBit)
== curAtlasId) {
atlas.set(
packedVoxel[retained[cubeIndex]].mortonCode >> shiftBits3,
cubeIndex);
++cubeIndex;
}
}

if (lastMortonCodeShift3 != mortonCodeShiftBits3) {
lastMortonCodeShift3 = mortonCodeShiftBits3;
const auto basePosition = morton3dAdd(mortonCodeShiftBits3, -1ll);
neighborIndexes.resize(0);
for (int32_t n = 0; n < 27; ++n) {
const auto neighbMortonCode =
```

```
morton3dAdd(basePosition, kNeighOffset[n]);
if ((neighbMortonCode >> atlasBits) != curAtlasId) {
continue;
}
const auto range = atlas.get(neighbMortonCode);
for (int32_t k = range.start; k < range.end; ++k) {
neighborIndexes.push_back(k);
}
}
}
// When NN search is performed based on points belonging to the higher
LoD
// Neighbor search for points in the 27 positions where faces, lines, and
points neighbor each other
for (const auto k : neighborIndexes) {
updateNearestNeigh(
bpoint, biasedPos[retained[k]], k, localIndexes, minDistances);
}
// Neighbor search for points within a certain range of morton code order.
if (localIndexes[2] == -1) {
const auto center = localIndexes[0] == -1 ? j : localIndexes[0];
const auto k0 = std::max(0, center - rangeInterLod);
const auto k1 = std::min(retainedSize - 1, center + rangeInterLod);
// NN search for points at close distance : In the range of -searchRangeNear
to searchRangeNear
// Center position
updateNearestNeighWithCheck(
bpoint, biasedPos[retained[center]], center, localIndexes,
minDistances);

for (int32_t n = 1; n <= searchRangeNear; ++n) {
// Positive direction from center in morton code: 1 to searchRangeNear
const int32_t kp = center + n;
if (kp <= k1) {
updateNearestNeighWithCheck(
bpoint, biasedPos[retained[kp]], kp, localIndexes, minDistances);
}
// Negative direction from center in morton code: -1 to - searchRangeNear
```

```
const int32_t kn = center - n;
if (kn >= k0) {
updateNearestNeighWithCheck(
bpoint, biasedPos[retained[kn]], kn, localIndexes, minDistances);
}
}


const int32_t p1 =
std::min(retainedSize - 1, center + searchRangeNear + 1);
const int32_t p0 = std::max(0, center - searchRangeNear - 1);


// NN search for points at far distance
// Positive direction: searchRangeNear+1 to k1
// search p1...k1
const int32_t b21 = k1 >> bucketSize2Log2;
const int32_t b20 = p1 >> bucketSize2Log2;
const int32_t b11 = k1 >> bucketSize1Log2;
const int32_t b10 = p1 >> bucketSize1Log2;
const int32_t b01 = k1 >> bucketSize0Log2;
const int32_t b00 = p1 >> bucketSize0Log2;
for (int32_t b2 = b20; b2 <= b21; ++b2) {
if (
localIndexes[2] != -1
&& hBBoxes.bBox(b2, 2).getDist1(bpoint) >= minDistances[2])
continue;


const auto alignedIndex1 = b2 << bucketSizeLog2;
const auto start1 = std::max(b10, alignedIndex1);
const auto end1 = std::min(b11, alignedIndex1 + bucketSizeMinus1);
for (int32_t b1 = start1; b1 <= end1; ++b1) {
if (
localIndexes[2] != -1
&& hBBoxes.bBox(b1, 1).getDist1(bpoint) >= minDistances[2])
continue;


const auto alignedIndex0 = b1 << bucketSizeLog2;
const auto start0 = std::max(b00, alignedIndex0);
const auto end0 = std::min(b01, alignedIndex0 + bucketSizeMinus1);
```

```
for (int32_t b0 = start0; b0 <= end0; ++b0) {
if (
localIndexes[2] != -1
&& hBBoxes.bBox(b0, 0).getDist1(bpoint) >= minDistances[2])
continue;


const int32_t alignedIndex = b0 << bucketSizeLog2;
const int32_t h0 = std::max(p1, alignedIndex);
const int32_t h1 = std::min(k1, alignedIndex + bucketSizeMinus1);
for (int32_t k = h0; k <= h1; ++k) {
updateNearestNeighWithCheck(
bpoint, biasedPos[retained[k]], k, localIndexes,
minDistances);
}
}
}
}


// Negative direction: p1 to -searchRangeNear - 1
// search k0...p1
const int32_t c21 = p0 >> bucketSize2Log2;
const int32_t c20 = k0 >> bucketSize2Log2;
const int32_t c11 = p0 >> bucketSize1Log2;
const int32_t c10 = k0 >> bucketSize1Log2;
const int32_t c01 = p0 >> bucketSize0Log2;
const int32_t c00 = k0 >> bucketSize0Log2;
for (int32_t c2 = c21; c2 >= c20; --c2) {
if (
localIndexes[2] != -1
&& hBBoxes.bBox(c2, 2).getDist1(bpoint) >= minDistances[2])
continue;


const auto alignedIndex1 = c2 << bucketSizeLog2;
const auto start1 = std::max(c10, alignedIndex1);
const auto end1 = std::min(c11, alignedIndex1 + bucketSizeMinus1);
for (int32_t c1 = end1; c1 >= start1; --c1) {
if (
localIndexes[2] != -1
```

```
        && hBBoxes.bBox(c1, 1).getDist1(bpoint) >= minDistances[2])
        continue;

        const auto alignedIndex0 = c1 << bucketSizeLog2;
        const auto start0 = std::max(c00, alignedIndex0);
        const auto end0 = std::min(c01, alignedIndex0 + bucketSizeMinus1);
        for (int32_t c0 = end0; c0 >= start0; --c0) {
        if (
        localIndexes[2] != -1
        && hBBoxes.bBox(c0, 0).getDist1(bpoint) >= minDistances[2])
        continue;

        const int32_t alignedIndex = c0 << bucketSizeLog2;
        const int32_t h0 = std::max(k0, alignedIndex);
        const int32_t h1 = std::min(p0, alignedIndex + bucketSizeMinus1);
        for (int32_t k = h1; k >= h0; --k) {
        updateNearestNeighWithCheck(
        bpoint, biasedPos[retained[k]], k, localIndexes,
        minDistances);
        }
        }
        }
        }
        }

        predictor.neighborCount = (localIndexes[0] != -1)
        + (localIndexes[1] != -1) + (localIndexes[2] != -1);

        for (int32_t h = 0; h < predictor.neighborCount; ++h)
        localIndexes[h] = retained[localIndexes[h]];
        }

        // When NN search is performed for points belonging to the same LoD as
the current point
        // Only points previously generated from the current point are available (1
to searchRangeNear).
        if (lodIndex >= aps.intra_lod_prediction_skip_layers) {
        const int32_t k00 = i + 1;
```

```
const int32_t k01 = std::min(endIndex - 1, k00 + searchRangeNear);
for (int32_t k = k00; k <= k01; ++k) {
updateNearestNeigh(
bpoint, biasedPos[indexes[k]], indexes[k], localIndexes,
minDistances);
}
const int32_t k0 = k01 + 1 - startIndex;
const int32_t k1 =
std::min(endIndex - 1, k00 + rangeIntraLod) - startIndex;


// search k0...k1
const int32_t b21 = k1 >> bucketSize2Log2;
const int32_t b20 = k0 >> bucketSize2Log2;
const int32_t b11 = k1 >> bucketSize1Log2;
const int32_t b10 = k0 >> bucketSize1Log2;
const int32_t b01 = k1 >> bucketSize0Log2;
const int32_t b00 = k0 >> bucketSize0Log2;
for (int32_t b2 = b20; b2 <= b21; ++b2) {
if (
localIndexes[2] != -1
&& hIntraBBoxes.bBox(b2, 2).getDist1(bpoint) >= minDistances[2])
continue;


const auto alignedIndex1 = b2 << bucketSizeLog2;
const auto start1 = std::max(b10, alignedIndex1);
const auto end1 = std::min(b11, alignedIndex1 + bucketSizeMinus1);
for (int32_t b1 = start1; b1 <= end1; ++b1) {
if (
localIndexes[2] != -1
&& hIntraBBoxes.bBox(b1, 1).getDist1(bpoint) >= minDistances[2])
continue;


const auto alignedIndex0 = b1 << bucketSizeLog2;
const auto start0 = std::max(b00, alignedIndex0);
const auto end0 = std::min(b01, alignedIndex0 + bucketSizeMinus1);
for (int32_t b0 = start0; b0 <= end0; ++b0) {
if (
```

```
localIndexes[2] != -1
&& hIntraBBoxes.bBox(b0, 0).getDist1(bpoint) >= minDistances[2])
continue;

const int32_t alignedIndex = b0 << bucketSizeLog2;
const int32_t h0 = std::max(k0, alignedIndex);
const int32_t h1 = std::min(k1, alignedIndex + bucketSizeMinus1);
for (int32_t h = h0; h <= h1; ++h) {
const int32_t k = startIndex + h;
updateNearestNeigh(
bpoint, biasedPos[indexes[k]], indexes[k], localIndexes,
minDistances);
}
}
}
}
}


predictor.neighborCount = std::min(
aps.num_pred_nearest_neighbours_minus1 + 1,
(localIndexes[0] != -1) + (localIndexes[1] != -1)
+ (localIndexes[2] != -1));
for (int32_t h = 0; h < predictor.neighborCount; ++h) {
auto& neigh = predictor.neighbors[h];
neigh.predictorIndex = packedVoxel[localIndexes[h]].index;
neigh.weight              =              (biasedPos[localIndexes[h]]              -
bpoint).getNorm2<int64_t>();
}


// Prune neighbours based upon max neigh range.
if (aps.scalable_lifting_enabled_flag) {
int maxNeighRange = aps.max_neigh_range_minus1 + 1;
int64_t maxDistance = 3ll * maxNeighRange << 2 * lodIndex;
if (aps.lodNeighBias == 1) {
predictor.pruneDistanceGt(maxDistance);
}
else {
auto curPt = clacIntermediatePosition(true, lodIndex, pv.position);
```

```
for (int h = 1; h < predictor.neighborCount; h++) {
auto neighPt = clacIntermediatePosition(
true, lodIndex, packedVoxel[localIndexes[h]].position);

// Discard this and subsequent points if distance limit exceeded
auto norm2 = (curPt - neighPt).getNorm2<int64_t>();
if (norm2 > maxDistance) {
predictor.neighborCount = h;
break;
}
}
}
}

// Part for obtaining the weight based on distance
if (predictor.neighborCount > 1) {
if (predictor.neighbors[0].weight > predictor.neighbors[1].weight)
std::swap(predictor.neighbors[1], predictor.neighbors[0]);
if (predictor.neighborCount == 3) {
if (predictor.neighbors[1].weight > predictor.neighbors[2].weight) {
std::swap(predictor.neighbors[2], predictor.neighbors[1]);
if (predictor.neighbors[0].weight > predictor.neighbors[1].weight)
std::swap(predictor.neighbors[1], predictor.neighbors[0]);
}
}
}
}
}
```

FIG. 30 is a diagram illustrating another exemplary point cloud transmission device according to embodiments. The elements of the point cloud transmission device illustrated in FIG. 30 may be implemented as hardware, software, processors, and/or combinations thereof.

According to embodiments, the point cloud transmission device may include a data input unit 51001, a signaling processor 51002, a geometry encoder 51003, an attribute encoder 51004, and a transmission processor 51005.

The geometry encoder 51003 and attribute encoder 51004 may perform some or all of the operations described regarding the point cloud video encoder 10002 of FIG. 1, the encoding 20001 of FIG. 2, the point cloud video encoder of FIG. 3, and the point cloud video encoder of FIG. 8.

The data input unit 51001 according to embodiments receives or acquires point cloud data. The data input unit 51001 may perform some or all of operations of the point cloud video acquisition unit 10001 in FIG. 1 or some or all of the operations of the data input unit 8000 in FIG. 8.

The data input section 51001 outputs the positions of the points in the point cloud data to the geometry encoder 51003 and outputs the attributes of the points in the point cloud data to the attribute encoder 51004. In addition, the parameters are output to the signaling processor 51002. According to embodiments, the parameters may be provided to the geometry encoder 51003 and the attribute encoder 51004.

The geometry encoder 51003 constructs an octree based on the positions of the input points and performs geometry compression based on the octree. In this regard, the prediction for geometry compression may be performed in a frame or may be performed between frames. In the present disclosure, the former case is referred to as intra-frame prediction, and the latter case is referred to as inter-frame prediction. The geometry encoder 51003 performs entropy encoding on the compressed geometry information and outputs the encoded information to the transmission processor 51005 in the form of a geometry bitstream.

The geometry encoder 51003 reconstructs the geometry information based on the positions changed through compression, and outputs the reconstructed (or decoded) geometry information to the attribute encoder 51004.

According to embodiments, the geometry encoder 51003 constructs an octree based on the positions of the input points, performs layer group-based slicing in the octree, selects one or more slices, and then compresses the geometry information about the one or more selected slices. The layer group-based slicing and per-slice geometry compression according to the embodiments have been described in detail with reference to FIGS. 11 to 25, and thus a description thereof is skipped below to avoid redundancy.

The attribute encoder 51004 compresses attribute information based on positions for which geometry encoding is not performed and/or reconstructed geometry information. According to an embodiment, the attribute information may be coded using any one or a combination of one or more of RAHT coding, LOD-based predictive transform coding, and lifting transform coding. The attribute encoder 51004 performs entropy encoding on the compressed attribute information and outputs the information to the transmission processor 51005 in the form of an attribute bitstream.

According to embodiments, for scalable transmissions as described above, the attribute encoder 51004 creates a down-sampled geometry grid by performing sampling with the layers except one or more skipped layers, and corrects the positions of the occupied nodes including the neighbor search target node by performing up-sampling based on the skip layer-related information. Then, it performs an NN search based on the corrected positions to obtain the distance between nodes. Then, it performs attribute prediction and compression based on the NN nodes obtained in this way. The positon correction and NN search according to the embodiments have been described in detail with reference to FIGS. 26 to 29, and thus a description thereof will be skipped below to avoid redundancy.

The signaling processor 51002 may generate and/or process signaling information required for encoding/decoding/rendering of the geometry information and attribute information, and provide the same to the geometry encoder 51003, the attribute encoder 51004, and/or the transmission processor 51005. Alternatively, the signaling processor 51002 may be provided with the signaling information generated by the geometry encoder 51003, the attribute encoder 51004, and/or the transmission processor 51005. The signaling processor 51002 may provide information (e.g., head orientation information and/or viewport information) fed back from the reception device to the geometry encoder 51003, the attribute encoder 51004, and/or the transmission processor 51005.

As used herein, the signaling information including the skip layer-related information may be signaled and transmitted at the level of a parameter set (sequence parameter set (SPS), geometry parameter set (GPS), attribute parameter set (APS), tile parameter set (TPS) (or tile inventory), etc.). It may also be signaled and transmitted per coding unit (or compression unit or prediction unit) of each image, such as slice or tile.

The transmission processor 51005 may perform the same or similar operation and/or transmission method as the operation and/or transmission method of the transmission processor 8012 of FIG. 8 and perform the same or similar operation and/or transmission method as the operation and/or transmission method of the transmitter 10003 of FIG. 1. For details, which will not be described below, refer to the description of FIG. 1 or FIG. 8.

The transmission processor 51005 may multiplex the geometry bitstream output from the geometry encoder 51003, the attribute bitstream output from the attribute encoder 51004, and the signaling bitstream output from the signaling processor 51002 into one bitstream. The multiplexed bitstream may be transmitted without being changed or may be encapsulated in a file or a segment and transmitted. In an embodiment of the present disclosure, the file may be in an ISOBMFF file format.

According to embodiments, the file or the segment may be transmitted to the reception device or stored in a digital storage medium (e.g., a USB drive, SD, CD, DVD, Blu-ray disc, HDD, SSD, etc.). The transmission processor 51005 according to the embodiments may communicate with the reception device through wired/wireless communication over a network such as 4G, 5G, or 6G. In addition, the transmission processor 51005 may perform a necessary data processing operation according to the network system (e.g., a 4G, 5G, or 6G communication network system). The transmission processor 51005 may transmit the encapsulated data in an on-demand manner.

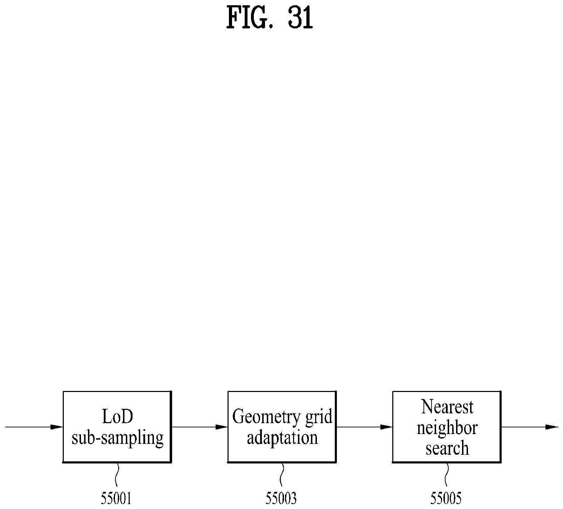

FIG. 31 is a detailed block diagram of a portion of an attribute encoder according to embodiments. In particular, FIG. 31 is a detailed block diagram of an LoD generator of the attribute encoder that performs LoD generation and NN search. The LoD generation and NN search described in FIG. 31 may be performed by the LoD generator 30009 of FIG. 3 or the prediction/lifting/RAHT transformation processor 8009 of FIG. 8.

Although not shown in the figure, the elements of the point cloud encoder of FIG. 31 may be implemented by hardware including one or more processors or integrated circuits configured to communicate with one or more memories included in the point cloud providing device, software, firmware, or a combination thereof. The one or more processors may perform at least one of the operations and/or functions of the elements of the point cloud encoder of FIG. 31 described above. Additionally, the one or more processors may operate or execute a set of software programs and/or instructions for performing the operations and/or functions of the elements of the point cloud encoder of FIG. 31. The one or more memories according to the embodiments may include a high speed random access memory, or include a non-volatile memory (e.g., one or more magnetic disk storage devices, flash memory devices, or other non-volatile solid-state memory devices).

The LoD generator of FIG. 31 may include a LoD subsampler 55001, a geometry grid adaptation part 55003, and an NN searcher 55005.

According to embodiments, the LoD subsampler 55001 may perform octree-based sub-sampling to generate one or more LoDs. For example, the LoD subsampler 55001 may perform sub-sampling based on a tree structure (e.g., an octree) of the geometry reconstructed by the geometry encoder 51003 to generate LODs.

According to embodiments, the geometry grid adaptation part 55003 performs level-based geometry grid adaptation as described above to correct the positions of nodes in the geometry grid.

In the geometry grid adaptation, down-sampling is performed based on the LoD or layer group to which the node for which NN search is to be performed belongs, and then up-sampling is performed on the down-sampled geometry grid based on skip layer-related information to correct the positions of the nodes. In the present disclosure, the LoD or layer group to which the node for which the NN search is to be performed belongs to may be a scalable transmitted LoD or layer group.

The up-sampling may be performed based on signaling information (e.g., root_bbox origin/root_bbox size/-max_geometry_level_log2 information). The signaling information (e.g., root_bbox origin/root_bbox size/max_geometry_level_log2 information) may be included in a sequence parameter set and/or an attribute parameter set to be transmitted. This is merely an example, and the information may be included in a tile inventory (or tile parameter set) and/or an attribute slice header to be transmitted.

According to embodiments, the NN searcher 55005 may search for three NNs by the distance-based NN method. Then, depending on the NN search method, nodes neighboring each other in Morton code order may be selected as NNs, or nodes neighboring each other based on Euclidean distance may be selected as NNs.

Referring to FIG. 28 as an example, 48030 may be a neighbor search target node in the position-corrected geometry grid, and ①, ②, and ③ may be a sequence of NN points of the neighbor search target node in the position-corrected geometry grid.

FIG. 32 is a diagram illustrating another exemplary point cloud reception device according to embodiments. The elements of the point cloud reception device illustrated in FIG. 32 may be implemented as hardware, software, processors, and/or combinations thereof.

According to embodiments, the point cloud reception device may include a reception processor 61001, a signaling processor 61002, a geometry decoder 61003, an attribute decoder 61004, and a post-processor 61005.

The reception processor 61001 may receive one bitstream or may receive each of a geometry bitstream, an attribute bitstream, and a signaling bitstream. Upon receiving a file and/or a segment, the reception processor 61001 may decapsulate the received file and/or segment and output a bitstream therefor.

When receiving (or decapsulating) one bitstream, the reception processor 61001 may demultiplex a geometry bitstream, an attribute bitstream, and/or a signaling bitstream from one bitstream, output the demultiplexed signaling bitstream to the signaling processor 61002, output the geometry bitstream to the geometry decoder 61003, and output the attribute bitstream to the attribute decoder 61004.

When receiving (or decapsulating) a geometry bitstream, an attribute bitstream, and/or a signaling bitstream, the reception processor 61001 may deliver the signaling bitstream to the signaling processor 61002, deliver the geometry bitstream to the geometry decoder 61003, and deliver the attribute bitstream to the attribute decoder 61004.

The signaling processor 61002 may parse and process information included in signaling information, e.g., SPS, GPS, APS, TPS, and metadata in the input signaling bitstream and provide the parsed and processed information to the geometry decoder 61003, the attribute decoder 61004, and the post-processor 61005. According to another embodiment, signaling information included in the geometry data unit header and/or the attribute slice data unit header may be pre-parsed by the signaling processor 61002 prior to decoding of corresponding slice data.

According to embodiments, the signaling processor 61002 may also parse and process information signaled in the sequence parameter set and/or attribute parameter set (e.g., skip layer-related information) and provide the processed information to the attribute decoder 61004.

According to embodiments, the geometry decoder 61003 may perform a reverse process to the operation of the geometry encoder 51003 of FIG. 30 on the compressed geometry bitstream based on the signaling information to reconstruct the geometry. The geometry information restored (or reconstructed) by the geometry decoder 61003 is provided to an attribute decoder 61004. The attribute decoder 61004 may perform a reverse process to the operation of the attribute encoder 51004 of FIG. 30 on the compressed attribute bitstream based on the signaling information and reconstructed geometry information to restore the attributes.

According to embodiments, the post-processor 61005 may reconstruct and display/render the point cloud data by matching the geometry information (i.e., positions) reconstructed and output by the geometry decoder 61003 with the attribute information restored and output by the attribute decoder 61004.

According to embodiments, the attribute decoder 61004 may also include the LoD generator of FIG. 31.

That is, the LoD generation and NN search described above may be applied equally to the attribute encoder 51004 of the transmission device and the attribute decoder 61004 of the reception device.

According to embodiments, the LoD subsampler 55001 may perform octree-based sub-sampling to generate one or more LoDs. For example, the LoD subsampler 55001 may perform sub-sampling based on a tree structure (e.g., an octree) of the geometry reconstructed by the geometry decoder 61003 to generate LODs.

According to embodiments, the geometry grid adaptation part 55003 performs level-based geometry grid adaptation as described above to correct the positions of nodes in the geometry grid.

In the geometry grid adaptation, down-sampling is performed based on the LoD or layer group to which the node for which NN search is to be performed belongs, and then up-sampling is performed on the down-sampled geometry grid based on skip layer-related information to correct the positions of the nodes. In the present disclosure, the LoD or layer group to which the node for which the NN search is to be performed belongs to may be a scalably decoded LoD or layer group.

The up-sampling may be performed based on signaling information (e.g., root_bbox origin/root_bbox size/-max_geometry_level_log2 information). The signaling information (e.g., root_bbox origin/root_bbox size/max_geometry_level_log2 information) may be included in a sequence parameter set and/or an attribute parameter set to be received. This is merely an example, and the information may be included in a tile inventory (or tile parameter set) and/or an attribute slice header to be received.

According to embodiments, the NN searcher 55005 may search for three NNs by the distance-based NN method. Depending on the NN search method, nodes neighboring each other in Morton code order may be selected as NNs, or nodes neighboring each other based on Euclidean distance may be selected as NNs.

Referring to FIG. 28 as an example, 48030 may be a neighbor search target node in the position-corrected geometry grid, and ①, ②, and ③ may be a sequence of NN points of the neighbor search target node in the position-corrected geometry grid.

As such, when scalable transmission and/or scalable decoding is performed, by applying the same LoD generation and NN search performed by the attribute encoder 51004 of the transmission device to the attribute encoder 61004 of the reception device, the neighbor candidates considered by the attribute encoder 51004 of the transmission device and the neighbor candidates considered by the attribute encoder 61004 of the reception device are not different, and the order of the nodes is not different. Therefore, decoder prediction errors do not occur in prediction transformations that perform attribute prediction from neighbor nodes.

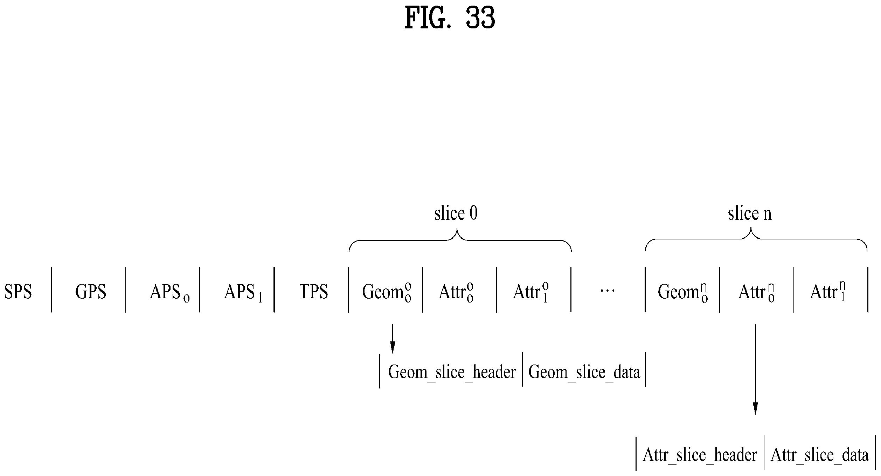

FIG. 33 illustrates an exemplary bitstream structure of point cloud data for transmission/reception according to embodiments. According to embodiments, the bitstream output from the point cloud video encoder of any one of FIG. 1, FIG. 2, FIG. 3, FIG. 8, and FIG. 30 may be in the form of FIG. 33.

According to embodiments, the bitstream of point cloud data provides tiles or slices to allow point cloud data to be divided into regions to be processed. Each region of the bitstream according to embodiments may have different importance. Therefore, when point cloud data is divided into tiles, different filters (encoding methods) and different filter units may be applied to the tiles, respectively. When point cloud data is divided into slices, different filters and different filter units may be applied to the slices, respectively.

The transmission device according to the embodiments may transmit point cloud data according to the bitstream structure as shown in FIG. 33, and may thus provide a method of applying different encoding operations according to the importance and using an encoding method with good quality in an important region. In addition, efficient encoding and transmission according to the characteristics of point cloud data may be supported and attribute values according to user requirements may be provided.

the reception device according to embodiments may receive point cloud data according to the bitstream structure as shown in FIG. 33, and thus a different filtering method (decoding method) may be applied for each region (region divided into tiles or slices) instead of using a complicated decoding (filtering) method for the entire point cloud data according to the processing capacity of the reception device. Accordingly, a better image quality may be ensured in a region important to a user and appropriate latency may be ensured on a system.

When a geometry bitstream, an attribute bitstream, and/or a signaling bitstream (or signaling information) according to embodiments constitute one bitstream (or G-PCC bitstream) as shown in FIG. 33, the bitstream may include one or more sub-bitstreams. According to embodiments, a bitstream may contain a sequence parameter set (SPS) for signaling of a sequence level, a geometry parameter set (GPS) for signaling of geometry information coding, one or more attribute parameter sets (APSs) ($APS_0$ and $APS_1$) for signaling of attribute information coding, a tile inventory (also referred to as a TPS) for signaling at a tile level, and one or more slices (slice 0 to slice n). That is, a bitstream of point cloud data according to embodiments may include one or more tiles, wherein each tile may be a slice group including one or more slices (slice 0 to slice n). The tile inventory (i.e., TPS) may include information about each of the one or more tiles (e.g., coordinate value information and height/size information related to a tile bounding box). Each slice may include one geometry bitstream (Geom0) and/or one or more attribute bitstreams (Attr0 and Attr1). For example, slice 0 may include one geometry bitstream (Geom0$^0$) and one or more attribute bitstreams (Attr0$^0$ and Attr1$^0$).

The geometry bitstream in each slice may include a geometry slice header (geom_slice_header) and geometry slice data (geom_slice_data). According to embodiments, the geometry bitstream in each slice may be referred to as a geometry data unit, and the geometry slice header may be referred to as a geometry data unit header. Also, the geometry slice data may be referred to as geometry data unit data. According to embodiments, the geometry slice header (or geometry data unit header) may include identification information (geom_parameter set_id) related to the parameter set included in the GPS, a tile identifier (geom_tile_id), a slice identifier (geom_slice_id), and information (geomBoxOrigin, geom_box_log2 scale, geom_max_node size_log2, geom_num_points) related to data included in the geometry slice data (geom_slice_data). geomBoxOrigin is geometry box origin information indicating the box origin of the geometry slice data, geom_box_log2_scale is information indicating a log scale of the geometry slice data, geom_max_node size_log2 is information indicating the size of the root geometry octree node, and geom_num_points is information related to the number of points of the geometry slice data. The geometry slice data (or geometry data unit data) may include geometry information (or geometry data) related to the point cloud data in a corresponding slice.

Each attribute bitstream in each slice may include an attribute slice header (attr_slice_header) and attribute slice data (attr_slice_data). According to embodiments, the attribute bitstream in each slice may be referred to as an attribute data unit. Also, the attribute slice header may be referred to as an attribute data unit header, and the attribute slice data may be referred to as attribute data unit data. According to embodiments, the attribute slice header (or attribute data unit header) may include information about the corresponding attribute slice data (or corresponding attribute data unit), and the attribute slice data may include attribute information (also referred to as attribute data or attribute value) related to the point cloud data in the corresponding slice. When multiple attribute bitstreams are present in one slice, each attribute bitstream may include different attribute information. For example, one attribute bitstream may include attribute information corresponding to color, and another attribute stream may include attribute information corresponding to reflectance.

According to embodiments, parameters required for encoding and/or decoding of point cloud data may be defined in parameter sets of point cloud data (e.g., SPS, GPS, APS, and TPS (also referred to as a tile inventory)) and/or a header of the corresponding slice. For example, in encoding and/or decoding of geometry information, the parameters may be added to the GPS. In tile-based encoding and/or decoding, the parameters may be added to a tile and/or slice header.

According to embodiments, the skip layer-related information may be signaled in the SPS and/or APS.

According to embodiments, the skip layer-related information may be signaled in the TPS and/or the attribute slice header.

According to embodiments, when a syntax element defined below is applicable to a plurality of point cloud data streams as well as the current point cloud data stream, the skip layer-related information may be carried in a higher parameter set.

According to embodiments, the skip layer-related information may be defined in a corresponding position or a separate position depending on the application or the system, such a different application range, a different application method, and the like may be used. A field, which is a term used in the syntaxes of the present disclosure described below, may have the same meaning as a parameter or a syntax element.

According to embodiments, parameters (which may be referred to metadata, signaling information, or the like) containing the skip layer-related information may be generated by the metadata processor (or metadata generator) or signaling processor of the transmission device, and may be delivered to the reception device so as to be used in a decoding/reconstruction operation. For example, a parameter generated and transmitted by the transmission device may be acquired by a metadata parser of the reception device.

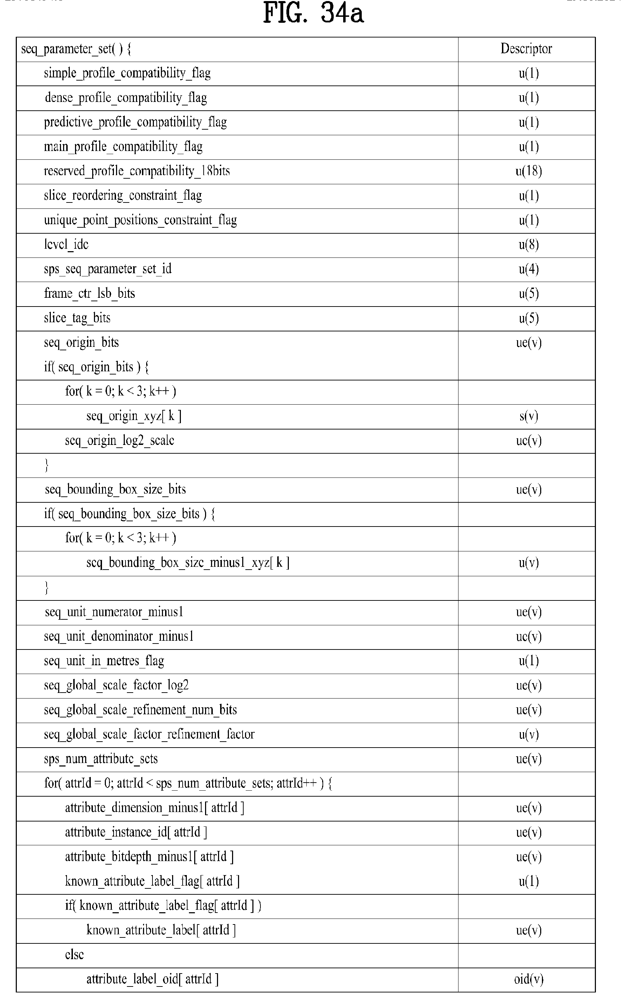

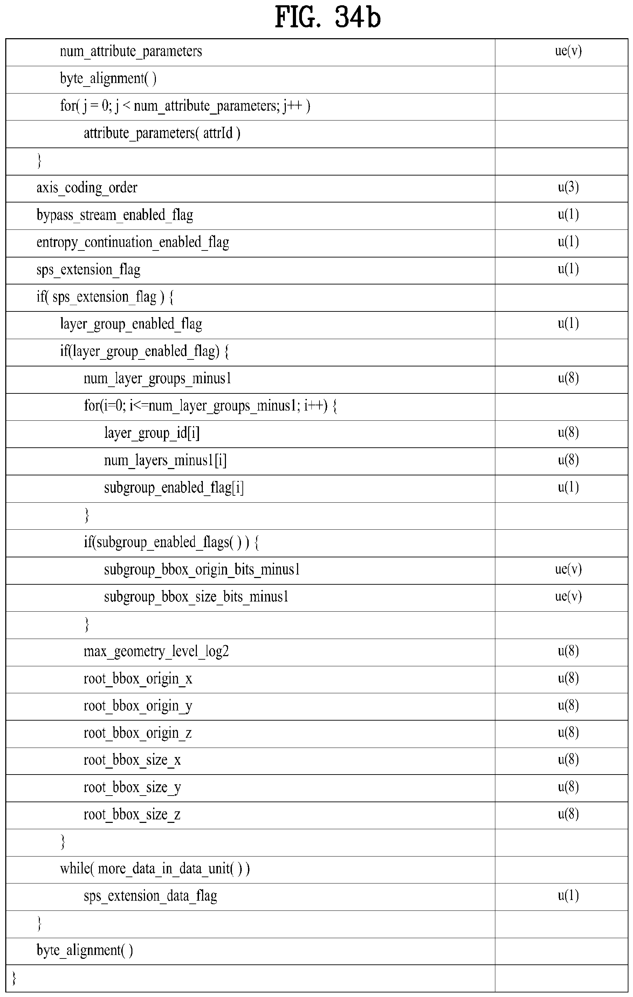

FIGS. 34-(a) and 34-(b) illustrate one embodiment of a syntax structure of a sequence parameter set (seq_parameter_set()) (SPS) according to embodiments. The SPS may contain sequence information about the point cloud data bitstream. In particular, it is exemplarily shown to include information related to a skip layer.

The syntaxes of FIGS. 34(a) and 34(b) may be included in the bitstream of FIG. 33, and may be generated by a point cloud encoder and decoded by a point cloud decoder according to embodiments.

In FIGS. 34-(a) and 34-(b), the simple_profile_compatibility_flag field may indicate whether the bitstream is compatible with the main profile. For example, simple_profile_compatibility_flag equal to 1 may indicate that the bitstream is compatible with a simple profile. For example, simple_profile_compatibility_flag equal to 0 may indicate that the bitstream is compatible with a profile other than the simple profile.

When unique_point_positions_constraint_flag is equal to 1, all output points may have unique positions in each point cloud frame that is referenced by the current SPS. When unique_point_positions_constraint_flag is equal to 0, two or more output points may have the same position in any point cloud frame that is referenced by the current SPS. For example, even when all points are unique in the respective slices, slices and other points in a frame may overlap. In this case, unique_point_positions_constraint_flag is set to 0.

level_idc indicates a level to which the bitstream conforms.

sps seq_parameter_set_id provides an identifier for the SPS for reference by other syntax elements.

sps_num attribute_sets indicates the number of coded attributes in the bitstream.

The SPS according to the embodiments includes an iteration statement iterating as many times as the value of the sps_num attribute_sets field. In an embodiment, i is initialized to 0, and is incremented by 1 each time the iteration statement is executed. The iteration statement is repeated until the value of i becomes equal to the value of the sps_num attribute sets field. The iteration statement may include an attribute_dimension_minus1[i] field and an attribute_instance_id[i] field. attribute_dimension_minus1[i] plus 1 indicates the number of components of the i-th attribute.

The attribute_instance_id[i] field specifies the instance ID of the i-th attribute.

The known attribute_label flag[i] field indicates whether a know attribute_label[i] field or an attribute_label_four_bytes[i] field is signaled for the i-th attribute. For example, when known attribute_label flag[i] equal to 0 indicates the known attribute_label[i] field is signaled for the i-th attribute. known attribute_label flag[i] equal to 1 indicates that the attribute_label four_bytes[i] field is signaled for the i-th attribute.

known attribute_label[i] specifies the type of the i-th attribute. For example, known_attribute_label[i] equal to 0 may specify that the i-th attribute is color. known_attribute_label[i] equal to 1 may specify that the i-th attribute is reflectance. known_attribute_label[i] equal to 2 may specify that the i-th attribute is frame index. Also, known attribute_label[i] equal to 4 specifies that the i-th attribute is transparency. known_attribute_label[i] equal to 5 specifies that the i-th attribute is normals.

axis_coding_order indicates the correspondence between the X, Y, and Z output axis labels and the three position components in the reconstructed point cloud RecPic [pointidx] [axis] with and axis=0..2.

sps_bypass_stream enabled flag equal to 1 may indicate that the bypass coding mode is used in reading the bitstream. As another example, sps_bypass stream enabled flag equal to 0 may indicate that the bypass coding mode is not used in reading the bitstream.

sps_extension_flag indicates whether the sps_extension_data syntax structure is present in the SPS syntax structure. For example, sps_extension_present_flag equal to 1 indicates that the sps_extension_data syntax structure is present in the SPS syntax structure. sps_extension_present_flag equal to 0 indicates that this syntax structure is not present. When sps_extension_flag is equal to 1, the SPS according to the embodiments may further include an sps_extension_data_flag field. The sps_extension_data_flag field may have any value.

layer_group enabled flag equal to 1 indicates that the geometry (or attribute) bitstream of the slice is contained in multiple slices that match a coding layer group or a subgroup thereof. layer_group_enabled_flag equal to 0 indicates that the geometry (or attribute) bitstream is contained in a single slice.

num_layer_groups_minus1 plus 1 indicates the number of layer groups, which represent groups of consecutive tree layers that are part of the geometry coding tree structure. num_layer_groups_minus1 is in the range of 0 to the number of coding tree layers.

The layer_group_id field indicates the identifier of the layer group in the slice. layer_group_id is in the range of 0 to num_layer_groups_minus1.

num_layers_minus1 plus 1 specifies the number of coding layers included in the i-th layer-group. The total number of layer-groups may be derived by adding all (num_layers_minus1[i] + 1) for i from 0 to num_layer_groups_minus1.

subgroup_enabled_flag equal to 1 indicates that the i-th layer group is divided into two or more subgroups. In this case, the set of points in the subgroups is the same as the set of points in the layer group. When subgroup_enabled_flag of the i-th layer group is equal to 1, and j is greater than or equal to i, subgroup_enabled_flag of the j-th layer group will be equal to 1. subgroup_enabled_flag equal to 0 indicates that the current layer group is contained in a single slice without being divided into multiple subgroups.

subgroup_bbox_origin_bits_minus1 plus 1 indicates the length in bits of the syntax element subgroup_bbox_origin.

subgroup_bbox_size_bits_minus1 plus 1 indicates the length in bits of the syntax element subgroup_bbox_size.

According to embodiments, when layer_group enabled flag is equal to 1, the SPS may include at least one of a max_geometry_level_log2 field, a root_bbox origin x field, a root_bbox origin_y field, a root_bbox origin z field, a root_bbox size x field, a root_bbox size_y field, or a root_bbox size z field, which may be referred to as skip layer-related information.

In the present disclosure, in the case of full geometry, the skip layer-related information may include information about the origin of the bounding box and information about the size of the bounding box. The skip layer-related information is information needed to make the down-sampled geometry grid (i.e., tree depth) in the form of a full geometry when the encoder or decoder performs NN search. In other words, in the present disclosure, the encoder and decoder perform sampling with the remaining layers except the skipped layer to create a down-sampled geometry grid, and perform up-sampling based on the skip layer-related information to correct the positions of the occupied nodes including the neighbor search target node. Then, NN search is performed based on the corrected positions to obtain the NN of the neighbor search target node.

In the present disclosure, the max_geometry_level_log2 field, the root_bbox origin x field, the root_bbox origin_y field, the root_bbox origin z field, the root_bbox_size_x field, the root_bbox size_y field, or the root_bbox size z field may all be transmitted. Alternatively, only the max_geometry_level_log2 field may be transmitted, or the root_bbox origin x field, root_bbox origin_y field, root_bbox origin z field, root_bbox_size x field, root_bbox size_y field, and root_bbox size z field may be transmitted.

The max_geometry_level_log2 field may indicate the maximum geometry level in the case of full geometry. The value of the max_geometry_level_log2 field may be obtained as shown in the example below.

bound = quantInput.computeBoundingBox().max - quantInput.computeBoundingBox().min + 1,

Where bound denotes the tight (i.e., accurate) bounding box that has an actual point distribution and is obtained by finding the maximum and minimum values along the x, y, and z axes. The root_bbox origin x, root_bbox origin_y, and root_bbox origin z fields indicate the origin of this bounding box, and the root_bbox size x, root_bbox size_y, and root_bbox size z fields indicate the size of this bounding box.

$$\text{for (int k = 0; k < 3; k++)}$$
$$\text{rootNodeSizeLog2[k] = ceillog2(std::max(2, bound[k]));}$$
$$\text{max\_geometry\_level\_log2 = rootNodeSizeLog2.max(),}$$

Where rootNodeSizeLog2[k] denotes the size of the bounding box for the corresponding axis (k), and max_geometry_level_log2 denotes the maximum value among the bounding box sizes along the x, y, and z axes.

The root_bbox origin x field, root_bbox origin_y field, and root_bbox origin z field may indicate the origin (i.e., the position of the origin) of the left, front, and bottom positions of the smallest bounding box that may contain the entire point cloud data in the case of full geometry.

The root_bbox size x field, root_bbox size_y field, and root_bbox size z field may indicate the lengths (i.e., sizes) in the x-, y-, and z-axis directions from the origin (i.e., the position of the origin) of the left, front, and bottom positions of the smallest bounding box that may contain the entire point cloud data in the case of full geometry.

Additionally, when it is pre-agreed that the point cloud data has been moved to a specific position (e.g., (0, 0, 0)), the origin values may be inferred based on the agreement without delivering the origin values.

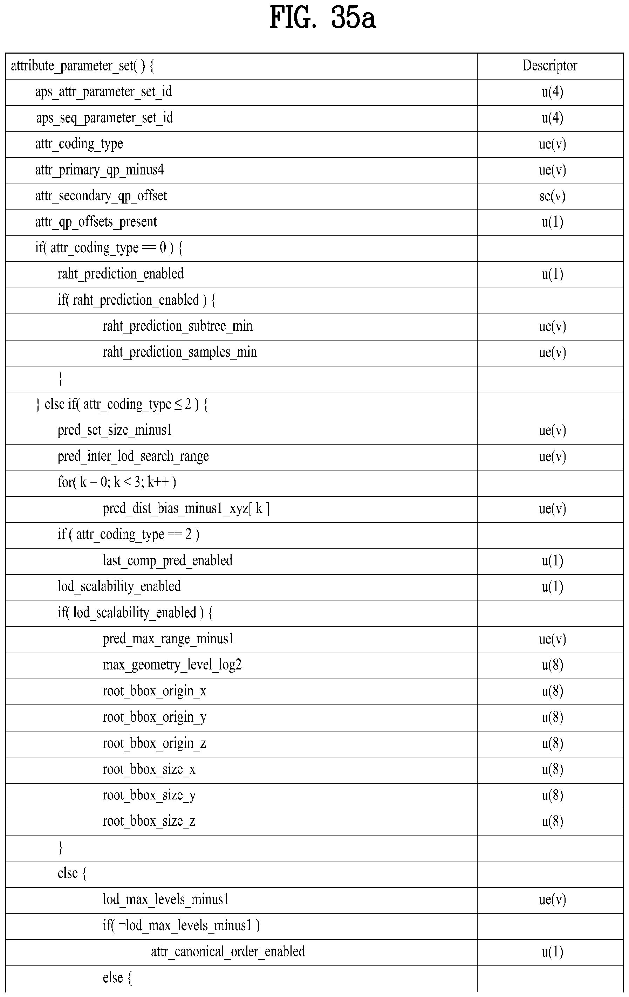

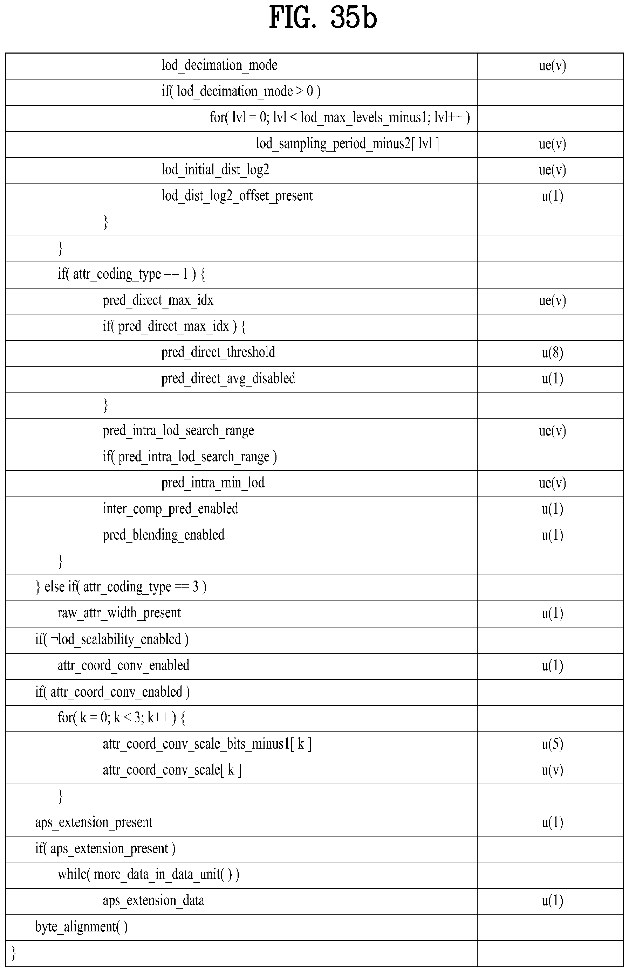

FIGS. 35-(a) and 35-(b) illustrate one embodiment of a syntax structure of an attribute parameter set (attr_parameter set()) (APS) according to the present disclosure. The SPS may include sequence information about a point cloud data bitstream. The APS according to the embodiments may include information about a method of encoding attribute information related to the point cloud data contained in one or more slices. In particular, in the illustrated example, it includes skip layer-related information.

The syntaxes of FIGS. 35-(a) and 35-(b) may be included in the bitstream of FIG. 33, and may be generated by a point cloud encoder and decoded by a point cloud decoder according to embodiments.

The aps attr_parameter set_id field indicates an identifier of the APS for reference by other syntax elements.

The aps seq_parameter_set_id field indicates the value of sps seq_parameter set_id for the active SPS.

The attr_coding_type field indicates the coding type for the attribute.

In one embodiment, attr_coding_type equal to 0 indicates that the coding type is Region Adaptive Hierarchical Transform (RAHT). attr_coding_type equal to 1 indicates that the coding type is predicting weight lifting (or LOD with predicting transform). attr_coding_type equal to 2 indicates that the coding type is fix weight lifting (or LOD with lifting transform). attr_coding_type equal to 3 indicates raw attribute data.

According to embodiments, when the value of the attr_coding_type field is 2 or greater than 2, for example, when the coding type is LOD with lifting transform, the APS may include at least one of the following fields:

a pred_set_size_minus1 field, a pred_inter_lod search_range field, a pred_dist_bias_minus1_xyz[k] field, a last comp_pred enabled field, a lod_scalability_enabled field, a pred_max_range_minus1 field, a max_geometry_level_log2 field, a root_bbox origin x field, a root_bbox origin_y field, a root_bbox origin z field, a root_bbox_size_x field, a root_bbox size_y field, or a root_bbox_size_z field.

pred_set_size_minus1 field plus 1 specifies the maximum size of the per-point predictor set.

pred_inter_lod search_range field specifies the range of indexes around a search center which may be searched in an extended inter-detail-level search for nearest neighbours to include in a point's predictor set.

pred_dist_bias_minus1_xyz[k] field plus 1 specifies the factor used to weight the k-th XYZ component of the distance vector between two point positions used to calculate inter-point distances in the predictor search for a single refinement point. The expression PredBias[k] specifies the factor for the k-th STV component.

$$\text{PredBias[k]} := \text{pred\_dist\_bias\_minus1\_xyz[StvToXyz[k]]} + 1$$

last comp_pred enabled field specifies whether (when 1) or not (when 0) the second coefficient component of a three-component attribute shall be used to predict the value of the third coefficient component. When last comp_pred enabled is not present, it shall be inferred to be 0.

lod_scalability_enabled field specifies whether (when 1) or not (when 0) attribute values shall be coded using constrained LoD generation and predictor searches. When equal to 1, attribute values may be reconstructed for a partially decoded occupancy tree. When lod_scalability_enabled is not present, it shall be inferred to be 0.

pred_max_range_minus1 field plus 1 specifies, when present, the distance beyond which point predictor candidates shall be discarded during predictor set pruning for scalable attribute coding. The distance is specified in units of the per-detail-level block size.

According to embodiments, when lod_scalability_enabled is equal to 1, the APS may further include at least one of a max_geometry_level_log2 field, a root_bbox origin x field, a root_bbox origin_y field, a root_bbox origin z field, a root_bbox size x field, a root_bbox size_y field, or a root_bbox size z field, which may be referred to as skip layer-related information. In the present disclosure, in the case of full geometry, the skip layer-related information may include information about the origin of the bounding box and information about the size of the bounding box. The skip layer-related information is information needed to make the down-sampled geometry grid (i.e., tree depth) in the form of a full geometry when the encoder or decoder performs NN search. In other words, in the present disclosure, the encoder and decoder perform sampling with the remaining layers except the skipped layer to create a down-sampled geometry grid, and perform up-sampling based on the skip layer-related information to correct the positions of the occupied nodes including the neighbor search target node. Then, NN search is performed based on the corrected positions to obtain the NN of the neighbor search target node.

In the present disclosure, the max_geometry_level_log2 field, the root_bbox origin x field, the root_bbox origin_y field, the root_bbox origin z field, the root_bbox_size_x field, the root_bbox size_y field, or the root_bbox size z field may all be transmitted. Alternatively, only the max_geometry_level_log2 field may be transmitted, or the root_bbox origin x field, root_bbox origin_y field, root_bbox origin z field, root_bbox_size x field, root_bbox size_y field, and root_bbox size z field may be transmitted.

The max_geometry_level_log2 field may indicate the maximum geometry level in the case of full geometry. The value of the max_geometry_level_log2 field may be obtained as shown in the example below.

bound = quantInput.computeBoundingBox().max - quantInput.computeBoundingBox().min + 1,

Where bound denotes the tight (i.e., accurate) bounding box that has an actual point distribution (i.e., full geometry) and is obtained by finding the maximum and minimum values along the x, y, and z axes. The root_bbox_origin_x, root_bbox origin_y, and root_bbox origin z fields indicate the origin of this bounding box, and the root_bbox_size_x, root_bbox size_y, and root_bbox size z fields indicate the size of this bounding box.

```
for (int k = 0; k < 3; k++)
rootNodeSizeLog2[k] = ceillog2(std::max(2, bound[k]));
max_geometry_level_log2 = rootNodeSizeLog2.max(),
```

Where rootNodeSizeLog2[k] denotes the size of the bounding box for the corresponding axis (k), and max_geometry_level_log2 denotes the maximum value among the bounding box sizes along the x, y, and z axes.

The root_bbox origin x field, root_bbox origin_y field, and root_bbox origin z field may indicate the origin (i.e., the position of the origin) of the left, front, and bottom positions of the smallest bounding box that may contain the entire point cloud data in the case of full geometry.

The root_bbox size x field, root_bbox size_y field, and root_bbox size z field may indicate the lengths (i.e., sizes) in the x-, y-, and z-axis directions from the origin (i.e., the position of the origin) of the left, front, and bottom positions of the smallest bounding box that may contain the entire point cloud data in the case of full geometry.

Additionally, when it is pre-agreed that the point cloud data has been moved to a specific position (e.g., (0, 0, 0)), the origin values may be inferred based on the agreement without delivering the origin values.

The reception method/device according to the embodiments may have the following effects.

The present disclosure describes a method of dividing and transmitting compressed data based on specific criteria for point cloud data. In particular, in one application to the present disclosure, when layered coding (or hierarchical coding) is used, compressed data may be divided according to layers for transmission, which may increase storage and transmission efficiency at the transmitting side. In particular, when scalable attribute coding is used, the entire coded geometry data should be sent, which is a disadvantage. The proposal of the present disclosure allows only geometry layers that match the tree level used in scalable attribute coding to be delivered, which may further increase transmission efficiency.

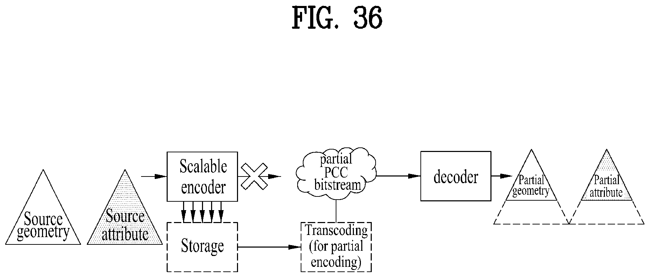

FIG. 36 is a diagram illustrating an example of compressing geometry and attributes of point cloud data for a service. In other words, in a PCC-based service, the compression rate or number of data may be adjusted and transmitted depending on the receiver performance or transmission environment. If point cloud data is bundled on a slice-by-slice basis as shown in FIG. 36, the receiver performance or transmission environment may change. In this case, it is necessary to 1) pre-transcode the bitstreams into a form suitable for each environment, store the same separately, and select a bitstream at the time of transmission, or to 2) perform transcoding prior to the transmission. In this case, if the number of receiver environments to be supported increases or the transmission environment frequently changes, issues related to the storage space or a delay resulting from transcoding may be raised.

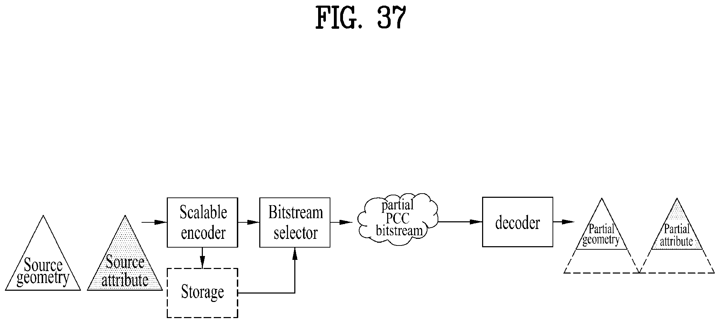

FIG. 37 is a diagram illustrating another example of compressing geometry and attributes of point cloud data for a service according to embodiments.

Dividing the compressed data according to layers for transmission, as proposed in the present disclosure, may enable only the necessary parts of the precompressed data to be selectively delivered through a bitstream selector at the bitstream stage without a separate transcoding operation. This is efficient in terms of storage space because only one storage space is needed per stream. It is also efficient in terms of bandwidth because the bitstream selector selects only necessary layers before transmission.

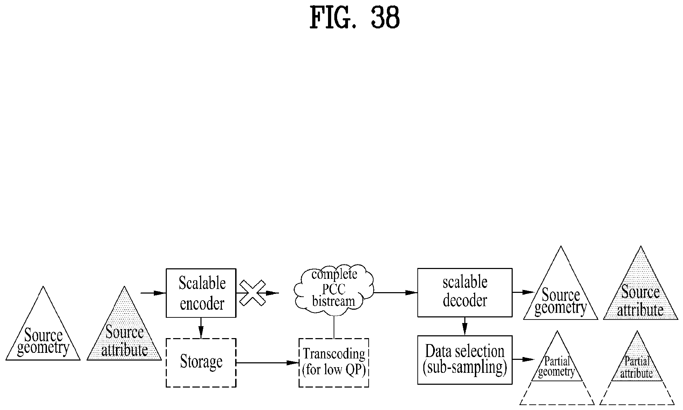

The effects of the features of the present disclosure from the perspective of the receiving side are described below. In one application of the present disclosure, when layered coding (or hierarchical coding) is used, the compressed data may be divided according to the layers, which may increase the efficiency at the receiving side. In particular, in the case of scalable attribute coding, receiving and decoding the entire coded geometry data has the disadvantage of causing delay and burdening the receiver computation, as shown in FIG. 38. The present disclosure proposes to decode only geometry layers that match the tree level used in scalable attribute coding, which may reduce the delay factor and increase the efficiency of the decoder by saving the computing power required for decoding.

FIG. 38 is a diagram illustrating the operation at the transmitting side/receiving side when layered point cloud data is transmitted. In the case, if information that allows the entire point cloud data to be reconstructed is delivered regardless of the performance of the receiver, the receiver may need to reconstruct the point cloud data through decoding and then select only the point cloud data corresponding to the required layer (e.g., data selection or sub-sampling). In this case, since the delivered bitstream has already been decoded, a delay may occur in the receiver targeting low delay, or decoding may not be performed depending on the receiver performance.

However, if, as proposed, the receiver receives only the compressed data of the required layers, the receiver is allowed to selectively decode specific layers. Thereby, the decoder efficiency may be increased and decoders of different performance may be supported.

FIG. 39 is a flowchart of a method of transmitting point cloud data according to embodiments.

A method of transmitting point cloud data according to embodiments may include encoding geometry included in the point cloud data (71001), encoding attributes included in the point cloud data based on input and/or reconstructed geometry (71002), and transmitting a bitstream containing the encoded geometry, the encoded attributes, and signaling information (71003).

The operations 71001 and 71002 of encoding the geometry and attributes included in the point cloud data may include performing some or all of the operations of the point cloud video encoder 10002 of FIG. 1, the encoding 20001 of FIG. 2, the point cloud video encoder of FIG. 3, the point cloud video encoder of FIG. 8, and the point cloud encoding of FIG. 30.

In one embodiment, the operation 71002 of encoding the attributes may include generating an LODI set by applying at least one of an octree-based LOD generation method, a distance-based LOD generation method, or a sampling-based LOD generation method, and then searching for X (>0) nearest neighbor (NN) points from a group with the same or lower LOD (i.e., larger distance between nodes) based on the LODI set and registering the found points in a predictor as a neighbor point set.

According to embodiments, for scalable transmission, the operation 71002 of encoding the attributes may include creating a down-sampled geometry grid by sampling the remaining layers except for one or more skipped layers, and correcting the positions of the occupied nodes including the neighbor search target node by performing up-sampling based on information about the skipped layers, as described above. Then, NN search is performed based on the corrected positions to obtain the distance between nodes. Then, attribute prediction and compression are performed based on the obtained NN nodes. The position correction and NN search according to the embodiments have been described in detail wit reference to FIGS. 26 to 30 and 31, and thus a description thereof is skipped to avoid redundancy.

The operation 71003 of transmitting the bitstream containing the encoded geometry, encoded attributes, and signaling information may be performed by the transmitter 10003 of FIG. 1, the transmission 20002 of FIG. 2, the transmission processor 8012 of FIG. 8, or the transmission processor 51005 of FIG. 30.

FIG. 40 is a flowchart of a method of receiving point cloud data according to embodiments.

A method of receiving point cloud data according to embodiments may include receiving a bitstream containing encoded geometry, encoded attributes, and signaling information (81001), decoding the geometry based on the signaling information (81002), decoding the attributes based on the decoded/reconstructed geometry and signaling information (81003), and rendering point cloud data reconstructed based on the decoded geometry and decoded attributes (81004).

The operation 81001 of receiving the bitstream containing the encoded geometry, encoded attributes, and signaling information according to the embodiments may be performed by the receiver 10005 of FIG. 1, the transmission 20002 or decoding 20003 of FIG. 2, the receiver 9000 or reception processor 9001 of FIG. 9, or the reception processor 61001 of FIG. 32.

The operations 81002 and 81003 of decoding the geometry and attributes according to the embodiments may include performing decoding per slice based on a layer or layer group or per tile including one or more slices.

The operation 81002 of decoding the geometry according to the embodiments may include some or all of the operations of the point cloud video decoder 10006 of FIG. 1, the decoding 20003 of FIG. 2, the point cloud video decoder of FIG. 7, the point cloud video decoder of FIG. 9, and the geometry decoder of FIG. 32.

The operation 81003 of decoding the attributes according to the embodiments may include some or all of the operations of the point cloud video decoder 10006 of FIG. 1, the decoding 20003 of FIG. 2, the point cloud video decoder of FIG. 7, the point cloud video decoder of FIG. 9, and the attribute decoder of FIG. 32.

According to embodiments, the signaling information, for example, at least one of the sequence parameter set, the attribute parameter set, the tile parameter set, or the attribute slice header, may include skip layer-related information. According to embodiments, the skip layer-related information may include position information and size information about a bounding box. For example, the skip layer-related information may include root_bbox origin and root_bbox_size information and/or max_geometry_level_log2 information. The skip layer-related information is intended to ensure that the resolution detail of the NN search performed by the attribute encoder of the transmission device is the same as the resolution detail of the NN search performed by the attribute decoder of the reception device.

According to embodiments, the operation 81003 of decoding the attributes may include generating LODs by performing sub-sampling based on a tree structure (e.g., octree) of the geometry reconstructed in the geometry decoding. In this regard, the operation 81003 of decoding the attributes may include correcting the positions of the nodes in the geometry grid by performing level-based geometry grid adaptation as described above. In the geometry grid adaptation, down-sampling is performed based on the LoD or layer group to which the node for which NN search is to be performed belongs, and then up-sampling is performed on the down-sampled geometry grid based on skip layer-related information to correct the positions of the nodes. In the present disclosure, the LoD or layer group to which the node for which the NN search is to be performed belongs to may be a scalably decoded LoD or layer group.

In the operation 81003 of decoding the attributes according to the embodiments, up to three NNs may be search for using a distance-based NN method as described above with reference to FIGS. 13 to 32. Then, depending on the NN search method, nodes neighboring each other in Morton code order may be selected as NNs, or nodes neighboring each other based on Euclidean distance may be selected as NNs.

The operation 81004 of rendering the reconstructed point cloud data based on the decoded geometry and decoded attributes according to the embodiments may include rendering the reconstructed point cloud data according to various rendering schemes. For example, points in the point cloud content may be rendered as vertices having a certain thickness, as cubes having a certain minimum size centered on the corresponding vertex position, as circles centered on the vertex position, etc. All or a portion of the rendered point cloud content may be presented to a user through a display (e.g., a VRjAR display, a general display, etc.).

The operation 81004 of rendering the point cloud data according to the embodiments may be performed by the renderer 10007 of FIG. 1, the renderer 20004 of FIG. 2, or the renderer 9011 of FIG. 9.

As such, when scalable transmission is performed by the transmission device and/or scalable decoding is performed by the reception device, the LoD generation and NN search performed in the attribute encoding operation 71002 by the transmission device may be applied equally to the attribute decoding by the reception device. Thereby, the neighbor candidates considered by the attribute encoder of the transmission device and the neighbor candidates considered by the attribute decoder of the reception device are not different, and the order of the nodes is not different. Therefore, decoder prediction errors do not occur in prediction transformations that perform attribute prediction from neighbor nodes.

Various elements of the devices of the embodiments may be implemented by hardware, software, firmware, or a combination thereof. Various elements in the embodiments may be implemented on a single chip, for example, a single hardware circuit. According to embodiments, embodiments may optionally be implemented on separate chips. According to embodiments, at least one of the components of the embodiments may be implemented within one or more processors that include instructions to perform operations according to the embodiments.

The operations according to the embodiments described above may be performed by a transmission device and/or a reception device according to embodiments. The transmission/reception device may include a transmitter/receiver configured to transmit or receive media data, a memory configured to store instructions (program code, algorithms, flowcharts, and/or data) for the processes according to embodiments, and a processor configured to control the operations of the transmission/reception device.

The processor may be referred to as a controller or the like, and may correspond to, for example, hardware, software, and/or a combination thereof. Operations according to the embodiments described above may be performed by the processor. Further, the processor may be implemented as an encoder/decoder, etc. for the operations of the embodiments described above.

Each part, module, or unit described above may be a software, processor, or hardware part that executes successive procedures stored in a memory (or storage unit). Each of the steps described in the above embodiments may be performed by a processor, software, or hardware parts. Each module/block/unit described in the above embodiments may operate as a processor, software, or hardware. In addition, the methods presented by the embodiments may be executed as code. This code may be written on a processor readable storage medium and thus read by a processor provided by an apparatus.

In the specification, when a part "comprises" or "includes" an element, it means that the part further comprises or includes another element unless otherwise mentioned. Also, the term "...module(or unit)" disclosed in the specification means a unit for processing at least one function or operation, and may be implemented by hardware, software or combination of hardware and software.

Although embodiments have been explained with reference to each of the accompanying drawings for simplicity, it is possible to design new embodiments by merging the embodiments illustrated in the accompanying drawings. If a recording medium readable by a computer, in which programs for executing the embodiments mentioned in the foregoing description are recorded, is designed by those skilled in the art, it may fall within the scope of the appended claims and their equivalents.

The apparatuses and methods may not be limited by the configurations and methods of the embodiments described above. The embodiments described above may be configured by being selectively combined with one another entirely or in part to enable various modifications.

Although preferred embodiments of the embodiments have been shown and described, the embodiments are not limited to the specific embodiments described above, and various modifications may be made by one of ordinary skill in the art without departing from the spirit of the embodiments claimed in the claims, and such modifications should not be understood in isolation from the technical ideas or views of the embodiments.

Various elements of the apparatuses of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the apparatus according to the embodiments may include one or more processors capable of executing one or more programs. The one or more programs may perform any one or more of the operations/methods according to the embodiments or include instructions for performing the same. Executable instructions for performing the method/operations of the apparatus according to the embodiments may be stored in a non-transitory CRM or other computer program products configured to be executed by one or more processors, or may be stored in a transitory CRM or other computer program products configured to be executed by one or more processors. In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In this document, the term "/" and "," should be interpreted to indicate "and/or." For instance, the expression "A/B" may mean "A and/or B." Further, "A, B" may mean "A and/or B." Further, "A/B/C" may mean "at least one of A, B, and/or C." Also, "A/B/C" may mean "at least one of A, B, and/or C." Further, in the document, the term "or" should be interpreted to indicate "and/or." For instance, the expression "A or B" may comprise 1) only A, 2) only B, and/or 3) both A and B. In other words, the term "or" in this document should be interpreted to indicate "additionally or alternatively."

Various elements of the embodiments may be implemented by hardware, software, firmware, or a combination thereof. Various elements in the embodiments may be executed by a single chip such as a single hardware circuit. According to embodiments, the element may be selectively executed by separate chips, respectively. According to embodiments, at least one of the elements of the embodiments may be executed in one or more processors including instructions for performing operations according to the embodiments.

Operations according to the embodiments described in this specification may be performed by a transmission/-

reception device including one or more memories and/or one or more processors according to embodiments. The one or more memories may store programs for processing/controlling the operations according to the embodiments, and the one or more processors may control various operations described in this specification. The one or more processors may be referred to as a controller or the like. In embodiments, operations may be performed by firmware, software, and/or combinations thereof. The firmware, software, and/or combinations thereof may be stored in the processor or the memory.

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signal unless context clearly dictates otherwise. The terminology used to describe the embodiments is used for the purpose of describing particular embodiments only and is not intended to be limiting of the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components.

As used herein, conditional expressions such as "if" and "when" are not limited to an optional case and are intended to be interpreted, when a specific condition is satisfied, to perform the related operation or interpret the related definition according to the specific condition. Embodiments may include variations/modifications within the scope of the claims and their equivalents. It will be apparent to those skilled in the art that various modifications and variations can be made in the present disclosure without departing from the spirit and scope of the disclosure. Thus, it is intended that the present disclosure cover the modifications and variations of this disclosure provided they come within the scope of the appended claims and their equivalents.

[Mode for Disclosure]

As described above, related contents have been described in the best mode for carrying out the embodiments.

[Industrial Applicability]

As described above, the embodiments may be fully or partially applied to the point cloud data transmission/reception device and system.

It will be apparent to those skilled in the art that various changes or modifications may be made to the embodiments within the scope of the embodiments.

Thus, it is intended that the embodiments cover modifications and variations provided they come within the scope of the appended claims and their equivalents.

**Claims**

1. A method of transmitting point cloud data, the method comprising:

    encoding geometry data of the point cloud data;
    encoding attribute data of the point cloud data based on the geometry data; and
    transmitting the encoded geometry data, the encoded attribute data, and signaling information.

2. The method of claim 1, wherein the encoding of the attribute data comprises:

    generating one or more levels of detail (LoDs) from a layer-based tree structure comprising the geometry data;
    searching for and selecting, based on at least one of the one or more LoDs, one or more nearest neighbors of a neighbor search target node; and
    compressing attribute information based on the selected one or more nearest neighbors of the neighbor search target node.

3. The method of claim 2, wherein, in the searching for and selecting the one or more nearest neighbors, the at least one of the one or more LODs is a scalable transmitted LoD.

4. The method of claim 3, wherein the encoding of the attribute data comprises:

up-sampling a geometry grid down-sampled based on the scalable transmitted LoD to a geometry grid of a full layer based on the signaling information; and
searching for and selecting the nearest neighbors in the up-sampled geometry grid.

5. The method of claim 4, wherein the searching for and selecting the nearest neighbors in the up-sampled geometry grid comprises:
searching for the nearest neighbors of the neighbor search target node based on a Morton code order or Euclidean distance.

6. The method of claim 1, wherein the signaling information comprises information about a bounding box acquired based on a distribution of points in a full layer.

7. The method of claim 6, wherein the information about the bounding box comprises position information and size information related to the bounding box.

8. A device for transmitting point cloud data, comprising:

a geometry encoder configured to encode geometry data of the point cloud data;
an attribute encoder configured to encode attribute data of the point cloud data based on the geometry data; and
a transmitter configured to transmit the encoded geometry data, the encoded attribute data, and signaling information.

9. The device of claim 8, wherein the attribute encoder comprises:

a level of detail (LOD) generator configured to generate at least one LoD from a layer-based tree structure comprising the geometry data;
a neighbor searcher configured to search for and select, based on at least one of the one or more LoDs, one or more nearest neighbors of a neighbor search target node; and
a compressor configured to compress attribute information based on the selected one or more nearest neighbors of the neighbor search target node.

10. The device of claim 9, wherein, in searching for and selecting the one or more nearest neighbors, the at least one of the one or more LODs is a scalable transmitted LoD.

11. The point cloud data transmission device of claim 10, wherein the attribute encoder further comprises:

a geometry grid adaptation part configured to up-sample a geometry grid down-sampled based on the scalable transmitted LoD to a geometry grid of a full layer based on the signaling information,
wherein the neighbor searcher searches for and selects the nearest neighbors in the up-sampled geometry grid.

12. The device of claim 11, wherein the neighbor searcher searches for the nearest neighbors of the neighbor search target node based on a Morton code order or Euclidean distance.

13. The device of claim 8, wherein the signaling information comprises information about a bounding box acquired based on a distribution of points in a full layer.

14. The device of claim 13, wherein the information about the bounding box comprises position information and size information related to the bounding box.

# FIG. 1

TRANSMISSION DEVICE

RECEPTION DEVICE

Point Cloud Video Acquisition

Point Cloud Video Encoder

Transmitter (Communication module)

Renderer

Point Cloud Video Decoder

Receiver (Communication module)

(Compressed) Bitstream

Feedback Information

# FIG. 2

Acquisition  —Ply file  -geometry  -attribute→  Encoding  —Encoded  -geometry  -attribute bitstream→  Transmission  →  Decoding  —Decoded  -geometry  -attribute→  Rendering

20000   20001   20002   20003   20004

Head orientation, Viewport information

Head orientation, Viewport information

Feedback

20005

56

# FIG. 3

# FIG. 4

FIG. 5

Level of details

# FIG. 6

P0  P1  P4  P3

P6  P7

P9

P5  P8  P2

Original order

| P0, P1, P2, P3, P4, P5, P6, P7, P8, P9 |

LOD-based order

| P0, P5, P4, P2 | P1, P6, P3 | P9, P8, P7 |

LOD0

LOD1

LOD2

# FIG. 7

# FIG. 8

8000 — Data input unit

8007

Position values of points

Attribute values of points

Set value, etc.

8001 — Quantization processor

Metadata processor

Color transform processor — 8008

8002 — Voxelization processor

**Attribute** transform processor — 8009

8003 — Octree occupancy code generator

Prediction/lifting/RAHT transform processor — 8010

8004 — Surface model processor

Arithmetic encoder — 8011

8005 — Intre/inter-coding processor

8006 — Arithmetic encoder

Sharing reconstructed position values

Transmission processor

8012

# FIG. 9

Receive

9000 — Receiver

9001 — Reception processor

Geometry bitstream

9006

Attribute bitstream

Set value, etc.

9002 — Arithmetic decoder

Metadata parser

Arithmetic decoder — 9007

9003 — Occupancy code-based octree reconstruction processor

Inverse quantization processor — 9008

9004 — Surface model processor (triangle reconstruction, up-sampling, voxelization)

Prediction/lifting/RAHT inverse transform processor — 9009

9005 — Inverse quantization processor

Color inverse transform processor — 9010

Sharing reconstructed position values

Renderer — 9011

# FIG. 10

1060 — AI Server

1070 — HMD

1010 — Robot

Home Appliance — 1050

1040 — Smartphone

1000

Network ( 5G )

XR devive — 1030

Self - Driving Vehicle — 1020

# FIG. 11

# FIG. 12

Source geometry

Source attribute

Scalable encoder ⊗ → complete PCC bitstream

Storage

Transcoding (for low QP)

scalable decoder

Data selection

Source geometry    Source attribute

Partial geometry    Partial attribute

# FIG. 13

EP 4 507 303 A1

# FIG. 14

# FIG. 15

(a) Geo data ┌ ─ ► | G | LoD(0)~LoD(N) |

(b) Attr data └ ─ ─ | A | LoD(0)~LoD(N) |

# FIG. 16

| Geo data | G | LoD0 | G | R1 | G | R2 |
| --- | --- | --- | --- | --- | --- | --- |

| Attr data | A | LoD0 | A | R1 | A | R2 |
| --- | --- | --- | --- | --- | --- | --- |

←—LoD 0—→

←————LoD 1————→

←——————LoD 2——————→

FIG. 17

EP 4 507 303 A1

# FIG. 18

| G | LoD0 | A | LoD0 | G | R1 | A | R1 | G | R2 | A | R2 |

# FIG. 19

(a) bitstream | G | LoD0 | A | LoD0 | G | R1 | A | R1

(b) discarded | G | R2 | A | R2

0 (root)
1
2
3
4
5
6
7 (leaf)

LOD 0
LOD 1

(c)

# FIG. 20

(a) bitstream | G | LoD0 | A | LoD0 | G | R1 | A | R1 | G | R2

(b) discarded | A | R2

0 (root)
1
2
3
4
5
6
7 (leaf)

LOD 0
LOD 1

(c)

# FIG. 21

(a)

(b)

(c)

41002

41003

41001 41002 41003 41004 41005

41000

41004

41005

Slices :

Slices :

Slice :

EP 4 507 303 A1

# FIG. 22

Geometry coding layer structure(encoder)

0 (root)
1
2
3
4
5
6
7 (leaf)

group 1

group 2

group 3

| Slice1 (group 1) | Slice2 (group 2) | Slice3 (group 3) |
|---|---|---|

(a)

Geometry coding layer structure(decoder)

0 (root)
1
2
3
4
5
6
7 (leaf)

group 1

group 2

| Slice1 | Slice2 | Slice3 |
|---|---|---|

(b)

# FIG. 23

# FIG. 24

|           (a)           |              (b)              |                (c)                |
| High-level view (coarse detail) | Mid-level view (medium level detail) | Low-level view (fine-grained detail) |

EP 4 507 303 A1

## FIG. 25

EP 4 507 303 A1

# FIG. 26

# FIG. 27

# FIG. 28

48030

FIG. 29

LoD N

(a)

LoD N-1

(b)

LoD N-2

(c)

EP 4 507 303 A1

# FIG. 30

51002 — Signaling processor

51001 — Data input unit (Geometry,attribute, parameters)

51003 — Positions — Geometry encoder

geometry bitstream

Reconstructed geometry

Transmission processor — bitstream

51005

attributes — Attribute encoder — attribute bitstream

51004

# FIG. 31

```
┌──────────────┐      ┌──────────────┐      ┌──────────────┐
│     LoD      │      │Geometry grid │      │   Nearest    │
│ sub-sampling │─────▶│  adaptation  │─────▶│   neighbor   │─────▶
│              │      │              │      │    search    │
└──────────────┘      └──────────────┘      └──────────────┘
      55001                 55003                 55005
```

# FIG. 32

EP 4 507 303 A1

EP 4 507 303 A1

# FIG. 33

slice 0

slice n

| SPS | GPS | APS$_0$ | APS$_1$ | TPS | Geom$_0^0$ | Attr$_0^0$ | Attr$_1^0$ | $\cdots$ | Geom$_0^n$ | Attr$_0^n$ | Attr$_1^n$ |

| Geom_slice_header | Geom_slice_data |

| Attr_slice_header | Attr_slice_data |

# FIG. 34a

| seq_parameter_set( ) { | Descriptor |
|---|---|
| simple_profile_compatibility_flag | u(1) |
| dense_profile_compatibility_flag | u(1) |
| predictive_profile_compatibility_flag | u(1) |
| main_profile_compatibility_flag | u(1) |
| reserved_profile_compatibility_18bits | u(18) |
| slice_reordering_constraint_flag | u(1) |
| unique_point_positions_constraint_flag | u(1) |
| level_idc | u(8) |
| sps_seq_parameter_set_id | u(4) |
| frame_ctr_lsb_bits | u(5) |
| slice_tag_bits | u(5) |
| seq_origin_bits | ue(v) |
| if( seq_origin_bits ) { | |
| for( k = 0; k < 3; k++ ) | |
| seq_origin_xyz[ k ] | s(v) |
| seq_origin_log2_scale | ue(v) |
| } | |
| seq_bounding_box_size_bits | ue(v) |
| if( seq_bounding_box_size_bits ) { | |
| for( k = 0; k < 3; k++ ) | |
| seq_bounding_box_size_minus1_xyz[ k ] | u(v) |
| } | |
| seq_unit_numerator_minus1 | ue(v) |
| seq_unit_denominator_minus1 | ue(v) |
| seq_unit_in_metres_flag | u(1) |
| seq_global_scale_factor_log2 | ue(v) |
| seq_global_scale_refinement_num_bits | ue(v) |
| seq_global_scale_factor_refinement_factor | u(v) |
| sps_num_attribute_sets | ue(v) |
| for( attrId = 0; attrId < sps_num_attribute_sets; attrId++ ) { | |
| attribute_dimension_minus1[ attrId ] | ue(v) |
| attribute_instance_id[ attrId ] | ue(v) |
| attribute_bitdepth_minus1[ attrId ] | ue(v) |
| known_attribute_label_flag[ attrId ] | u(1) |
| if( known_attribute_label_flag[ attrId ] ) | |
| known_attribute_label[ attrId ] | ue(v) |
| else | |
| attribute_label_oid[ attrId ] | oid(v) |

# FIG. 34b

| | |
|---|---|
| num_attribute_parameters | ue(v) |
| byte_alignment( ) | |
| for( j = 0; j < num_attribute_parameters; j++ ) | |
| attribute_parameters( attrId ) | |
| } | |
| axis_coding_order | u(3) |
| bypass_stream_enabled_flag | u(1) |
| entropy_continuation_enabled_flag | u(1) |
| sps_extension_flag | u(1) |
| if( sps_extension_flag ) { | |
| layer_group_enabled_flag | u(1) |
| if(layer_group_enabled_flag) { | |
| num_layer_groups_minus1 | u(8) |
| for(i=0; i<=num_layer_groups_minus1; i++) { | |
| layer_group_id[i] | u(8) |
| num_layers_minus1[i] | u(8) |
| subgroup_enabled_flag[i] | u(1) |
| } | |
| if(subgroup_enabled_flags( ) ) { | |
| subgroup_bbox_origin_bits_minus1 | ue(v) |
| subgroup_bbox_size_bits_minus1 | ue(v) |
| } | |
| max_geometry_level_log2 | u(8) |
| root_bbox_origin_x | u(8) |
| root_bbox_origin_y | u(8) |
| root_bbox_origin_z | u(8) |
| root_bbox_size_x | u(8) |
| root_bbox_size_y | u(8) |
| root_bbox_size_z | u(8) |
| } | |
| while( more_data_in_data_unit( ) ) | |
| sps_extension_data_flag | u(1) |
| } | |
| byte_alignment( ) | |
| } | |

# FIG. 35a

| attribute_parameter_set( ) { | Descriptor |
|---|---|
| aps_attr_parameter_set_id | u(4) |
| aps_seq_parameter_set_id | u(4) |
| attr_coding_type | ue(v) |
| attr_primary_qp_minus4 | ue(v) |
| attr_secondary_qp_offset | se(v) |
| attr_qp_offsets_present | u(1) |
| if( attr_coding_type == 0 ) { | |
| raht_prediction_enabled | u(1) |
| if( raht_prediction_enabled ) { | |
| raht_prediction_subtree_min | ue(v) |
| raht_prediction_samples_min | ue(v) |
| } | |
| } else if( attr_coding_type ≤ 2 ) { | |
| pred_set_size_minus1 | ue(v) |
| pred_inter_lod_search_range | ue(v) |
| for( k = 0; k < 3; k++ ) | |
| pred_dist_bias_minus1_xyz[ k ] | ue(v) |
| if ( attr_coding_type == 2 ) | |
| last_comp_pred_enabled | u(1) |
| lod_scalability_enabled | u(1) |
| if( lod_scalability_enabled ) { | |
| pred_max_range_minus1 | ue(v) |
| max_geometry_level_log2 | u(8) |
| root_bbox_origin_x | u(8) |
| root_bbox_origin_y | u(8) |
| root_bbox_origin_z | u(8) |
| root_bbox_size_x | u(8) |
| root_bbox_size_y | u(8) |
| root_bbox_size_z | u(8) |
| } | |
| else { | |
| lod_max_levels_minus1 | ue(v) |
| if( ¬lod_max_levels_minus1 ) | |
| attr_canonical_order_enabled | u(1) |
| else { | |

# FIG. 35b

| | |
|---|---|
| lod_decimation_mode | ue(v) |
| if( lod_decimation_mode > 0 ) | |
|     for( lvl = 0; lvl < lod_max_levels_minus1; lvl++ ) | |
|         lod_sampling_period_minus2[ lvl ] | ue(v) |
|     lod_initial_dist_log2 | ue(v) |
|     lod_dist_log2_offset_present | u(1) |
|     } | |
|   } | |
| if( attr_coding_type == 1 ) { | |
|     pred_direct_max_idx | ue(v) |
|     if( pred_direct_max_idx ) { | |
|         pred_direct_threshold | u(8) |
|         pred_direct_avg_disabled | u(1) |
|     } | |
|     pred_intra_lod_search_range | ue(v) |
|     if( pred_intra_lod_search_range ) | |
|         pred_intra_min_lod | ue(v) |
|     inter_comp_pred_enabled | u(1) |
|     pred_blending_enabled | u(1) |
|   } | |
| } else if( attr_coding_type == 3 ) | |
|   raw_attr_width_present | u(1) |
| if( ¬lod_scalability_enabled ) | |
|   attr_coord_conv_enabled | u(1) |
| if( attr_coord_conv_enabled ) | |
|   for( k = 0; k < 3; k++ ) { | |
|     attr_coord_conv_scale_bits_minus1[ k ] | u(5) |
|     attr_coord_conv_scale[ k ] | u(v) |
|   } | |
| aps_extension_present | u(1) |
| if( aps_extension_present ) | |
|   while( more_data_in_data_unit( ) ) | |
|     aps_extension_data | u(1) |
| byte_alignment( ) | |
| } | |

FIG. 36

# FIG. 37

FIG. 38

# FIG. 39

| Encode geometry of point cloud data | ⟋71001 |

↓

| Encode attribute of point cloud data based on geometry | ⟋71002 |

↓

| Transmit bitstream including encoded geometry, encoded attribute and signaling information | ⟋71003 |

# FIG. 40

Receive bitstream including encoded geometry, encoded attribute and signaling information ~ 81001

Decode geometry based on signaling information ~ 81002

Decode attribute based on geometry and signaling information ~ 81003

Render point cloud data reconstructed based on decoded geometry and decoded attribute ~ 81004

## INTERNATIONAL SEARCH REPORT

| International application No. |
|---|
| **PCT/KR2023/004480** |

**A.    CLASSIFICATION OF SUBJECT MATTER**

**H04N 19/30**(2014.01)i; **H04N 19/597**(2014.01)i; **H04N 19/96**(2014.01)i; **H04N 19/147**(2014.01)i; **H04N 19/184**(2014.01)i

According to International Patent Classification (IPC) or to both national classification and IPC

**B.    FIELDS SEARCHED**

Minimum documentation searched (classification system followed by classification symbols)

H04N 19/30(2014.01); G06T 9/00(2006.01); H04N 19/103(2014.01); H04N 19/115(2014.01); H04N 19/124(2014.01); H04N 19/136(2014.01); H04N 19/176(2014.01); H04N 19/597(2014.01); H04N 19/60(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 부호화(encoding), 포인트 클라우드(point cloud), 지오메트리(geometry), 어트리뷰트(attribute), 시그널링(signaling), 레벨 오브 디테일(level of detail, LOD)

**C.    DOCUMENTS CONSIDERED TO BE RELEVANT**

| Category* | Citation of document, with indication, where appropriate, of the relevant passages | Relevant to claim No. |
|---|---|---|
| X | WO 2021-049762 A1 (LG ELECTRONICS INC.) 18 March 2021 (2021-03-18) See paragraphs [0071]-[0072], [0086], [0088], [0099], [0133], [0136], [0187] and [0383]; claim 1; and figures 1-8. | 1,8 |
| Y | | 2-7,9-14 |
| Y | WO 2020-123469 A1 (FUTUREWEI TECHNOLOGIES, INC.) 18 June 2020 (2020-06-18) See paragraphs [0051], [0055] and [0093]-[0094]; claims 1-7; and figure 5. | 2-7,9-14 |
| X | KR 10-2022-0027882 A (GUANGDONG OPPO MOBILE TELECOMMUNICATIONS CORP., LTD.) 08 March 2022 (2022-03-08) See paragraphs [0041]-[0043], [0081] and [0248]; and figures 1-2. | 1,8 |
| X | KR 10-2021-0144880 A (TENCENT AMERICA LLC) 30 November 2021 (2021-11-30) See paragraphs [0021] and [0070]-[0072]. | 1,8 |

✓ Further documents are listed in the continuation of Box C.    ✓ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 July 2023** | **13 July 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/004480**

| C. | DOCUMENTS CONSIDERED TO BE RELEVANT | | |
|---|---|---|
| Category* | Citation of document, with indication, where appropriate, of the relevant passages | Relevant to claim No. |
| X | KR 10-2021-0114046 A (SONY GROUP CORPORATION) 17 September 2021 (2021-09-17)<br>See paragraphs [0013]-[0014] and [0017]; and figure 1. | 1,8 |

**INTERNATIONAL SEARCH REPORT**
Information on patent family members

International application No.

**PCT/KR2023/004480**

| Patent document cited in search report | | | Publication date (day/month/year) | Patent family member(s) | | | Publication date (day/month/year) |
|---|---|---|---|---|---|---|---|
| WO | 2021-049762 | A1 | 18 March 2021 | US | 2022-0327744 | A1 | 13 October 2022 |
| WO | 2020-123469 | A1 | 18 June 2020 | | None | | |
| KR | 10-2022-0027882 | A | 08 March 2022 | CN | 113875254 | A | 31 December 2021 |
| | | | | CN | 114363634 | A | 15 April 2022 |
| | | | | EP | 3993424 | A1 | 04 May 2022 |
| | | | | JP | 2022-540569 | A | 16 September 2022 |
| | | | | US | 11412259 | B2 | 09 August 2022 |
| | | | | US | 2022-0329858 | A1 | 13 October 2022 |
| | | | | WO | 2021-000205 | A1 | 07 January 2021 |
| KR | 10-2021-0144880 | A | 30 November 2021 | CN | 113796014 | A | 14 December 2021 |
| | | | | EP | 4128540 | A1 | 08 February 2023 |
| | | | | JP | 2022-530765 | A | 01 July 2022 |
| | | | | US | 11317117 | B2 | 26 April 2022 |
| | | | | US | 2022-0210472 | A1 | 30 June 2022 |
| | | | | WO | 2021-202003 | A1 | 07 October 2021 |
| KR | 10-2021-0114046 | A | 17 September 2021 | CN | 113615200 | A | 05 November 2021 |
| | | | | EP | 3922032 | A1 | 15 December 2021 |
| | | | | JP | 2022-522729 | A | 20 April 2022 |
| | | | | US | 11076152 | B2 | 27 July 2021 |
| | | | | US | 2020-0304792 | A1 | 24 September 2020 |
| | | | | WO | 2020-188401 | A1 | 24 September 2020 |

Form PCT/ISA/210 (patent family annex) (July 2022)